(19) Europäisches Patentamt
European Patent Office
Office européen des brevets

(11) EP 2 719 712 A1

(12) # EUROPEAN PATENT APPLICATION

(43) Date of publication:
**16.04.2014 Bulletin 2014/16**

(21) Application number: **13188351.4**

(22) Date of filing: **11.10.2013**

(51) Int Cl.:
***C08F 220/06*** *(2006.01)* ***C08F 220/34*** *(2006.01)*
***C08F 226/04*** *(2006.01)*

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: **11.10.2012 US 201261712666 P**
**25.09.2013 US 201314037300**

(71) Applicant: **Samsung SDI Co., Ltd.**
**Yongin-si, Gyeonggi-do (KR)**

(72) Inventors:
- **Lee, Beom-Wook**
**Gyeonggi-do (KR)**
- **Chang, Bum-Jin**
**Gyeonggi-do (KR)**
- **Jeong, Hye-Sun**
**Gyeonggi-do (KR)**
- **Park, Sam-Jin**
**Gyeonggi-do (KR)**
- **Lee, Kwan-Ku**
**429-861 Gyeonggi-do (KR)**

(74) Representative: **Mounteney, Simon James**
**Marks & Clerk LLP**
**90 Long Acre**
**London**
**WC2E 9RA (GB)**

(54) **Polymer, electrode for lithium secondary battery including the polymer, and lithium second battery employing the electrode**

(57) A polymer including a first repeating unit having a cationic group and a second repeating unit having an anionic group, an electrode for a lithium secondary battery including the polymer, and a lithium secondary battery employing the electrode.

EP 2 719 712 A1

## Description

[Technical Field of the Invention]

The present invention relates to a polymer, an electrode for a lithium secondary battery including the polymer, and a lithium secondary battery employing the electrode.

[Related Art prior to the Invention]

Lithium secondary batteries have high voltage and high energy and thus, are used in various applications. For example, electric vehicles (hybrid electric vehicle (HEV) or plug-in hybrid electric vehicle (PHEV)) need to operate at high temperature, to be charged or discharged with a great amount of electricity, and to be used for a long period of time. Accordingly, electric vehicles require lithium secondary batteries with excellent discharge capacity and lifespan characteristics.

To improve the capacity and lifespan of lithium secondary batteries, in addition to positive electrode and negative electrode materials, a binder, which constitutes a lithium secondary battery, is also actively studied.

As a binder for a negative electrode of a lithium secondary battery, a mixture of sodium carboxymethyl cellulose (Na-CMC) and aqueous dispersion styrene-butadiene rubber (SBR) is used. Na-CMC maintains dispersibility of an active material and stability of slurry, and the aqueous dispersion (SBR) improves flexibility of an electrode plate and a binding force of an active material layer with respect to a substrate, and accordingly, use of these materials is necessary. However, SBR is a non-conductor and does not have electrical conductivity, and thus, acts as a resistor in a battery, thereby adversely affecting the lifespan of a battery. Accordingly, there is a need to overcome such problems.

[Content of the Invention]

[Technical Goal of the Invention]

The present invention provides a polymer, an electrode for a lithium secondary battery including the polymer, and a lithium secondary battery employing the electrode.

[Structure and Operation of the Invention]

An aspect of the present invention provides a polymer including a first repeating unit having a cationic group and a second repeating unit having an anionic group, wherein the cationic group and the anionic group of the polymer form an intermolecular ionic bond with an anionic group and a cationic group of another polymer, respectively

Another aspect of the present invention provides an electrode binder composition including the polymer and an electrode for a lithium secondary battery including the binder.

Another aspect of the present invention provides a lithium secondary battery including the electrode.

[Effect of the Invention]

When a novel polymer according to an embodiment of the present invention is used as an ion conductive binder of an electrode for lithium secondary battery a formed battery may have lower inner resistance, and thus, a lithium secondary battery, with high capacitance retention ratio, that is, an increased lifespan, can be manufactured.

[Brief Description of the Drawings]

FIG. 1 is a schematic view of a lithium secondary battery according to an embodiment of the present invention, and
FIG. 2 is a nuclear magnetic resonance spectrum of a polymer prepared according to Preparation Example 5.

[Detailed Description of the Invention]

Hereinafter, a polymer, and a method of preparing the same, and an electrode including the polymer, and a lithium secondary battery including the electrode, according to embodiments of the present invention, are described in detail.

A polymer according to an embodiment of the present invention includes a first repeating unit having a cationic

group and a second repeating unit having an anionic group, wherein the first repeating unit and the second repeating unit have an ionic bond.

In an embodiment of the present invention, the term "an ionic bond of the first repeating unit and the second repeating unit" refers to, for example, a case in which a cationic group (or anionic group) of a polymer forms an intramolecular ionic bond with an anionic group (or cationic group) of the polymer or a cationic group (or anionic group) of a polymer forms an intermolecular ionic bond with an anionic group (or cationic group) of a different polymer.

The polymer is an amphoteric compound that has a cationic group and an anionic group in its molecular structure. In an embodiment of the present invention a first repeating unit having the cationic group and a second repeating unit having the anionic group may each be located in a back bone or side chain of the polymer, and in view of use of synthesis and function, the first and second repeating units may be located in the side chain of the polymer.

In an embodiment of the present invention the first repeating unit having the cationic group may include, as a counter ion of the cationic group, an anionic group that is included in the same molecule or a different molecule.

In an embodiment of the present invention the second repeating unit having the anionic group may include, as a counter ion of the anionic group, a cationic group that is included in the same molecule or a different molecule.

The polymer having the cationic group and the anionic group which forms an intermolecular ionic bond may be prepared as follows: a monomer having a cationic group and a monomer having an anionic group are polymerized to form a polymer, and then, corresponding counter ions of the cationic group and the anionic group existing in the polymer are removed, thereby forming an ionic bond of the cationic group and the anionic group in the polymer. This process is described below in detail.

The monomer having a cationic group may be represented by Chemical structure A below, and the monomer having an anionic group may be represented by Chemical structure B below. Chemical structures A to D and 1 to 11 are schematic representations of embodiments of the present invention, and are not to be taken as limiting representations of the polymers of the present invention.

[Chemical structure A]

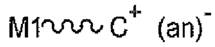

wherein in Chemical structure A, M1 refers to a back bone, ~~~~ refers to a bond between M1 back bone and $C^+$, $C^+$ refers to a cationic group, and $(an)^-$ refers to a counter ion; and

[Chemical structure B]

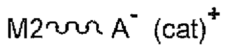

wherein in Chemical structure B, M2 refers to a back bone, ~~~~ refers to a bond between M2 back bone and $A^-$, $A^-$ refers to an anionic group, and $(cat)^+$ refers to a counter ion.

The monomer having a cationic group and the monomer having an anionic group may be polymerized to form a polymer represented by Chemical structure C below by using a conventionally known polymer polymerization method, such as radical polymerization, anionic polymerization, cationic polymerization, or condensation polymerization:

[Chemical structure C]

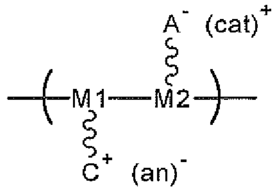

In chemical structure C, M1 and M2 each refer to a back bone, $C^+$ refers to a cationic group, $(an)^-$ refers to a counter ion of the cationic group, $A^-$refers to an anionic group, and $(cat)^+$ refers to a counter ion of the anionic group.

The counter ions, that is, $(an)^-$ and $(cat)^+$ are removed from the polymer of chemical structure C in the form of (an)(cat), thereby preparing a polymer represented by chemical structure D(a), D(b), or D(c).

[Chemical structure D]

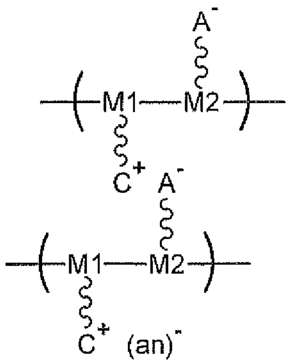
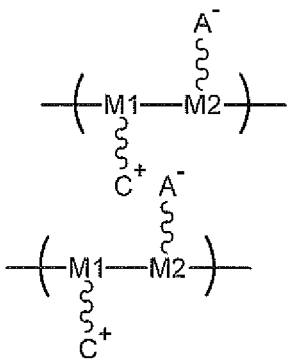
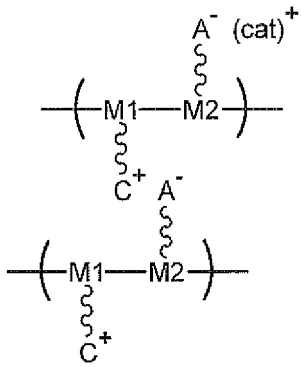

(a) (b) (c)

In chemical structure D, M1 and M2 each refer to a back bone, $C^+$ refers to a cationic group, $(an)^-$ refers to a counter ion of the cationic group, $A^-$refers to an anionic group, and $(cat)^+$ refers to a counter ion of the anionic group.

In Chemical structure D, (a) refers to a case in which a mole fraction of the cationic group to the anionic group in the polymer is relatively high, (b) refers to a case in which a mole fraction of the cationic group to the anionic group in the polymer is 1, and (c) refers to a case in which a mole fraction of the anionic group to the cationic group is relatively high.

Chemical structures D(a), D(b), and D(c) show various intermolecular ionic bonds, and if the chemical structure are shown in a single polymer, the polymer may be represented by chemical structure E(a), E(b), and E(c). That is, chemical structure D(a), D(b), and D(c) respectively correspond to chemical structure E(a), E(b), and E(c), and the corresponding polymers are identical materials.

[Chemical structure E]

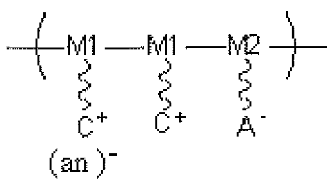
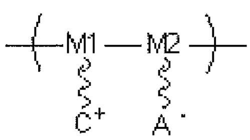
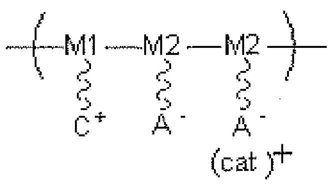

(a) (b) (c)

In an embodiment of the present invention the first repeating unit is represented by Formula 1 or Formula 3:

[Formula 1]

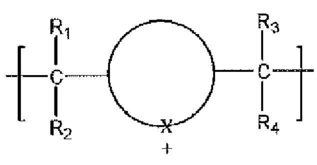
or
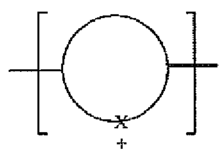

or.

In Formula 1,

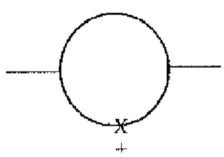

represents a C2-C30 3-membered to 31-membered ring including one or more heteroatom (which includes the heteroatom in X),

X is -N(R')(R"), -S(R'), or -P (R')(R"),

$R_1$ to $R_4$ are each independently hydrogen, a unsubstituted or substituted C1-C30 (preferably C1-C10 or C3-C5) alkyl group, a unsubstituted or substituted C1-C30 (preferably C1-C10 or C3-C5) alkoxy group, a unsubstituted or substituted C6-C30 (preferably C6-C10) aryl group, a unsubstituted or substituted C7-C30 (preferably C8-C11) arylalkyl, a unsubstituted or substituted C6-C30 (preferably C6-C10) aryloxy group, a unsubstituted or substituted C3-C30 (preferably C4-C9) heteroaryl group, a unsubstituted or substituted C3-C30 (preferably C4-C9) heteroaryloxy group, a unsubstituted or substituted C4-C30 (preferably C5-C10) cycloalkyl group, or a unsubstituted or substituted C3-C30 heterocycloalkyl group(preferably C5-C9),

[Formula 3]

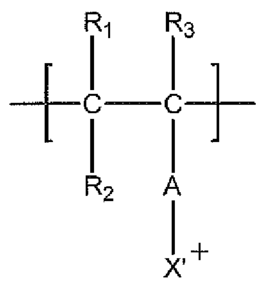

In Formula 3, X' is -N(R')(R")(R'"), -S(R')(R"), -OP(R')(R")(R"'), or -P(R')(R") (R"'),

$R_1$ to $R_3$ are each independently hydrogen, a unsubstituted or substituted C1-C30 (preferably C1-C10 or C3-C5) alkyl group, a unsubstituted or substituted C1-C30 (preferably C1-C10 or C3-C5) alkoxy group, a unsubstituted or substituted C6-C30 (preferably C6-C10) aryl group, unsubstituted or substituted C7-C30 (preferably C8-C11) arylalkyl, a unsubstituted or substituted C6-C30 (preferably C6-C10) aryloxy group, a unsubstituted or substituted C3-C30 (preferably C4-C9) heteroaryl group, a unsubstituted or substituted C3-C30 (preferably C4-C9) heteroaryloxy group, a unsubstituted or substituted C4-C30 (preferably C5-C10) cycloalkyl group, or a unsubstituted or substituted C3-C30 (preferably C4-C9) heterocycloalkyl group, and

A represents a simple chemical bond, or any one selected from C1-C30 (preferably C1-C10 or C3-C5) alkyl, a C6-C30 (preferably C6-C10) aryl, a C7-C30 (preferably C8-C11) arylalkyl, a C1-C30 (preferably C5-C9) heteroaryl, a C4-C30 (preferably C5-C10) cycloalkyl group, and C1-C30 (preferably C4-C9) heterocycloalkyl group, and these groups may include at least one group selected from carbonyl group (-CO-), oxy group (-O-), a carbonyloxy group (-COO- or -OCO-), iminocarbonyl group (-NH-CO- or -CO-NH-), iminosulfonyl group ($-NH-SO_2-$ or $-SO_2-NH-$), sulfanyl group (-S-), sulfinyl group (-S(O)-), sulfonyl group ($-SO_2-$), sulfonyloxy group ($-SO_2-O-$ or $-O-SO_2-$), imino group (-NH-), methylene group repeating unit (-(CH2)n-, n=1 to 20), methyleneoxide repeating unit ($-(CH_2O)_n-$, n=1 to 20), ethyleneoxide repeating unit ($-(CH_2CH_2O)_n-$, n=1 to 20), and propyleneoxide repeating unit ($-(CH(CH_3)CH_2O)_n-$, n=1 to 20), and

R', R" and R'" are each independently a C1-C30 (preferably C1-C10 or C3-C5) alkyl group, a C1-C30 (preferably C1-C10 or C3-C5) alkoxy group, a C6-C30 (preferably C6-C10) aryl group, a C7-C30 (preferably C8-C11) arylalkyl, a C6-C30 (preferably C6-C10) aryloxy group, a C3-C30 (preferably C4-C9) heteroaryl group, a C3-C30 (preferably C4-C9) heteroaryloxy group, a C4-C30 (preferably C5-C10) cycloalkyl group, or a C3-C30 (preferably C4-C9) heterocycloalkyl group.

In an embodiment of the present invention the polymer contains at least one first repeating unit independently selected from Formula 1 or Formula 3, optionally between 1 and 3 further repeating units selected from Formula 1 and/or Formula 3. For example the polymer may contain two repeating units selected from Formula 1 or from Formula 3, or one from Formula 1 and one from Formula 3.

In an embodiment of the present invention the second repeating unit is represented by Formula 4:

[Formula 4]

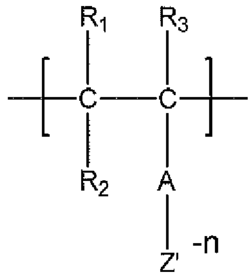

In Formula 4, $R_1$ to $R_3$ and A are the same as defined in Formula 3 above, Z' is a carboxylate group (-C(=O)O), a sulfate group ($-OS(=O)_2O$), a sulfite group (-OS(=O)O), a sulfinate group (-S(=O)O), a phosphate group ($-OP(=O)(O)_2$), or phosphonate group ($-P(=O)(O)_2$), and n is 1 or 2.

In an embodiment of the present invention the polymer contains at least one second repeating unit independently selected from Formula 4, optionally between 1 and 3 further repeating units selected from Formula 4. For example the polymer may contain two repeating units selected from Formula 4.

In an embodiment of the present invention the polymer contains a further repeating unit that is neutral (non-ionic). In an embodiment of the present invention, the further repeating unit is independently represented by Formula 23.

[Formula 23]

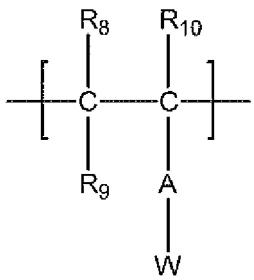

In Formula 23, W is a carboxyl group, a hydroxyl group, an amine group, amide group, an imide group, a nitrile group, a sulfone group, a halogen group, a silane group, or Si(R')(R")(R"'), R', R", and R"' may each be independently C1-C20 alkyl group, C1-C20 alkoxy group or a halogen atom,

A is the same as defined in Formula 3 above, and

$R_8$ to $R_{10}$ are each independently hydrogen, a unsubstituted or substituted C1-C30 (preferably C1-C10 or C3-C5) alkyl group, a unsubstituted or substituted C1-C30 (preferably C1-C10 or C3-C5) alkoxy group, a unsubstituted or substituted C6-C30 (preferably C6-C10) aryl group, a unsubstituted or substituted C7-C30 (preferably C8-C11) arylalkyl, a unsubstituted or substituted C6-C30 (preferably C6-C10) aryloxy group, a unsubstituted or substituted C3-C30 (preferably C4-C9) heteroaryl group, a unsubstituted or substituted C3-C30 (preferably C4-C9) heteroaryloxy group, a unsubstituted or substituted C4-C30 (preferably C5-C10) cycloalkyl group, or a unsubstituted or substituted C3-C30 (preferably C4-C9) heterocycloalkyl group.

In an embodiment of the present invention the polymer contains at least one further repeating unit independently selected from Formula 23, optionally between 1 and 3 further repeating units selected from Formula 23. For example the polymer may contain two repeating units selected from Formula 23.

In an embodiment of the present invention, in Formula 1 A is a C2-C10 heterocyclic ring and X is -N(R')(R"), optionally a C3-C6 heterocyclic ring.

In an embodiment of the present invention, in Formula 3 A and X together form a group selected from a C1-C30 alkyl including a carbonyloxy group (-COO-) group with a terminal -N(R')(R")(R"') and/or -P(R')(R") (R"') group or combinations thereof.

In an embodiment of the present invention, independently in Formulae 1 and 3, at least one of $R_1$ to $R_3$ and $R_4$ when present is hydrogen or a C1 to C10 alkyl group, preferably at least two of $R_1$ to $R_3$ and $R_4$ is hydrogen or a C1 to C10 alkyl group, preferably all of $R_1$ to $R_3$ and $R_4$ is hydrogen or a C1 to C10 alkyl group, most preferably hydrogen.

In an embodiment of the present invention, at least one of $R_5$ to $R_7$ is hydrogen or a C1 to C10 alkyl group, preferably at least two of $R_5$ to $R_7$ is hydrogen or a C1 to C10 alkyl group, preferably all of $R_5$ to $R_7$ is hydrogen or a C1 to C10 alkyl group, most preferably hydrogen.

In an embodiment of the present invention, in Formula 23, at least one of $R_8$ to $R_{10}$ is hydrogen or a C1 to C10 alkyl group, preferably at least two of $R_8$ to $R_{10}$ is hydrogen or a C1 to C10 alkyl group, preferably all of $R_8$ to $R_{10}$ is hydrogen or a C1 to C10 alkyl group, most preferably hydrogen. In an embodiment of the present invention, in Formula 23 A and W together form a group selected from a hydroxyl group a C1-C30 (preferably C1-C10 or C3-C5) alkyl including a carbonyloxy group (-COO-) group with a terminal hydroxyl group.

In an embodiment of the present invention, in Formula 4 A and Z'-n together form a group selected from a carboxylate and/or a C1-C30 (preferably C1-C10 or C3-C5) alkyl including a carbonyloxy group (-COO-) group with a terminal phosphonate group.

In an embodiment of the present invention, R', R" and R"' are each independently a C1-C30 alkyl group, preferably a C1-C5 alkyl group, preferably each of R', R" and R"' where present is a methyl group.

Examples of the monomer having a cationic group are acryloyl oxyethyl trimethylammonium chloride, acryloyl oxyethyl triphosphonium chloride, and diallyldimethyl ammonium chloride.

Examples of the monomer having an anionic group are sodium acrylate, and sodium ethyleneglycol acrylate phosphate.

In addition to the monomer having a cationic group and the monomer having an anionic group, a non-ionic monomer may be further used. Examples of a non-ionic monomer are vinyl acetate, and 2-hydroxyethyl acrylate.

Examples of the cationic group of the first repeating unit are an ammonium group, a sulfonium group, and a phosphonium group. In embodiments of the present invention, the cationic repeating unit contains $-N(C1\text{-}C5)_3^+$, $-S(C1\text{-}C5)_2^+$ or $-P(C1\text{-}C5)_3^+$ or mixtures thereof, preferably $-N(Me)_3^+$, $-S(Me)_2^+$ or $-P(Me)_3^+$ or mixtures thereof.

Examples of the anionic group of the second repeating unit are a carboxylate group, a sulfate group, a sulfite group, a sulfinate group, a phosphate group, and a phosphonate group.

The polymer may be a saturated hydrocarbon, an unsaturated hydrocarbon, or an aromatic compound.

In an embodiment of the present invention, where the cationic repeating unit has an anion counter ion $((an)^-)$, the counter ion may be, for example, a counter ion of an ammonium ion, and the anion may be an anionic group of a well-known organic or inorganic acid. The anion of an organic acid may be an anion of a C1-C18 monoacid or polyacid. Examples of the anion are HCOO- of a formic acid, $CH_3COO^-$ of an acetic acid, $CF_3COO^-$ of a trifluoroacetic acid, $CH_3CH_2COO^-$ of a propionic acid, $COO^{2-}$ of an oxalic acid, $HOC(CH_2COO\text{-})_2COO^-$ of a citric acid, and $CH_3(CH_2)_{16}COO^-$ of a stearic acid having 18 carbon atoms.

Examples of the anion of an inorganic acid are $CO_3^{-2}$ or $HCO_3^-$ of carbonic acid, $Cl^-$ of hydrochloric acid, Br- of bromic acid, $I^-$ of iodic acid, $SO_4^{-2}$ or $HSO_4^-$ of sulfuric acid, $NO_3^-$ of nitric acid, $PO_4^{-3}$ , $HPO_3^{-2}$ or $H_2PO_3^-$ of phosphoric acid, $SO_3^{-2}$ or $HSO_3^-$ of sulfurous acid, $NO_2^-$ of nitrous acid, $P_2O_7^{-4}$ of phyrophosphoric acid, an anion of Lewis acid, such as $BX_4^-$(X is a halogen atom) of Lewis acid, $AlX_4^-$(X is a halogen atom), or $PX_6^-$(X is a halogen atom), $AsX^-$(X is a halogen atom), ClO-, and a composite form of an organic and inorganic acid, or an anion of an acid, such as $CH_3SO_3^-$, $CF_3SO_3^-$, $CH_3CH_2SO_3^-$, or $N(CF_3SO_3)_2^-$.

In an embodiment of the present invention, the cationic group is a quaternary ammonium group, and may be represented by chemical structure 1(a), or chemical structure 1 (b) which shows a cyclic ammonium group.

[Chemical structure 1]

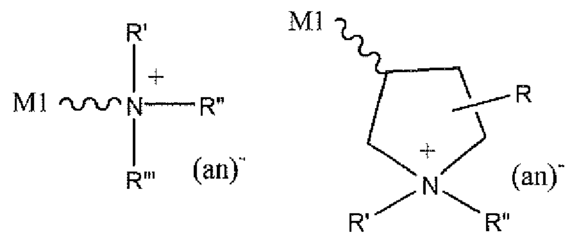

(a) (b)

In Chemical structure 1, M1 and ~~~~ are the same as defined in chemical structure A above, and R', R", and R"' may each be independently hydrogen, C1-C30 (preferably C1-C10 or C3-C5) alkyl, C6-C30 (preferably C6-C10) aryl, C7-C30 (preferably C8-C11) arylalkyl, C1-C30 (preferably C5-C9) heteroaryl, C4-C30 (preferably C5-C10) cycloalkyl group, or a C1-C30 (preferably C5-C9) heterocycloalkyl group, and these groups may also have at least one group selected from a carbonyl group (-CO-), an oxy group (-O-), a carbonyloxy group (-COO- or $-OCO^-$), an iminocarbonyl group (-NH-CO- or $-CO^-NH$-), an iminosulfonyl group (-NH-$SO^{2}$- or -$SO_2$-NH-), a sulfanyl group (-S-), a sulfinyl group (-S(O)-), a sulfonyl group (-$SO_2$-), a sulfonyloxy group (-$SO_2$-O- or -O-$SO_2$-), and an imino group (-NH-), and

R is a mono-substituted or polysubstituted substituent, and may be hydrogen, a halogen atom, a hydroxy group, a cyano group, a C1-C30 (preferably C1-C10 or C3-C5) alkyl group, a C1-C30 (preferably C1-C10 or C3-C5) alkoxy group, a C6-C30 (preferably C6-C10) aryl group, a C7-C30 (preferably C8-C11) arylalkyl, a C6-C30 (preferably C6-C10) aryloxy group, a C3-C30 (preferably C4-C9) heteroaryl group, a C3-C30 (preferably C4-C9) heteroaryloxy group, a C4-C30 (preferably C5-C10) cycloalkyl group, or a C3-C30 (preferably C5-C9)heterocycloalkyl group.

In an embodiment of the present invention, the ammonium group of Chemical structure 1(b) is an a heterocycloalkyl group, or a heteroaryl ring. An example of the ammonium group of Chemical structure 1(b) is a pyridine derivative represented by Chemical structure 2.

[Chemical structure 2]

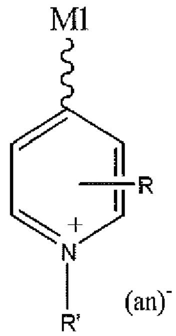

In Chemical structure 2, M1, ~~~~, R', R, and (an)$^-$ are the same as defined in Chemical structure 1 above.

In an embodiment of the present invention, the ammonium group of Chemical structure 1 (b) may also be represented by Chemical structure 3 below:

[Chemical structure 3]

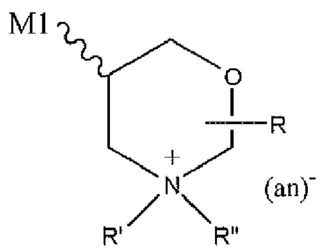

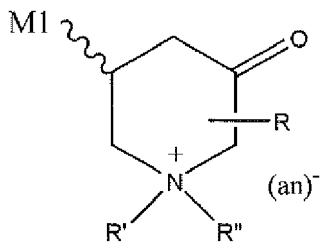

,

In Chemical structure 3, M1, ~~~~, R', R", R, and (an)$^-$ are the same as defined in Chemical structure 1 above, and

In an embodiment of the present invention, the sulfonium group as the cationic group is a tertiary sulfonium group represented by Chemical structure 4 below:

[Chemical structure 4]

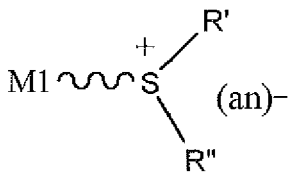

(a)

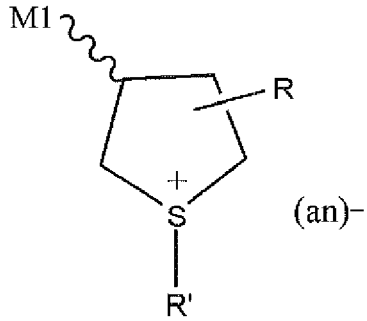

(b)

In Chemical structure 4, M1, ~~~~, R', R", R, and (an)- are the same as defined in Chemical structure 1 above.

In an embodiment of the present invention, in addition, the sulfonium group of Chemical structure 4(b) may also be a heterocycloalkyl group, or a heteroaryl ring.

In an embodiment of the present invention, the phosphonium group as the cationic group is a quaternary phosphonium group represented by Chemical structure 5 below.

[Chemical structure 5]

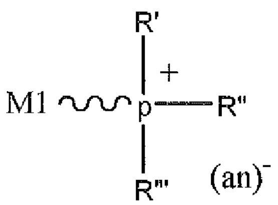

(a)

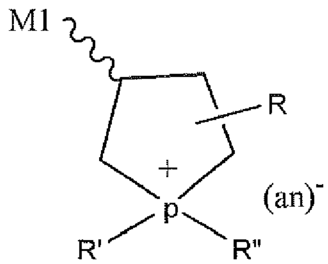

(b)

In Chemical structure 5, M1, ~~~~, R', R", R, and (an)- are the same as defined in Chemical structure 1 above.

In an embodiment of the present invention, in addition, the phosphonium group of Chemical structure 5(b) may also be a heterocycloalkyl group, or a heteroaryl ring.

When the polymer is synthesized, only one of the cationic groups represented by Chemical structure 1 to 5 may be used as the monomer having the cationic groups. However, in some embodiments, two or more of these may be used together.

In an embodiment of the present invention, where the anionic repeating unit has a cation counter ion ($(cat)^+$) examples are as follows: an alkali metal ion, such as a lithium ion ($Li^+$), a sodium ion ($Na^+$), or a potassium ion ($K^+$); an alkali earth metal, such as a magnesium ion ($Mg^{2+}$) or a calcium ion ($Ca^{2+}$); a transition metal ion, such as $Zn^{2+}$; post-transition metal ion, such as $Al^{3+}$; and secondary, tertiary, and quaternary ammonium ions formed by hydrogenation or alkylation of primary amine, secondary amine, and tertiary amine, such as ammonium hydroxide, methylamine, dimethylamine, trimethylamine, ethylamine, diethylamine, triethylamine, propylamine, dipropylamine, butylamine, pentylamine, hexylamine, cyclohexylamine, monomethanolamine, dimethanolamine, trimethanolamine, monoethanolamine, diethanolamine, or triethanolamine.

In an embodiment of the present invention, a carboxylate group used as the anionic group of the second repeating unit having an anionic group may be represented by Chemical structure 6 below.

[Chemical structure 6]

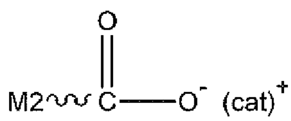

In Chemical structure 6, M2 and ~~~~ are the same as defined in Chemical structure B above, $(cat)^+$ refers to a counter ion of a carboxylate group.

A sulfate group used as the anionic group of the polymer may be represented by Chemical structure 6 below.

[Chemical structure 7]

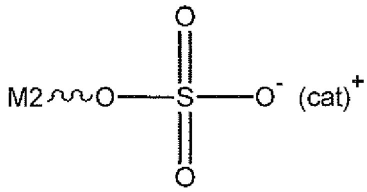

In Chemical structure 7, M2, ~~~~, and $(cat)^+$ are the same as defined in Chemical structure 6 above.

A sulfite group used as the anionic group of the polymer may be represented by Chemical structure 8 below.

[Chemical structure 8]

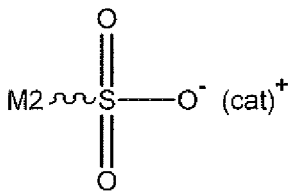

In Chemical structure 8, M2, ~~~~, and $(cat)^+$ are the same as defined in Chemical structure 6 above.

A sulfinate group used as the anionic group of the polymer may be represented by Chemical structure 9 below.

[Chemical structure 9]

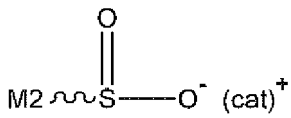

In Chemical structure 9, M2, ~~~~, and $(cat)^+$ are the same as defined in Chemical structure 6 above.

A phosphate group used as the anionic group of the polymer may be represented by chemical structure 10 below.

[Chemical structure 10]

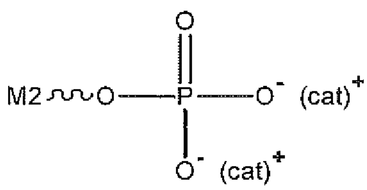

In chemical structure 10, M2, ~~~~, and $(cat)^+$ are the same as defined in Chemical structure 6 above.

A phosphonate group used as the anionic group of the polymer may be represented by chemical structure 11 below.

[Chemical structure 11]

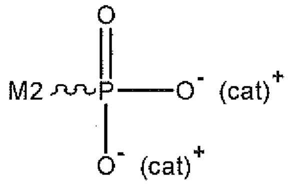

In chemical structure 11, M2, ~~~~, and (cat)+ are the same as defined in Chemical structure 6 above.

When the polymer is synthesized, only one of the anionic groups represented by chemical structures 6 to 11 may be used as the monomer having the anionic groups. However, in some embodiments, two or more of these may be used together.

A mixed molar ratio of the first repeating unit having a cationic group to the second repeating unit having an anionic group of the polymer may be in a range of 5:95 to 95:5, and for example, 10:90 to 90:10, 20:80 to 80:20, 40:60 to 60:40 and 50:50.

In an embodiment of the present invention, the first repeating unit having a cationic group of the polymer may be, for example, a first repeating unit represented by Formula 1.

In Formula 1, as a counter ion, (an)- is not shown. That is because the counter ion is an anion of a different molecule (or the same molecule):

In embodiments of the present invention, A in Formula 1 is, for example, selected from a cycloalkyl group, an aryl ring, or a heteroaryl ring, and may be selected from groups represented by Formula 2 below.

[Formula 2]

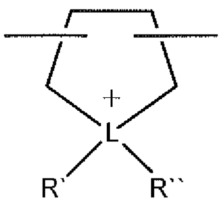
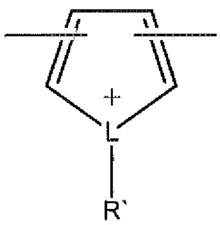
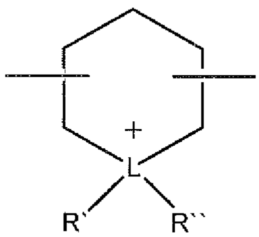
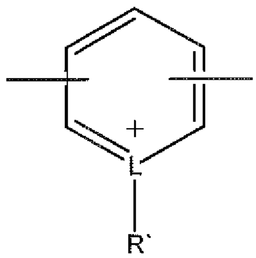

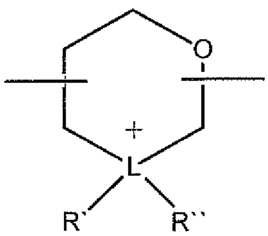
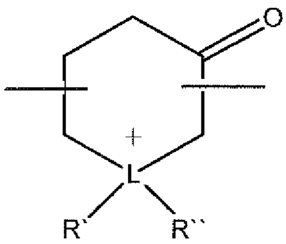

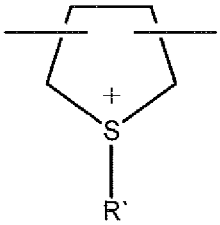
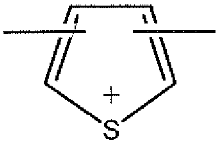
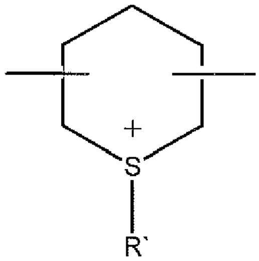
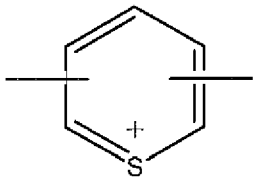

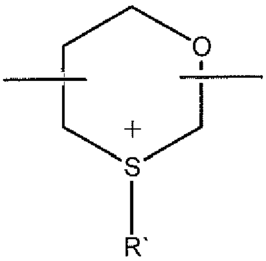
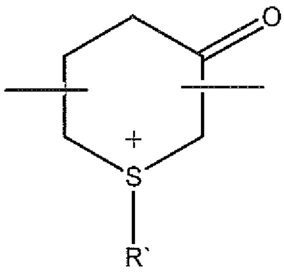

In Formula 2, L is N or P, and R' and R" are each independently a C1-C30 (preferably C1-C10 or C3-C5) alkyl group, C1-C30 (preferably C1-C10 or C3-C5) alkoxy group, C6-C30 (preferably C6-C10) aryl group, C7-C30 (preferably C8-C11) arylalkyl, C6-C30 (preferably C6-C10) aryloxy group, C3-C30 (preferably C4-C9) heteroaryl group, C3-C30 (preferably C4-C9) heteroaryloxy group, C4-C30 (preferably C5-C10) cycloalkyl group, or a C3-C30 (preferably C4-C9) heterocycloalkyl group

The rings represented by Formula 2 do not have substituents. However, in an embodiment of the present invention, the rings may further have a mono-substituted or polysubstituted substituent.

Examples of such substituents are a halogen atom, a hydroxy group, a cyano group, a C1-C30 (preferably C1-C10 or C3-C5) alkyl group, a C1-C30 (preferably C1-C10 or C3-C5) alkoxy group, a C6-C30 (preferably C6-C10) aryl group, C7-C30 (preferably C8-C11) arylalkyl, a C6-C30 (preferably C6-C10) aryloxy group, a C3-C30 (preferably C4-C9) heteroaryl group, a C3-C30 (preferably C4-C9) heteroaryloxy group, a C4-C30 (preferably C5-C10) cycloalkyl group, and a C3-C30 (preferably C4-C9) heterocycloalkyl gro.

In an embodiment of the present invention, the first repeating unit having a cationic group of the polymer may be, for example, a first repeating unit represented by Formula 3.

The second repeating unit of the polymer may be, for example, a second repeating unit represented by Formula 4.

In Formula 4, as a counter ion, (cat)+ is not shown. That is because the counter ion is a cation of a different molecule (or the same molecule).

A degree of polymerization of the polymer according to an embodiment of the present invention may be in a range of about 100 to about 10,000, for example, about 200 to about 5,000. By degree of polymerization it is meant how many the combination of first repeating unit, second repeating unit and, if present, the third repeating unit. For example, if the polymer displayed in Formula 8 had a degree of polymerization of 100, there would 100 repeating units of each of the units x-m (the portion of the first repeating unit that has a counter ion), m (first repeating unit) and y (the second repeating unit).

In an embodiment of the present invention, a weight average molecular weight of the polymer may be in a range of about 5,000 to about 1,000,000 g/mol, for example, about 10,000 g/mol to about 500,000 g/mol. In an embodiment of the present invention, the viscosity of the polymer may be in a range of about 1,000 to about 1,000,000 cP based on an aqueous solution thereof prepared by dissolving a solid content 5 weight % in pure water, preferably measured at 20°C. In a preferred embodiment of the present invention , the viscosity of the polymer may be in a range of about 10,000 to about 1,000,00 cP, preferably 15,000 to about 75,0000, preferably 25,000 to 50,000 cP.

In an embodiment of the present invention, the polymer may be, for example, a polymer including the first repeating unit represented by Formula 1 and the second repeating unit represented by Formula 4 or a polymer including the first repeating unit represented by Formula 3 and the second repeating unit represented by Formula 4.

In an embodiment of the present invention, the polymer has a molar fraction of the cationic group greater than a molar fraction of the anionic group; the polymer has a molar fraction of the anionic group greater than a molar fraction of the cationic group; or the polymer has equal molar fractions of the anionic and cationic groups.

When calculating molar fractions, the content of charged groups and groups with a counter ion are taken together, for example, if certain cationic repeating units have an anionic counter ion these are still taken into account when considering the molar fraction of the cationic group.

In an embodiment of the present invention, the anionic group has the larger molar fraction, and the cationic group molar faction is x, the anionic group molar faction is y and the anionic fraction with a counter ion is y-m, and

when n of $Z'^{-n}$ is 1, molar fractions thereof have the following ranges: $x < y$, $m = x$, $0.05 \leq x < 0.5$, $0.5 < y \leq 0.95$, and $x + y = 1$, preferably $0.2 \leq x < 0.4$, $0.6 < y \leq 0.8$, more preferably $0.25 \leq x < 0.35$, $0.65 < y \leq 0.75$, and when n of $Z'^{-n}$ is 2, molar fractions thereof have the following ranges: $x < 2y$, $m = 0.5x$, $0.05 < x \leq 0.5$, $0.25 < y \leq 0.475$, and $0.525 \leq x + y < 0.75$, preferably $0.2 \leq x < 0.4$, $0.3 < y \leq 0.4$, more preferably $0.25 \leq x < 0.35$, $0.325 < y \leq 0.375$

In an embodiment of the present invention, the anionic group has the larger molar fraction, and the cationic group molar faction is x, the anionic group molar faction is y, the anionic fraction with a counter ion is y-m and the neutral fraction z, and

when n of $Z'^{-n}$ is 1, molar fractions thereof have the following ranges: $x < y$, $m = x$, $0.05 \leq x < 0.50$, $0.25 < y \leq 0.94$, $0.01 \leq z \leq 0.5$, and $x + y + z = 1$, preferably $0.15 \leq x < 0.40$, $0.35 \leq y < 0.84$ and $0.05 \leq z \leq 0.3$, more preferably $0.25 \leq x < 0.35$, $0.45 \leq y \leq 0.75$ and $0.05 \leq z \leq 0.2$, and

when n of $Z'^{-n}$ is 2, molar fractions thereof have the following ranges: $x < 2y$, $m = 0.5x$, $0.05 \leq x < 0.50$, $0.125 < y \leq 0.47$, and $0.01 \leq z \leq 0.5$, preferably $0.15 \leq x < 0.40$, $0.175 \leq y < 0.42$ and $0.05 \leq z \leq 0.3$, more preferably $0.25 \leq x < 0.35$, $0.225 \leq y < 0.375$ and $0.05 \leq z \leq 0.2$.

In an embodiment of the present invention, the cationic group has the larger molar fraction, and the cationic group molar faction is x, the anionic group molar faction is y and the cationic fraction with a counter ion is x-m, and

when n of $Z'^{-n}$ is 1, molar fractions thereof have the following ranges: $x > y$, $m = y$, $0.5 < x \leq 0.95$, $0.05 \leq y < 0.5$, and $x + y = 1$, preferably $0.2 \leq y < 0.4$, $0.6 < x \leq 0.8$, more preferably $0.25 \leq y < 0.35$, $0.65 < x \leq 0.75$, and

when n of $Z'^{-n}$ is 2 molar fractions thereof have the following ranges: $x > y$, $m = 2y$, $0.5 < x \leq 0.95$, $0.025 \leq y < 0.25$, and $0.75 < x + y \leq 0.975$, preferably $0.05 \leq y < 0.2$, $0.6 < x \leq 0.8$, more preferably $0. 125 \leq y < 0.175$, $0.65 < x \leq 0.75$.

In an embodiment of the present invention, the cationic group has the larger molar fraction, and the cationic group molar faction is x, the anionic group molar faction is y, the cationic fraction with a counter ion is x-m, and the neutral fraction is z, and

when n of $Z'^{-n}$ is 1, molar fractions thereof have the following ranges: $x > y$, $m = y$, $0.25 < x \leq 0.94$, $0.05 \leq y < 0.5$, $0.01 \leq z \leq 0.5$, and $x + y + z = 1$, preferably $0.15 \leq y < 0.45$, $0.30 \leq x < 0.74$ and $0.05 \leq z \leq 0.3$, more preferably $0.35 \leq y < 0.45$, $0.40 \leq x < 0.60$ and $0.05 \leq z \leq 0.2$, and

when n of $Z'^{-n}$ is 2, $x > y$, $m = 2y$, $0.25 < x \leq 0.94$, $0.025 \leq y < 0.125$, and $0.01 \leq z \leq 0.5$, preferably $0.075 \leq y < 0.225$, $0.30 \leq x < 0.74$ and $0.05 \leq z \leq 0.3$, more preferably $0.175 \leq y < 0.225$, $0.40 \leq x < 0.60$ and $0.05 \leq z \leq 0.2$.

In an embodiment of the present invention, the cationic group has the larger molar fraction, and the cationic group molar faction is x, the anionic group molar faction is y and z and the cationic fraction with a counter ion is x-m, and $0.5 < x \leq 0.95$, preferably $0.55 < x \leq 0.85$, more preferably $0.6 < x \leq 0.8$,

when n of $Z'^{-n}$ (y) is 1, n of $Z'^{-n}$ (z) is 1 the molar fractions thereof have the following ranges: $m = y + z$, and $0.05 \leq y + z \leq 0.5$, preferably $0.2 \leq y + z \leq 0.45$,

when n of $Z'^{-n}$ (y) is 1, n of $Z'^{-n}$ (z) is 2 the molar fractions thereof have the following ranges: $m = y + 2z$, and $0.05 \leq y + 2z \leq 0.5$, preferably $0.2 \leq y + z \leq 0.45$,

when n of $Z'^{-n}$ (y) is 2, n of $Z'^{-n}$ (z) is 1 the molar fractions thereof have the following ranges: $m = 2y + z$, and $0.05 \leq 2y + z \leq 0.5$, preferably $0.2 \leq y + z \leq 0.45$, and

when n of $Z'^{-n}$ (y) is 2, n of $Z'^{-n}$ (z) is 2 the molar fractions thereof have the following ranges: $m = 2y + 2z$, and $0.05 \leq 2y + 2z \leq 0.5$, preferably $0.2 \leq y + z \leq 0.45$.

In an embodiment of the present invention, the polymer has equal molar fractions of the anionic and cationic groups, and the cationic group molar faction is x, the anionic group molar faction is y, and when n of $Z'^{-n}$ is 1, $x = 0.5$ and $y = 0.5$, and when n of $Z'^{-n}$ is 2, $x = 0.5$ and $y = 0.25$; or

the polymer has equal molar fractions of the anionic and cationic groups, and the cationic group molar faction is x, the anionic group molar faction is y and the neutral fraction z, and

when n of $Z'^{-n}$ is 1, molar fractions thereof have the following ranges: $x = y$, $0.25 < x \leq 0.495$, $0.25 \leq y < 0.495$, $0.01 \leq z \leq 0.5$, and $x + y + z = 1$, preferably $0.35 \leq x < 0.45$, $0.35 \leq y < 0.45$ and $0.1 \leq z \leq 0.3$, and

when n of $Z'^{-n}$ is 2, $0.25 < x \leq 0.495$, $0.125 \leq y < 0.2475$ and $0.01 \leq z \leq 0.5$, preferably $0.35 \leq x < 0.45$, $0.175 \leq y < 0.225$ and $0.1 \leq z \leq 0.3$.

In an embodiment of the present invention, regarding the polymer including the first repeating unit represented by Formula 3 and the second repeating unit represented by Formula 4, when a molar fraction of the first repeating unit is greater than a molar fraction of the second repeating unit, the polymer may include a first repeating unit represented by Formula 5 below.

[Formula 5]

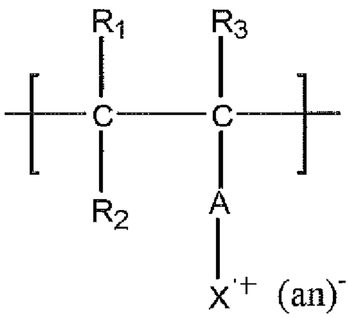

In Formula 5, X', $R_1$ to $R_3$, and A are the same as defined in Formula 3 above, and (an)- is the same as defined in Chemical structure 1.

In an embodiment of the present invention, regarding the polymer including the first repeating unit represented by Formula 1 and the second repeating unit represented by Formula 4 and the polymer including the first repeating unit represented by Formula 3 and the second repeating unit represented by Formula 4, when a molar fraction of the first repeating unit is smaller than a molar fraction of the second repeating unit, the polymers may further include a second repeating unit represented by Formula 6 below:

[Formula 6]

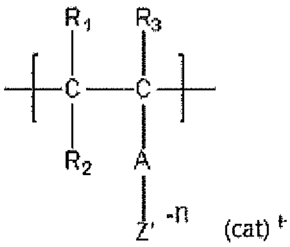

$R_1$ to $R_3$, A, Z' and n in Formula 6 are the same as defined in Formula 4 above, and $(cat)^+$ is the same as defined in Chemical structure 6 above.

In an embodiment of the present invention, regarding the polymer including the first repeating unit represented by Formula 1 and the second repeating unit represented by Formula 4, when a molar fraction of the first repeating unit is greater than a molar fraction of the second repeating unit, the polymer may include a first repeating unit represented by Formula 7 below.

[Formula 7]

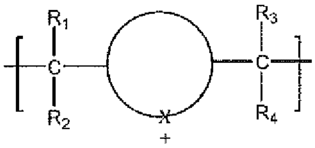

or

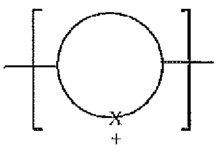

The $(an)^-$ is not shown for either formula.

In Formula 7,

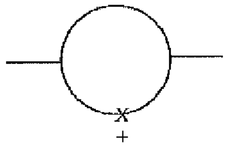

,

and $R_1$-$R_4$ are the same as defined in Formula 1 above, and $(an)^-$ is the same as defined in Chemical structure 1 above.

In an embodiment of the present invention, as the first repeating unit of the polymer, the ring structure of Formula 1 and the non-ring structure of Formula 3 may be used together. In this regard, a mixed mole ratio of the first repeating unit represented by Formula 1 and the first repeating unit represented by Formula 3 may be in a range of 5:95 to 95:5.

In respect of the pictorial representations of the polymers of the present invention displayed in Formulae 8 to 44, these are represented as such for clarity in respect of illustrating the molar fractions of the polymers disclosed, i.e. the pictorial representations do not limit the monomers to the bonding order that they are displayed in. The polymers of the present invention may take on any copolymeric structure. In embodiments of the present invention the polymers may be alternating copolymers, statistical copolymers, random copolymers or block copolymers. In a preferred embodiment of the present invention the polymers are random copolymers.

Hereinafter, polymers represented by Formulae 8 to 13 below are presented as examples of the polymer. However, the polymer according to an embodiment of the present invention is not limited thereto.

In Formulae 8 to 13, x, y, z, h, and m represent molar fractions of the respective repeating units, and a degree of polymerization of the polymers is not shown in the formulae, and may be in a range of about 100 to about 10,000. In an embodiment of the present invention the polymers have a weight average molecular weight of the polymers may be in a range of about 5,000 to about 1,000,000 g/mol.

[Formula 8]

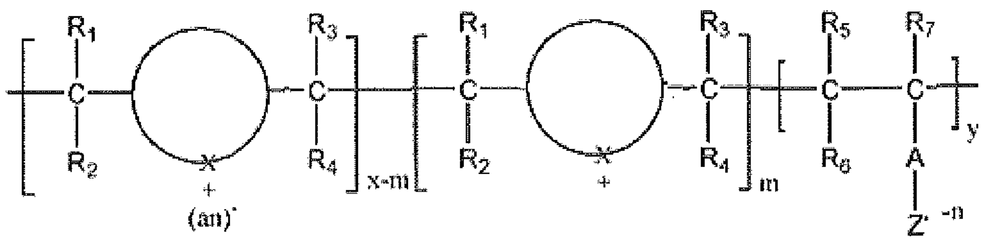

or

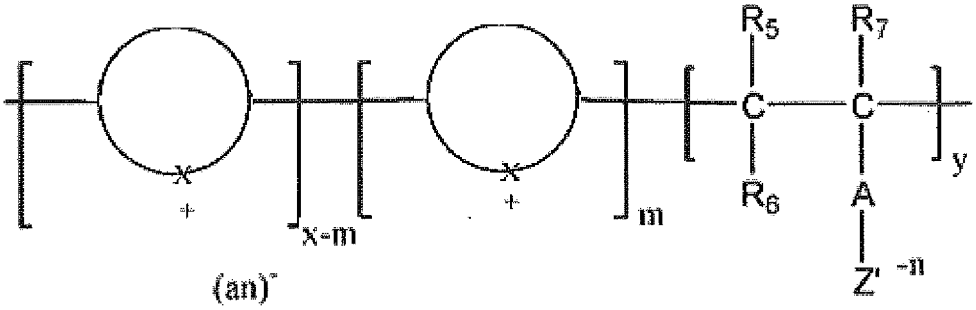

In Formula 8, $R_1$ to $R_7$ are each independently hydrogen, a unsubstituted or substituted C1-C30 (preferably C1-C10 or C3-C5) alkyl group, a unsubstituted or substituted C1-C30 (preferably C1-C10 or C3-C5) alkoxy group, a unsubstituted or substituted C6-C30 (preferably C6-C10) aryl group, unsubstituted or substituted C7-C30 (preferably C8-C11) arylalkyl, a unsubstituted or substituted C6-C30 (preferably C6-C10) aryloxy group, a unsubstituted or substituted C3-C30 (preferably C4-C9) heteroaryl group, a unsubstituted or substituted C3-C30 (preferably C4-C9) heteroaryloxy group, a unsubstituted or substituted C4-C30 (preferably C5-C10) cycloalkyl group, or a unsubstituted or substituted C3-C30 (preferably C4-C9) heterocycloalkyl group, and

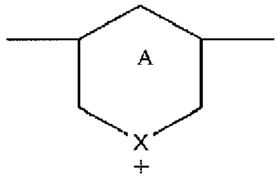

refers to a C2-C30 3-membered or 31-membered ring having at least one hetero atom,
(an)[-] is the same as defined in Chemical structure 1 above,

A represents a simple chemical bond, or any one selected from C1-C30 (preferably C1-C10 or C3-C5) alkyl, a C6-C30 (preferably C6-C10) aryl, a C7-C30 (preferably C8-C11) arylalkyl, a C1-C30 (preferably C4-C9) heteroaryl, a C4-C30 (preferably C5-C10) cycloalkyl group, and C1-C30 (preferably C4-C9) heterocycloalkyl group, and these groups may include at least one group selected from carbonyl group (-CO-), oxy group (-O-), a carbonyloxy group (-COO- or -OCO-), iminocarbonyl group (-NH-CO- or -CO-NH-), iminosulfonyl group ($-NH-SO_2-$ or $-SO_2-NH-$), sulfanyl group (-S-), sulfinyl group (-S(O)-), sulfonyl group ($-SO_2-$), sulfonyloxy group ($-SO_2-O-$ or $-O-SO_2-$), imino group (-NH-), methylene group repeating unit ($-(CH_2O)n-$, n=1 to 20), methyleneoxide repeating unit ($-(CH_2O)n-$, n=1 to 20), ethyleneoxide repeating unit ($-(CH_2CH_2O)_n-$, n=1 to 20), and propyleneoxide repeating unit ($-(CH(CH_3)CH_2O)_n-$, n=1 to 20), and

Z' is a carboxylate group(-C(=O)O), a sulfate group ($-OS(=O)_2O$), a sulfite group (-OS(=O)O), a sulfinate group (-S(=O)O), a phosphate group ($-OP(=O)(O)_2$), or phosphonate group ($-P(=O)(O)_2$), and n is 1 or 2.

The polymer of Formula 8 corresponds to a case in which a molar fraction of the cationic group is greater than a molar fraction of the anionic group, and when n of $Z'^{-n}$ is 1, molar fractions thereof have the following ranges: x > y, m = y, $0.5 < x \leq 0.95$, $0.05 \leq y < 0.5$, and x + y = 1, preferably $0.2 \leq y < 0.4$, $0.6 < x \leq 0.8$, and when n of $Z'^{-n}$ is 2, x > y, molar fractions thereof have the following ranges: x > y, m = 2y, $0.5 < x \leq 0.95$, $0.025 \leq y < 0.25$, and $0.75 < x + y \leq 0.975$ preferably $0.05 \leq y < 0.2$, $0.6 < x \leq 0.8$, more preferably $0.125 \leq y < 0.175$, $0.65 < x \leq 0.75$.

[Formula 9]

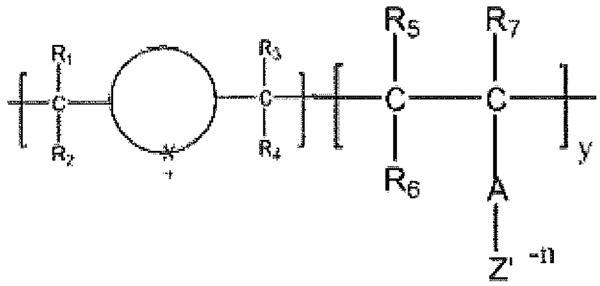

or

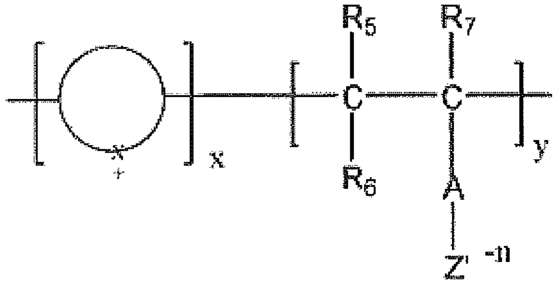

In formula 9

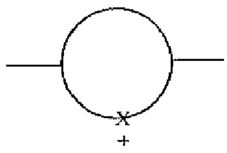

,

$R_1$-$R_7$ and A, Z', and n are the same as defined in Formula 8. The polymer of Formula 9 corresponds to a case in which a molar fraction of the cationic group is the same as a molar fraction of the anionic group, and when n of $Z'^{-n}$ is 1, x = 0.5 and y = 0.5, and when n of $Z'^{-n}$ is 2, x = 0.5 and y = 0.25.

[Formula 10]

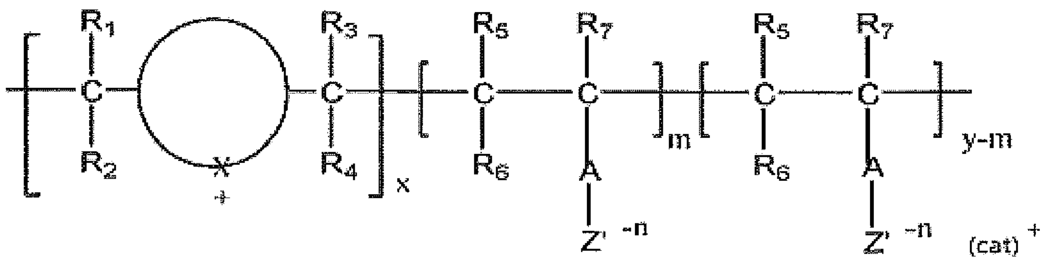

or

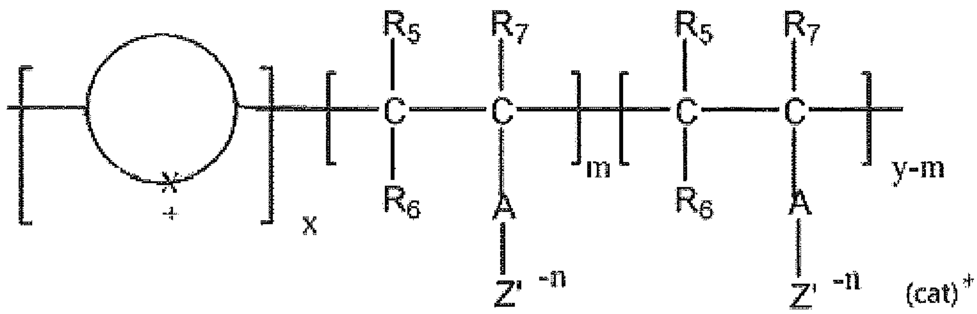

In Formula 10,

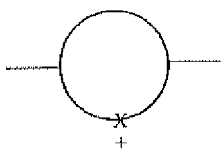

$R_1$-$R_7$, A, Z', and n are the same as defined in Formula 8. The polymer of Formula 10 corresponds to a case in which a molar fraction of the cationic group is smaller than a molar fraction of the anionic group, and when n of Z'-n is 1, molar fractions thereof have the following ranges: x < y, m = x, 0.05 ≤ x < 0.5, 0.5 < y ≤ 0.95, and x + y = 1, preferably 0.2 ≤ x < 0.4, 0.6 < y ≤ 0.8, more preferably 0.25 ≤ x < 0.35, 0.65 < y ≤ 0.75, and when n of $Z'^{-n}$ is 2, molar fractions thereof have the following ranges: x < y, m = 0.5x, 0.05 < x ≤ 0.5, 0.25 < y ≤ 0.475, and 0.525 ≤ x + y < 0.75, preferably 0.2 ≤ x < 0.4, 0.3 < y ≤ 0.4, more preferably 0.25 ≤ x < 0.35, 0.325 < y ≤ 0.375. $(cat)^+$ in Formula 10 is the same as defined in Chemical structure 6 above.

[Formula 11]

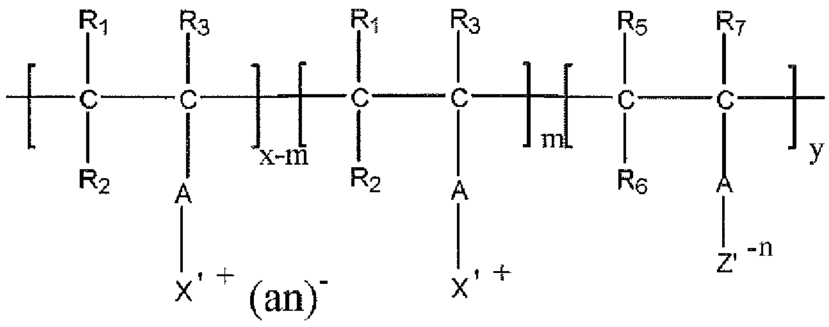

In Formula 11, $R_1$-$R_3$, $R_5$-$R_7$, Z', n, and $(an)^-$ are the same as defined in Formula 8, and A and X' are the same as defined in Formula 3.

The polymer of Formula 11 corresponds to a case in which a molar fraction of the cationic group is greater than a molar fraction of the anionic group, and when n of $Z'^{-n}$ is 1, molar fractions thereof have the following ranges: $x > y$, $m = y$, $0.5 < x \leq 0.95$, $0,05 \leq y < 0.5$, and $x + y = 1$, preferably $0.2 \leq y < 0.4$, $0.6 < x \leq 0.8$, more preferably $0.25 \leq y < 0.35$, $0.65 < x \leq 0.75$, and when n of $Z'^{-n}$ is 2, molar fractions thereof have the following ranges: $x > y$, $m = 2y$, $0.5 < x \leq 0.95$, $0.025 \leq y < 0.25$, and $0.75 < x + y \leq 0.975$, preferably $0.05 \leq y < 0.2$, $0.6 < x \leq 0.8$, more preferably $0.125 \leq y < 0.175$, $0.65 < x \leq 0.75$.

[Formula 12]

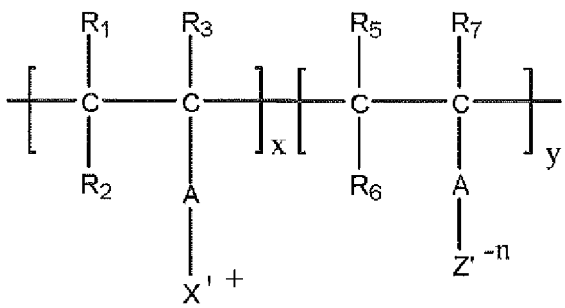

In Formula 12, X', $R_1$-$R_3$, $R_5$-$R_7$, A, Z', and n are the same as defined in Formula 11.

The polymer of Formula 12 corresponds to a case in which a molar fraction of the cationic group is the same as a molar fraction of the anionic group, and when n of $Z'^{-n}$ is 1, $x = 0.5$ and $y = 0.5$, and when n of $Z'^{-n}$ is 2, $x = 0.5$ and $y = 0.25$.

[Formula 13]

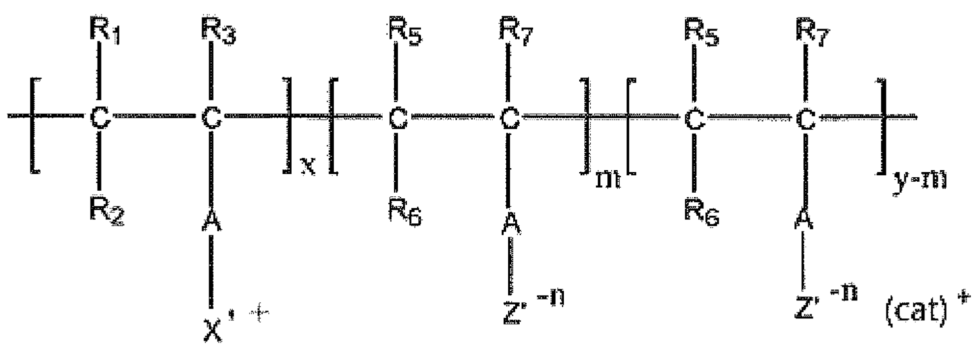

In Formula 13, X', $R_1$-$R_3$, $R_5$-$R_7$, Z', n, and A are the same as defined in Formula 11. The polymer of Formula 13 corresponds to a case in which a molar fraction of the cationic group is smaller than a molar fraction of the anionic group, and when n of $Z'^{-n}$ is 1, molar fractions thereof have the following ranges: $x < y$, $m = x$, $0.05 \leq x < 0.5$, $0.5 < y \leq 0.95$, and $x + y = 1$, preferably $0.2 \leq x < 0.4$, $0.6 < y \leq 0.8$, more preferably $0.25 \leq x < 0.35$, $0.65 < y \leq 0.75$, and when

n of $Z'^{-n}$ is 2, molar fractions thereof have the following ranges: $x < 2y$, $m = 0.5x$, $0.05 < x \leq 0.5$, $0.25 < y \leq 0.475$, and $0.525 \leq x + y < 0.75$, preferably $0.2 \leq x < 0.4$, $0.3 < y \leq 0.4$, more preferably $0.25 \leq x < 0.35$, $0.325 < y \leq 0.375$. $(cat)^+$ in Formula 13 is the same as defined in Chemical structure 6 above.

According to an embodiment of the present invention provides polymers represented by Formulae 14 to 19 below.

[Formula 14]

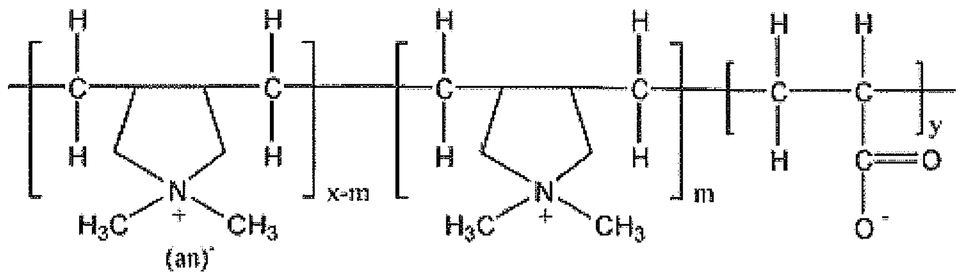

In Formula 14, $(an)^-$ is the same as defined in Formula 8, and since the polymer of Formula 14 corresponds to a case in which a molar fraction of the cationic group is greater than a molar fraction of the anionic group and n of $Z'^{-n}$ is 1 molar fractions thereof have the following ranges: $x > y$, $m = y$, $0.5 < x \leq 0.95$, $0.95 \leq y < 0.5$, and $x + y = 1$, preferably $0.2 \leq y < 0.4$, $0.6 < x \leq 0.8$, more preferably $0.25 \leq y < 0.35$, $0.65 < x \leq 0.75$.

[Formula 15]

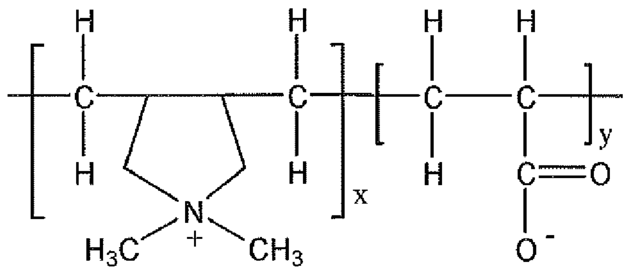

Since the polymer of Formula 15 corresponds to a case in which a molar fraction of the cationic group is the same as a molar fraction of the anionic group and n of $Z'^{-n}$ is 1, $x = 0.5$ and $y = 0.5$.

[Formula 16]

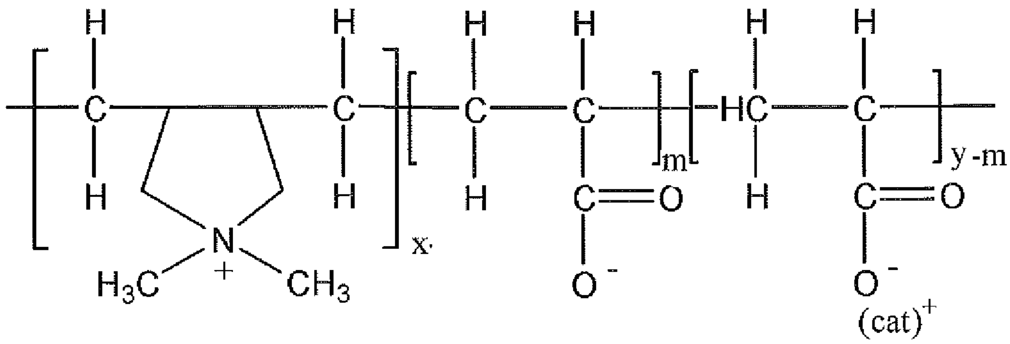

(cat)+ in Formula 16 is the same as defined in Formula 10, and since the polymer of Formula 16 corresponds to a case in which a molar fraction of the cationic group is smaller than a molar fraction of the anionic group and n of $Z'^{-n}$ is 1, molar fractions thereof have the following ranges: $x < y$, $m = x$, $0.05 < x \leq 0.5$, $0.5 \leq y < 0.95$, and $x + y = 1$, . preferably $0.2 \leq y < 0.4$, $0.6 < x \leq 0.8$, more preferably $0.25 \leq y < 0.35$, $0.65 < x \leq 0.75$.

[Formula 17]

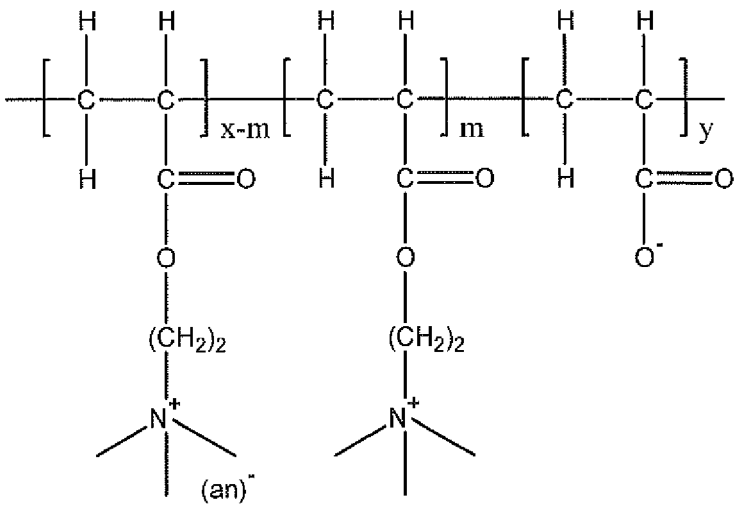

In Formula 17, $(an)^-$ is the same as defined in Formula 8, and since the polymer of Formula 17 corresponds to a case in which a molar fraction of the cationic group is greater than a molar fraction of the anionic group and n of $Z'^{-n}$ is 1, molar fractions thereof have the following ranges: $x > y$, $m = x$, $0.5 < x \leq 0.95$, $0.05 \leq y < 0.5$, and $x + y = 1$, preferably $0.2 \leq y < 0.4$, $0.6 < x \leq 0.8$, more preferably $0.25 \leq y < 0.35$, $0.65 < x \leq 0.75$.

[Formula 18]

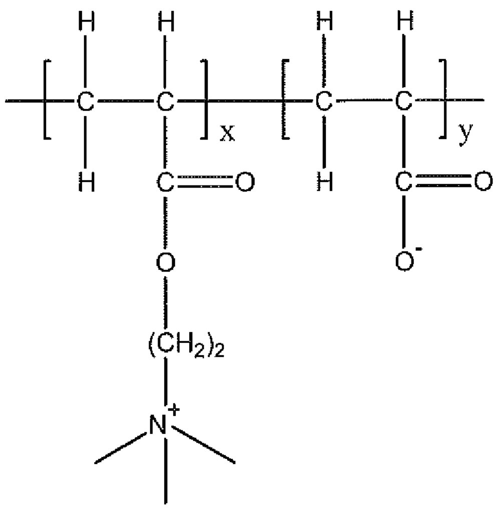

Since the polymer of Formula 18 corresponds to a case in which a molar fraction of the cationic group is the same as a molar fraction of the anionic group and n of $Z'^{-n}$ is 1, $x = 0.5$ and $y = 0.5$.

[Formula 19]

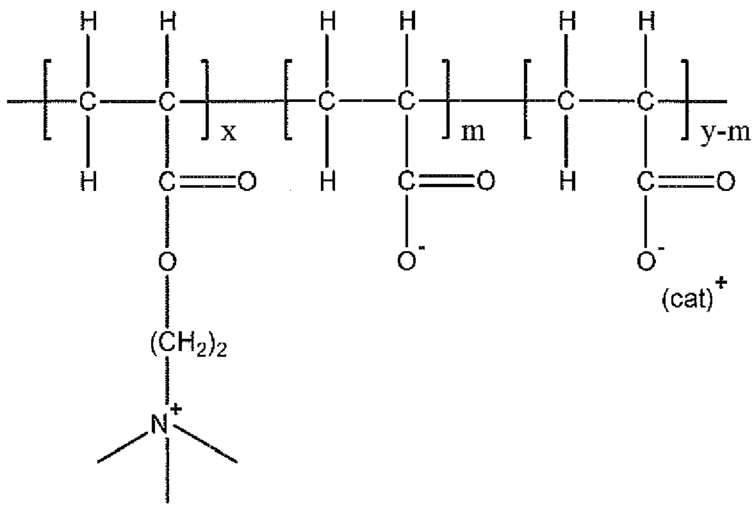

In Formula 19, $(cat)^+$ is the same as defined in Formula 10, and since the polymer of Formula 19 corresponds to a case in which a molar fraction of the cationic group is smaller than a molar fraction of the anionic group and n of $Z'^{-n}$, is 1, molar fractions thereof have the following ranges: $x < y$, $m = x$, $0.05 < x \leq 0.5$, $0.5 \leq y < 0.95$, and $x + y = 1$, preferably $0.2 \leq x < 0.4$, $0.6 < y \leq 0.8$, more preferably $0.25 \leq x < 0.35$, $0.65 < y \leq 0.75$.

[Formula 20]

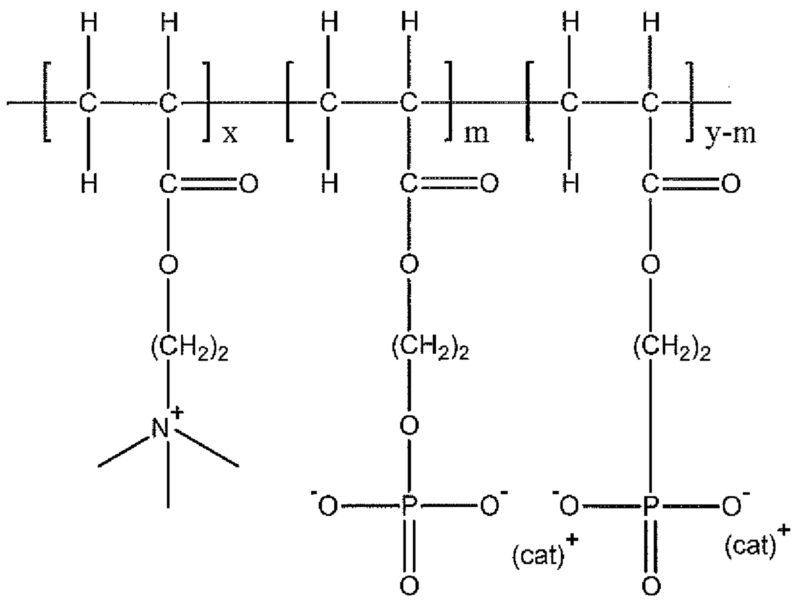

$(cat)^+$ in Formula 20 is the same as defined in Formula 10, and since the polymer of Formula 20 corresponds to a case in which a molar fraction of the cationic group is smaller than a molar fraction of the anionic group and n of $Z'^{-n}$ is 2, molar fractions thereof have the following ranges: $m = 2x$, $0.05 < x \leq 0.5$, $0.25 < y \leq 0.475$, $0.525 \leq x + y < 0.75$, preferably $0.2 \leq x < 0.4$, $0.3 < y \leq 0.4$, more preferably $0.25 \leq x < 0.35$, $0.325 < y \leq 0.375$. Formula 20 is presented herein to help quantitative understanding, and in fact, due to the difference between primary and secondary ionization degrees of phosphate group, the polymer of Formula 20 may exist like Formula 21.

[Formula 21]

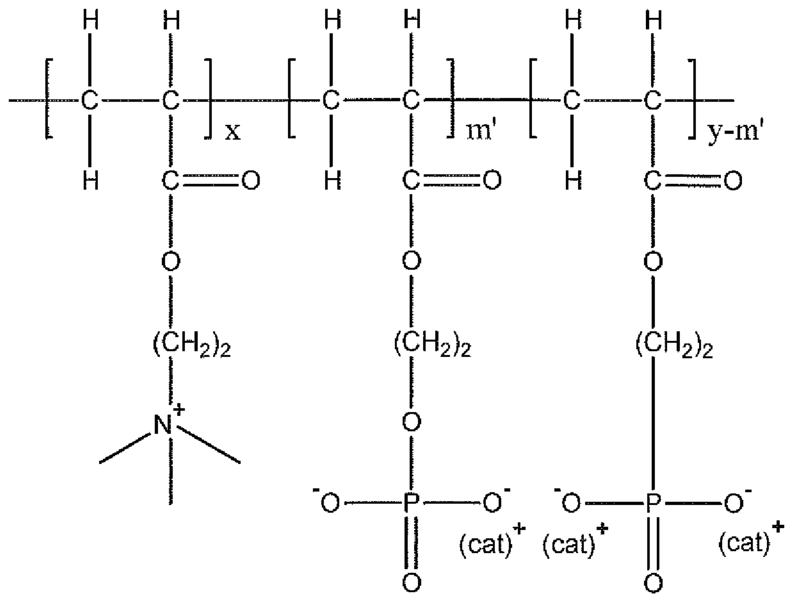

m' in Formula 21 is a value determined according to a degree of primary and secondary ionization of a phosphate group, and may be used in the same range as m of Formula 20.

[Formula 22]

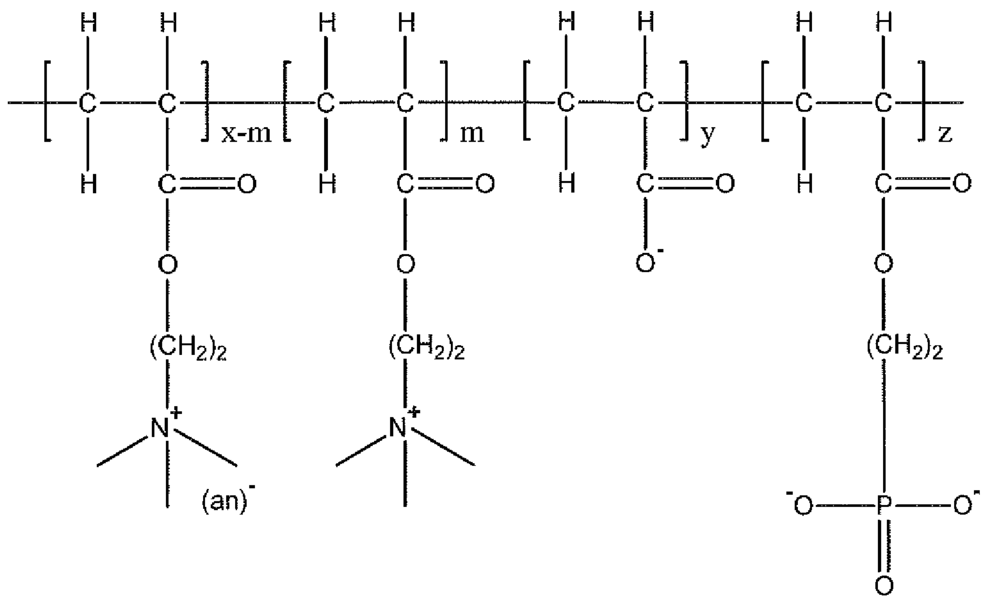

$(an)^-$ in Formula 22 is the same as defined in Formula 8, and since the polymer of Formula 22 corresponds to a case in which a molar fraction of the cationic group is greater than a molar fraction of the anionic group and n of $Z'^{-n}$ is 1 or 2, molar fractions thereof have the following ranges: $x > y$ , $m = y + 2z$, $0.5 < x \leq 0.95$, $0.05 \leq y + 2z < 0.5$, and $x + y + 2z = 1$, preferably $0.55 < x \leq 0.85$, more preferably $0.6 < x \leq 0.8$, and $0.05 \leq y + 2z \leq 0.5$, preferably $0.2 \leq y + z \leq 0.45$.

The polymer according to an embodiment of the present invention may further include a non-ionic third repeating unit. As the non-ionic third repeating unit, a third repeating unit represented by Formula 23 may be used.

Herein, polymers represented by Formulae 24 to 29 are presented as a detailed example of the polymer having the third repeating unit represented by Formula 23, but the polymer according to the present embodiment is not limited thereto.

Formulae 24 to 29 representing polymers do not show a degree of polymerization. However, in an embodiment of the present invention, the degree of polymerization of the polymers is in a range of 100 to 10,000. In an embodiment

of the present invention, a weight average molecular weight of the polymers may be in a range of about 5,000 to about 1,000,000 g/mol. In an embodiment of the present invention, a viscosity of the polymers is in a range of 1,000 to 1,000,000 cP based on an aqueous solution thereof prepare by dissolving solid content 5 wt% in pure water.

[Formula 24]

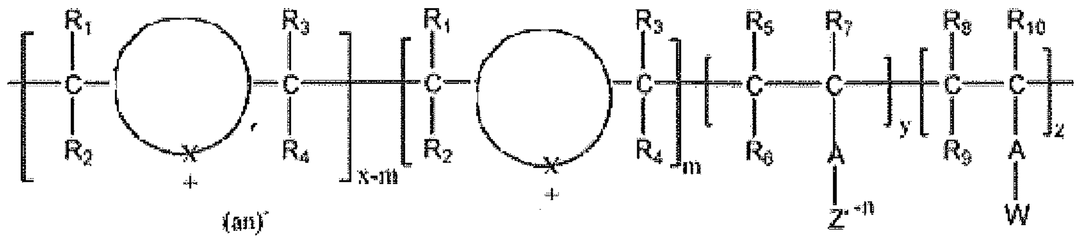

or

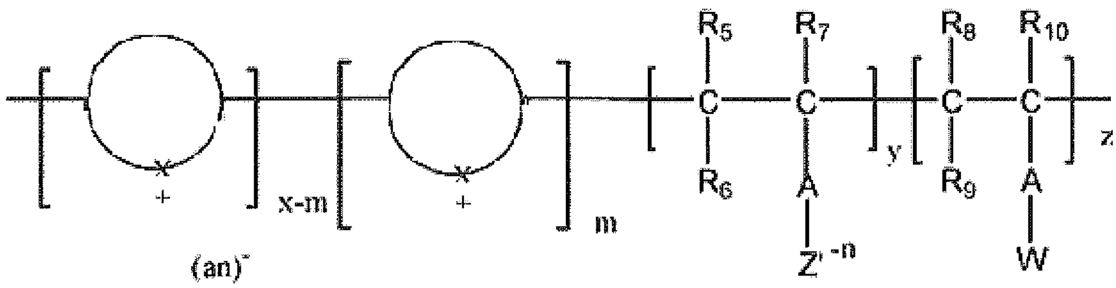

In Formula 24, $R_1$ to $R_{10}$ are each independently hydrogen, a unsubstituted or C1-C30 (preferably C1-C10 or C3-C5) alkyl group, a unsubstituted or substituted C1-C30 (preferably C1-C10 or C3-C5) alkoxy group, a unsubstituted or substituted C6-C30 (preferably C6-C10) aryl group, unsubstituted or substituted C7-C30 (preferably C8-C11) arylalkyl, a unsubstituted or substituted C6-C30 (preferably C6-C10) aryloxy group, a unsubstituted or substituted C3-C30 (preferably C4-C9) heteroaryl group, a unsubstituted or substituted C3-C30 (preferably C4-C9) heteroaryloxy group, a unsubstituted or substituted C4-C30 (preferably C5-C10) cycloalkyl group, or a unsubstituted or substituted C3-C30 (preferably C4-C9) heterocycloalkyl group, and

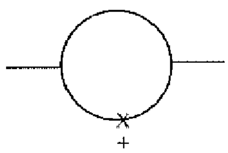

,

Z', n, A, and $(an)^-$ are the same as defined in Formula 8, and $R_8$-$R_{10}$, A, and W of a repeating unit represented by a mole fraction of z are the same as defined in Formula 23.

The polymer of Formula 24 corresponds to a case in which a molar fraction of the cationic group is greater than a molar fraction of the anionic group, and when n of $Z'^{-n}$ is 1, $x > y$, $m = y$, $0.25 < x \leq 0.94$, $0.05 \leq y < 0.5$, $0.01 \leq z \leq 0.5$, and $x + y + z = 1$, preferably $0.15 \leq y < 0.45$, $0.30 \leq x < 0.74$ and $0.05 \leq z \leq 0.3$, more preferably $0.35 \leq y < 0.45$, $0.40 \leq x < 0.60$ and $0.05 \leq z \leq 0.2$.

[Formula 25]

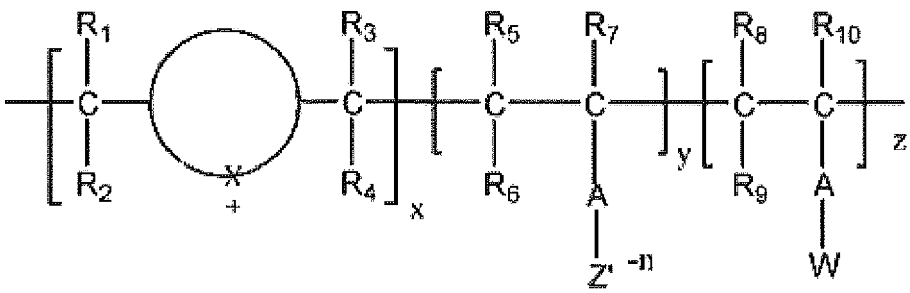

or

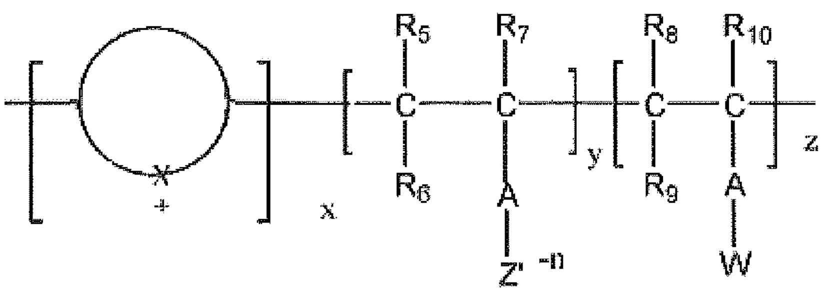

In Formula 25,

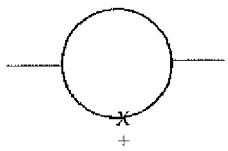

,

$R_1$-$R_{10}$, A, Z', W, and n are the same as defined in Formula 24, and The polymer of Formula 25 corresponds to a case in which a molar fraction of the cationic group is the same as a molar fraction of the anionic group, and when n of $Z'^{-n}$ is 1, molar fractions thereof have the following ranges: $x = y$ , $0.25 < x \leq 0.495$, $0.25 \leq y < 0.495$, $0.01 \leq z \leq 0.5$, and $x + y + z = 1$, preferably $0.35 \leq x < 0.45$, $0.35 \leq y < 0.45$ and $0.1 \leq z \leq 0.3$.

[Formula 26]

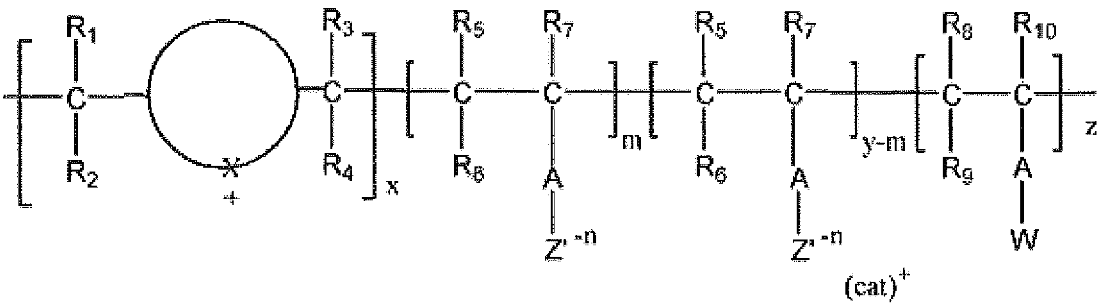

or

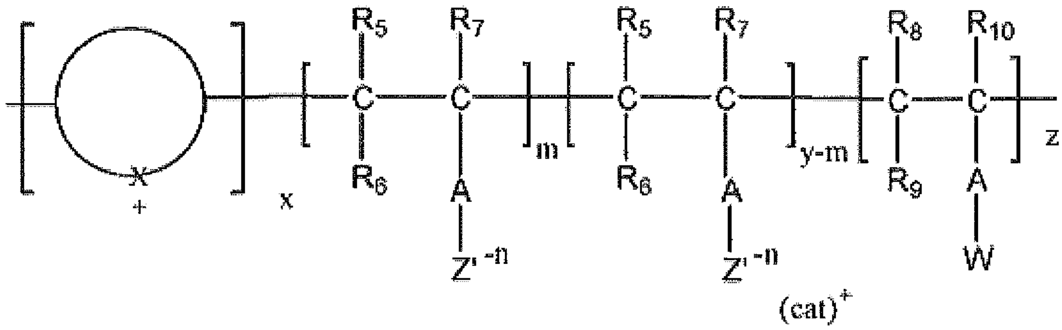

In Formula 26,

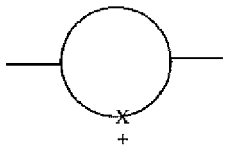

,

$R_1$-$R_{10}$, W, Z', n, and A are the same as defined in Formula 24, and $(cat)^+$ is the same as defined in Formula 10.

The polymer of Formula 26 corresponds to a case in which a molar fraction of the cationic group is smaller than a molar fraction of the anionic group, and when n of $Z'^{-n}$ is 1, molar fractions thereof have the following ranges: $x < y$ , $m = x$, $0.05 \leq x < 0.5$, $0.25 < y \leq 0.94$, $0.01 \leq z \leq 0.5$, and $x + y + z = 1$, preferably $0.15 < x \leq 0.35$, $0.5 \leq y < 0.8$, $0.05 \leq z \leq 0.2$.

[Formula 27]

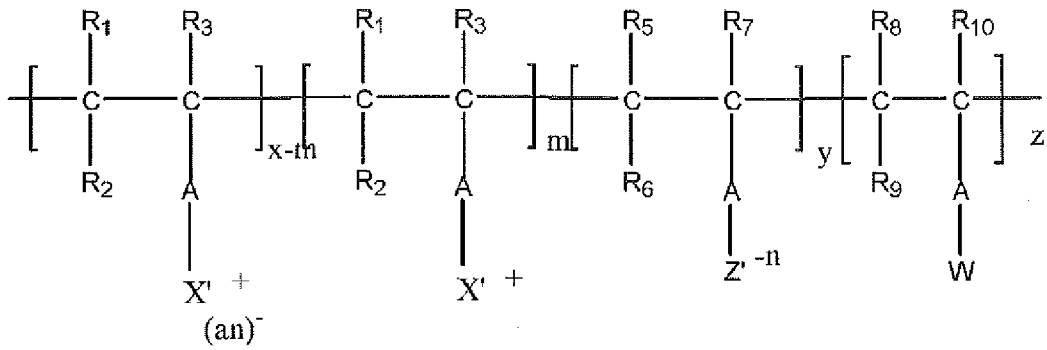

In Formula 27, $R_1$-$R_3$, $R_5$-$R_{10}$, W, A, n, and Z are the same as defined in Formula 26 above, and X' and $(an)^-$ are the same as defined in Formula 11 above.

The polymer of Formula 27 corresponds to a case in which a molar fraction of the cationic group is greater than a molar fraction of the anionic group, and when n of $Z'^{-n}$ is 1, molar fractions thereof have the following ranges: $x > y$, $m = y$, $0.25 < x \leq 0.94$, $0.05 \leq y < 0.5$, $0.01 \leq z \leq 0.5$, and $x + y + z = 1$, preferably $0.35 < x \leq 0.74$, $0.10 \leq y < 0.30$, $0.05 \leq z \leq 0.2$.

[Formula 28]

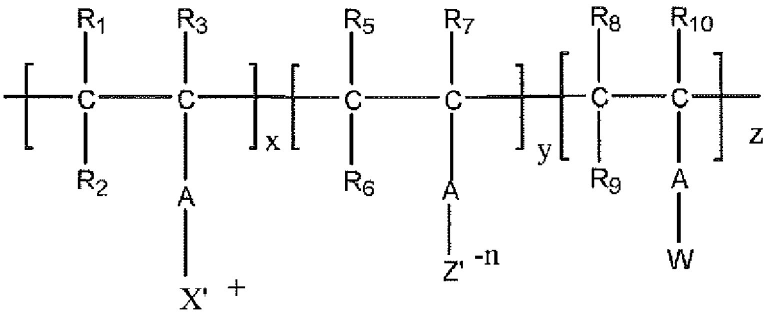

In Formula 28, X', $R_1$-$R_3$, $R_s$-$R_{10}$, Z', A, W, and n are the same as defined in Formula 27 above.

The polymer of Formula 28 corresponds to a case in which a molar fraction of the cationic group is the same as a molar fraction of the anionic group, and when n of $Z'^{-n}$ is 1, molar fractions thereof have the following ranges: $x = y$, $0.25 < x \leq 0.495$, $0.25 \leq y < 0.495$, $0.01 \leq z \leq 0.5$, and $x + y + z = 1$, preferably $0.35 \leq x < 0.45$, $0.35 \leq y < 0.45$ and $0.1 \leq z \leq 0.3$.

[Formula 29]

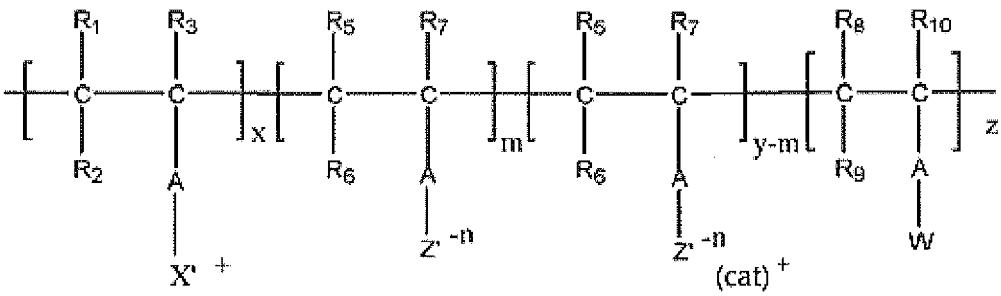

In Formula 29, X', Z', W, n, A, $R_1$-$R_3$, and $R_5$-$R_{10}$ are the same as defined in Formula 27, and the polymer of Formula 29 corresponds to a case in which a molar fraction of the cationic group is smaller than a molar fraction of the anionic group, and when n of $Z'^{-n}$ is 1, molar fractions thereof have the following ranges: $x < y$, $m = x$, $0.05 \leq x < 0.\ 5$, $0.25 < y \leq 0.94$, $0.01 \leq z \leq 0.5$, and $x + y + z = 1$, preferably $0.15 < x \leq 0.35$, $0.5 \leq y < 0.8$, $0.05 \leq z \leq 0.2$, and $(cat)^+$ is the same as defined in Formula 10 above.

Unlimited examples of the polymer are polymers represented by Formulae 30 to 35 below.

Formulae 30 to 35 do not show a degree of polymerization, but, in an embodiment of the present invention, the degree of polymerization of the polymers may be in a range of about 100 to about 10,000. In an embodiment of the present invention the weight average molecular weight thereof may be in a range of about 5,000 to about 1,000,000.

[Formula 30]

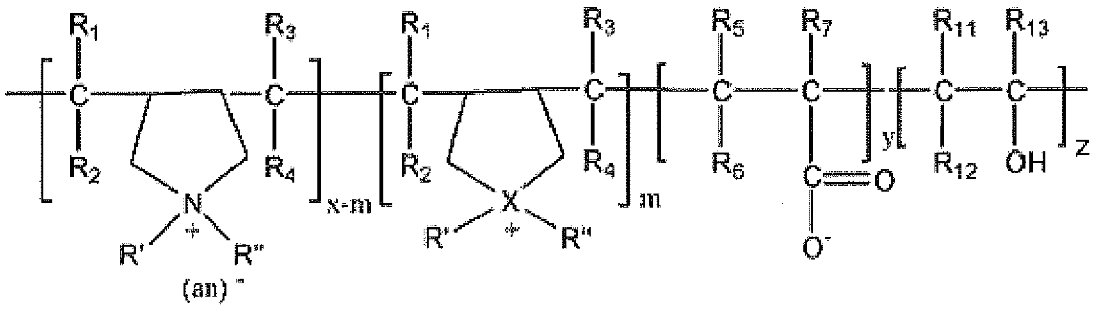

or

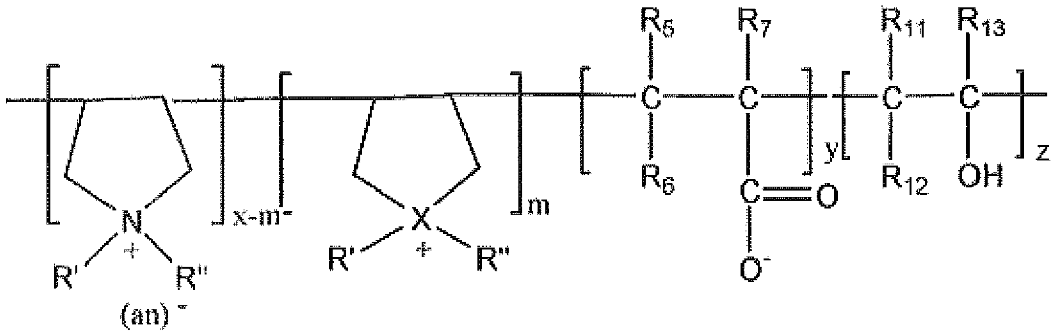

In Formula 30, $R_1$-$R_7$, and $R_{11}$-$R_{13}$ are each independently hydrogen, a C1-C30 (preferably C1-C10 or C3-C5) alkyl group, a C6-C30 (preferably C6-C10) aryl group, a C3-C30 (preferably C4-C9) heteroaryl group, a C4-C30 (preferably C5-C10) cycloalkyl group, or a C3-C30 (preferably C4-C9) heterocycloalkyl group,

R', and R" are each independently hydrogen, C1-C30 (preferably C1-C10 or C3-C5) alkyl, C6-C30 (preferably C6-C10) aryl, C7-C30 (preferably C8-C11) arylalkyl, C1-C30 (preferably C4-C9) heteroaryl, C4-C30 (preferably C5-C10) cycloalkyl group, or a C1-C30 (preferably C4-C9) heterocycloalkyl group, or these groups may also include at least one group selected from a carbonyl group (-CO-), an oxy group (-O-), a carbonyloxy group ($-COO^-$ or $-OCO^-$), an iminocarbonyl group ($-NH-CO^-$ or -CO-NH-), an iminosulfonyl group ($-NH-SO_2-$ or $-SO_2-NH-$), a sulfanyl group (-S-), a sulfinyl group (-S(O)-), a sulfonyl group ($-SO_2-$), a sulfonyloxy group ($-SO_2-O-$ or $-O-SO_2-$), and an imino group (-NH-), and

$(an)^-$ is the same as defined in Chemical structure 1, and may be $HCOO^-$, $CH_3COO^-$, $CF_3COO^-$, $CH_3CH_2COO^-$, $COO^{2-}$, $HOC(CH_2COO-)_2COO-$, $CH_3(CH_2)_{16}COO-$, $CO_3^{-2}$, $HCO_3^-$, $Cl^-$, $Br^-$, $I^-$, $SO_4^{-2}$, $HSO_4^-$, $NO_3^-$, $PO_4^{-3}$, $HPO_3^{-2}$, $H_2PO_3^-$, $SO_3^{-2}$, $HSO_3^-$, $NO_2^-$, $P_2O_7^{-4}$, $BX_4^-$(X is a halogen atom), $AlX_4^-$(X is a halogen atom), $PX_6^-$(X is a halogen atom), $AsX^-$(X is a halogen atom), ClO-, $CH_3SO_3-$, $CF_3SO_3-$, $CH_3CH_2SO_3-$, or $N(CF_3SO_3)_2^-$.

The polymer of Formula 30 corresponds to a case in which a molar fraction of the cationic group is greater than a molar fraction of the anionic group, and molar fractions thereof have the following ranges: $x > y$, $m = y$, $0.25 < x \leq 0.94$, $0.05 \leq y < 0.5$, $0.01 \leq z \leq 0.5$, and $x + y + z = 1$, preferably $0.15 \leq y < 0.45$, $0.30 \leq x \leq 0.74$ and $0.05 \leq z \leq 0.3$, more preferably $0.35 \leq y < 0.45$, $0.40 \leq x < 0.60$ and $0.05 \leq z \leq 0.2$.

[Formula 31]

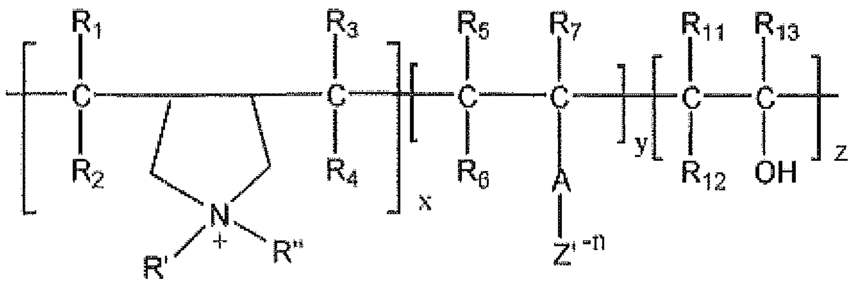

or

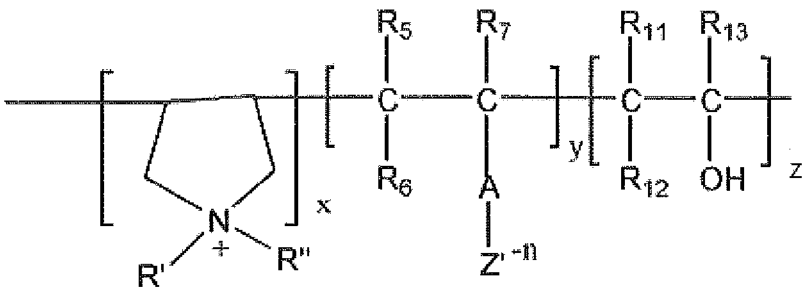

In Formula 31, $R_1$-$R_4$, $R_5$-$R_7$, $R_{11}$-$R_{13}$, R', and R" are the same as defined in Formula 30 above, A, Z', and n are the same as defined in Formula 29 above, and

The polymer of Formula 31 corresponds to a case in which a molar fraction of the cationic group is the same as a molar fraction of the anionic group, and molar fractions thereof have the following ranges: $x = y$, $0.25 \leq x \leq 0.495$, $0.25 \leq y \leq 0.495$, $0.01 \leq z \leq 0.5$, and $x + y + z = 1$, preferably $0.35 \leq x < 0,45$, $0.35 \leq y < 0.45$ and $0.1 \leq z \leq 0.3$.

[Formula 32]

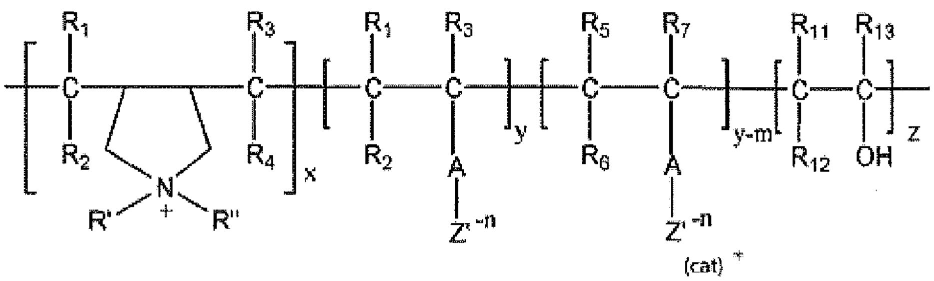

In Formula 32, $R_1$-$R_3$, $R_5$-$R_7$, $R_{11}$-$R_{13}$, R', and R" are the same as defined in Formula 30 above, A, Z', and n are the same as defined in Formula 29 above, and $(cat)^+$ is already defined with $Z^+$ of Chemical Formula 6.

The polymer of Formula 32 corresponds to a case in which a molar fraction of the cationic group is smaller than a molar fraction of the anionic group, and molar fractions thereof have the following ranges: $x < y$ , $m = y$, $0.05 \leq x < 0.5$, $0.25 < y \leq 0.94$, $0.01 \leq z \leq 0.5$, and $x + y + z = 1$, preferably $0.2 \leq x < 0.4$, $0.55 < y \leq 0.84$, $0.05 \leq z \leq 0.2$.

[Formula 33]

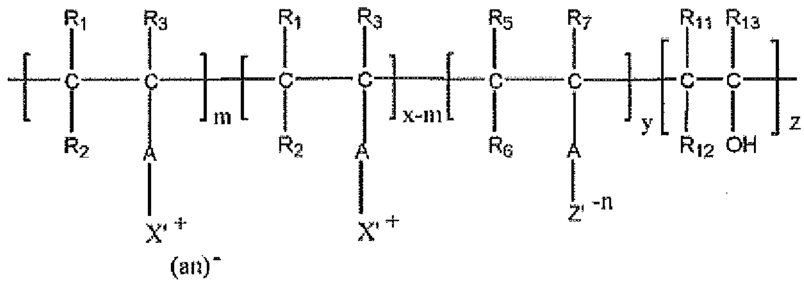

In Formula 33, $R_1$-$R_3$, $R_5$-$R_7$, $R_{11}$-$R_{13}$, R', and R" are the same as defined in Formula 30 above, and n, Z', A, and X' are the same as defined in Formula 29 above, and (an)- is the same as defined in Formula 27 above.

The polymer of Formula 33 corresponds to a case in which a molar fraction of the cationic group is greater than a molar fraction of the anionic group, and molar fractions thereof have the following ranges: $x > y$, $m = y$, $0.25 < x \leq 0.94$, $0.05 \leq y < 0.5$, $0.01 \leq z \leq 0.5$, and $x + y + z = 1$, preferably $0.15 \leq y < 0.45$, $0.30 \leq x < 0.74$ and $0.05 \leq z \leq 0.3$, more preferably $0.35 \leq y < 0.45$, $0.40 \leq x < 0.60$ and $0.05 \leq z \leq 0.2$.

[Formula 34]

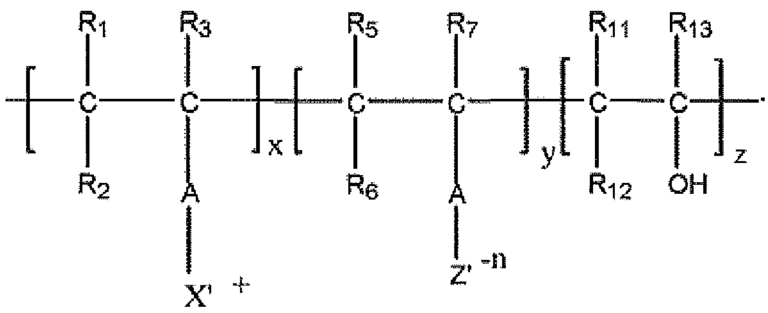

In Formula 34, $R_1$-$R_3$, $R_5$-$R_7$, and $R_{11}$-$R_{13}$ are the same as defined in Formula 30 above, and n, Z', A, and X' are the same as defined in Formula 29.

The polymer of Formula 34 corresponds to a case in which a molar fraction of the cationic group is the same as a molar fraction of the anionic group, and molar fractions thereof have the following ranges: $x = y$, , $0.25 \leq x \leq 0.495$, $0.25 \leq y \leq 0.495$, $0.01 \leq z \leq 0.5$, and $x + y + z = 1$, preferably $0.35 \leq x < 0.45$, $0.35 \leq y < 0.45$ and $0.1 \leq z \leq 0.3$.

[Formula 35]

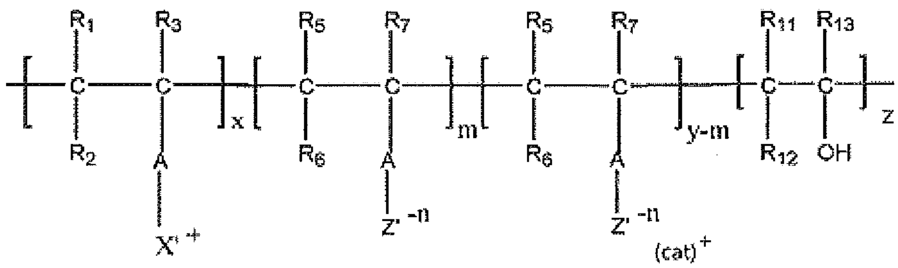

In Formula 35, $R_1$-$R_3$, $R_5$-$R_7$, $R_{11}$-$R_{13}$, X', A, n, and Z' are the same as defined in Formula 34 above, and $(cat)^+$ is the same as defined in Formula 32 above.

The polymer of Formula 35 corresponds to a case in which a molar fraction of the cationic group is smaller than a molar fraction of the anionic group, and molar fractions thereof have the following ranges: $x < y$, $m = x$, $0.05 \leq x < 0.5$, $0.25 < y \leq 0.94$, $0.01 \leq z \leq 0.5$, and $x + y + z = 1$, preferably $0.15 \leq x < 0.40$, $0.35 \leq y < 0.84$ and $0.05 \leq z \leq 0.3$, more preferably $0.25 \leq x < 0.35$, $0.45 \leq y < 0.75$ and $0.05 \leq z \leq 0.2$.

According to an embodiment of the present invention provides polymers represented by Formulae 36 to 44 below.

Formulae 36 to 44 do not show a degree of polymerization, but, in an embodiment of the present invention, the degree of polymerization of the polymers may be in a range of about 100 to about 10,000. In an embodiment of the present invention a weight average molecular weight thereof may be in a range of about 5,000 to about 1,000,000.

[Formula 36]

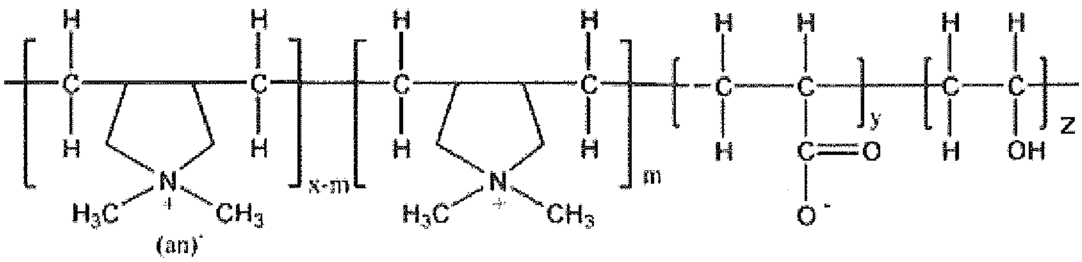

or

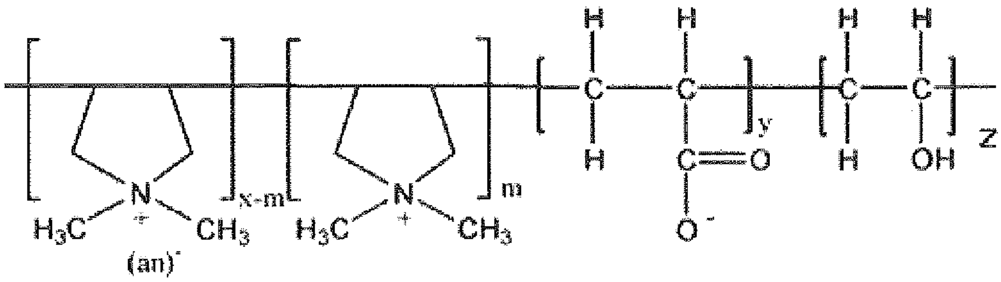

[Formula 37]

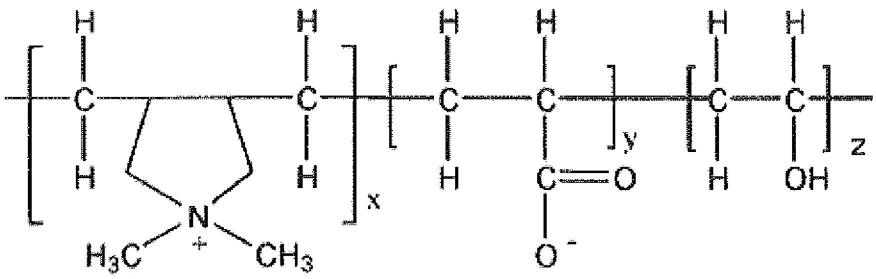

or

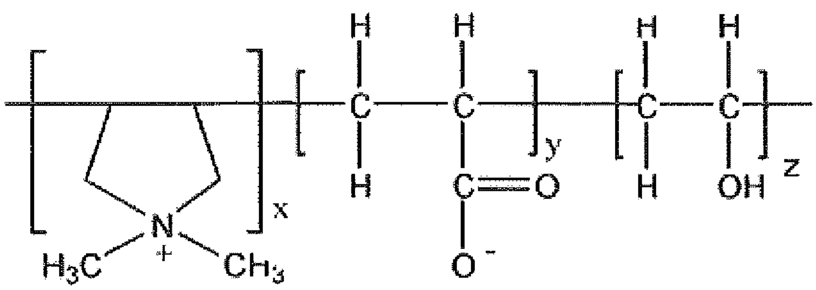

[Formula 38]

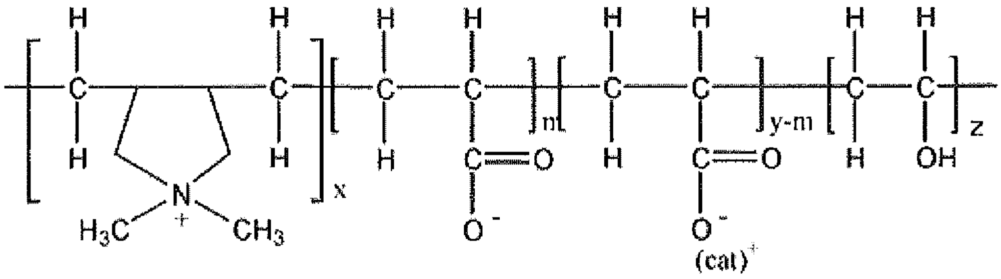

or

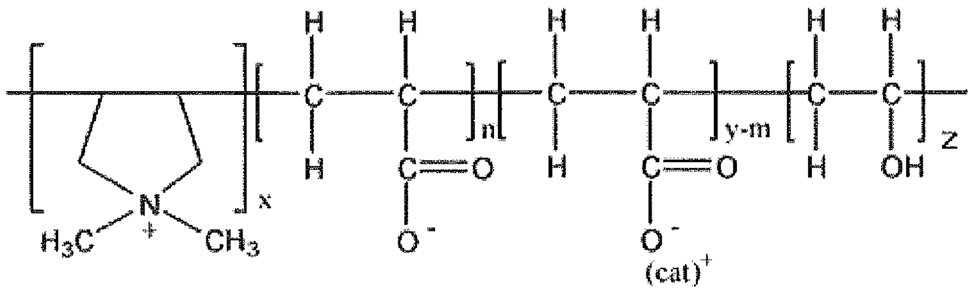

[Formula 39]

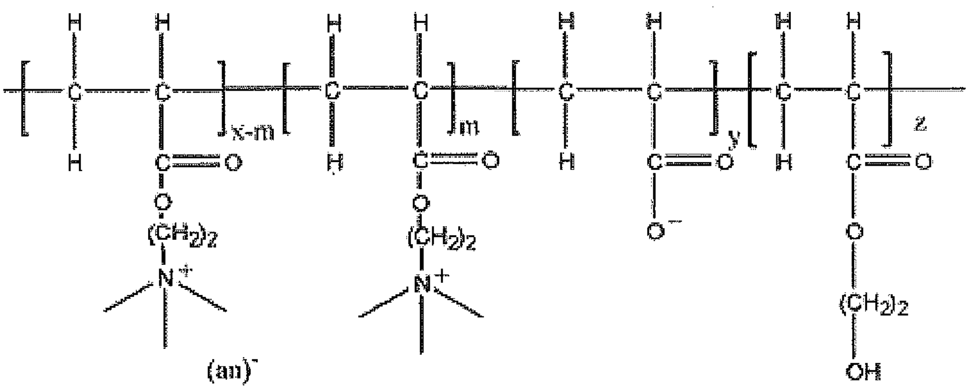

[Formula 40]

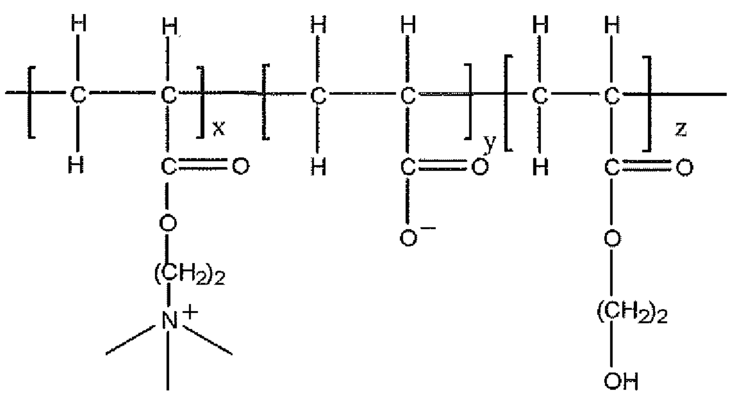

[Formula 41]

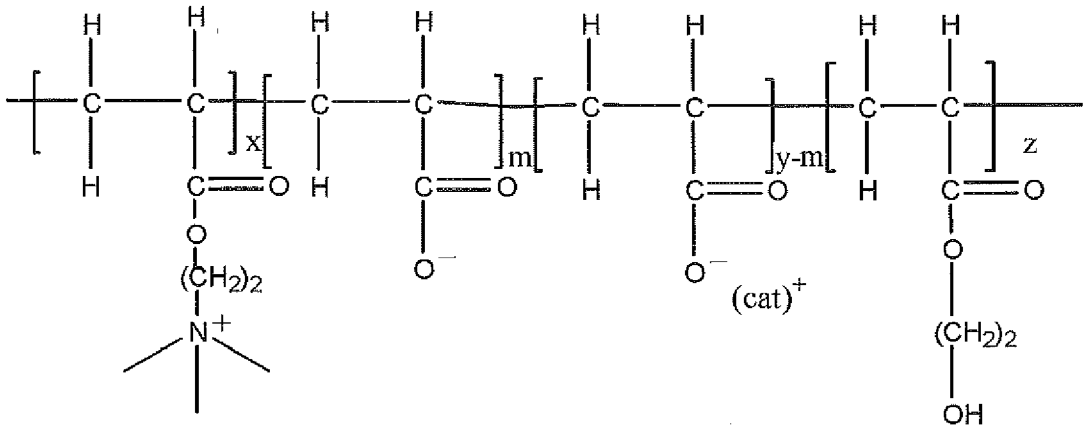

[Formula 42]

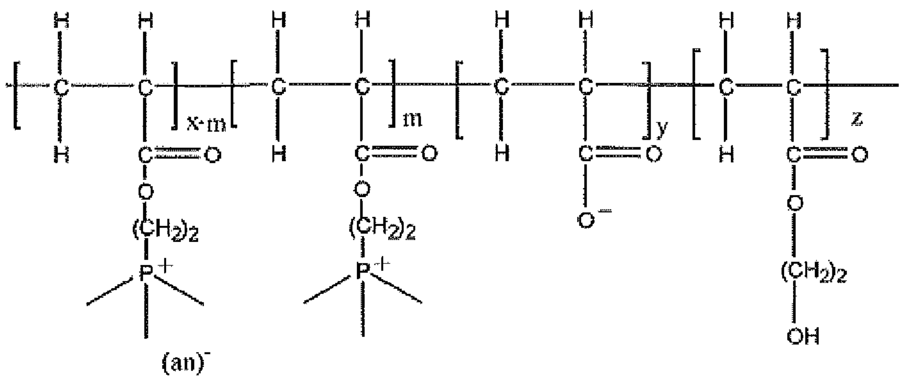

[Formula 43]

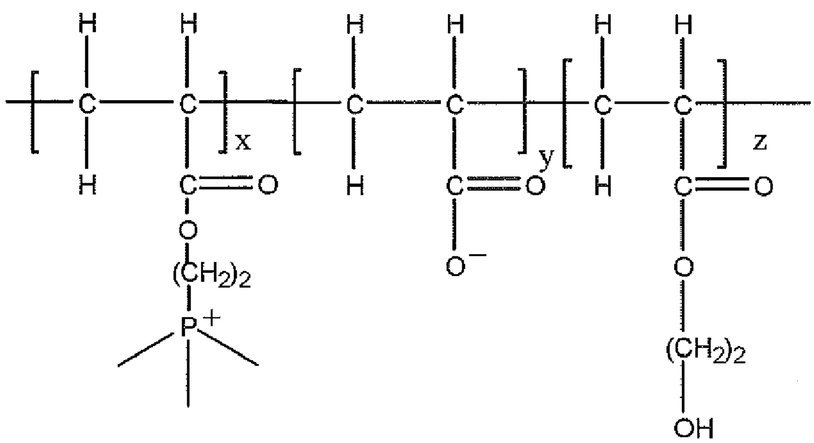

[Formula 44]

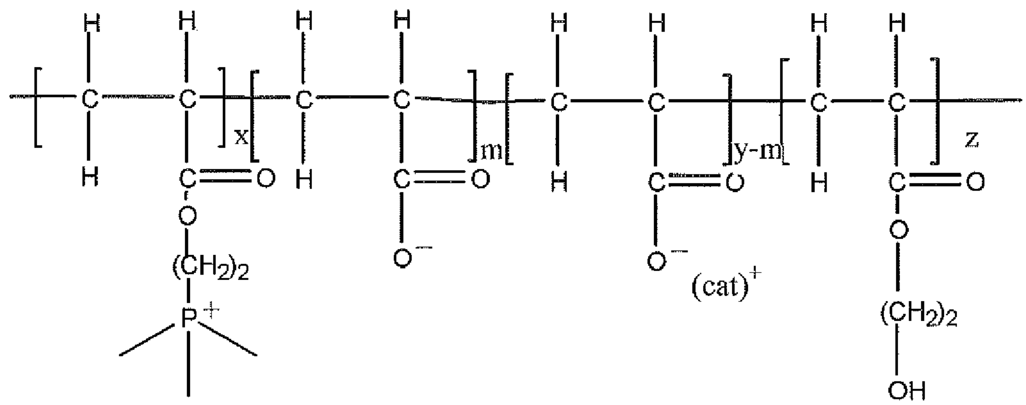

In Formulae 36 (h=z), 39 and 42, $x > y$, $m = y$, $0.25 < x \leq 0.94$, $0.05 \leq y < 0.50$, $0.01 \leq z \leq 0.5$, and $x + y + z = 1$, preferably $0.35 < x \leq 0.74$, $0.20 \leq y < 0.45$, $0.05 \leq z \leq 0.2$.

In Formulae 38 (h=z), 41 and 44, $x < y$, $m = x$, $0.05 \leq x < 0.50$, $0.25 < y \leq 0.94$, $0.01 \leq z \leq 0.5$, and $x + y + z = 1$, preferably $0.20 < x \leq 0.40$, $0.5 \leq y < 0.8$, $0.05 \leq z \leq 0.2$.

In Formulae 37 (h=z), 40 and 43, $x = y$, $0.25 < x \leq 0.495$, $0.25 \leq y < 0.495$, $0.01 \leq z \leq 0.5$, and $x + y + z = 1$, preferably $0.35 \leq x < 0.45$, $0.35 \leq y < 0.45$ and $0.1 \leq z \leq 0.3$.

The present invention also provides a polymer represented by Formula 22a, a polymer represented by Formula 16a, a polymer represented by Formula 27a, or a polymer represented by Formula 26a, a polymer represented by Formula 29a,

[Formula 22a]

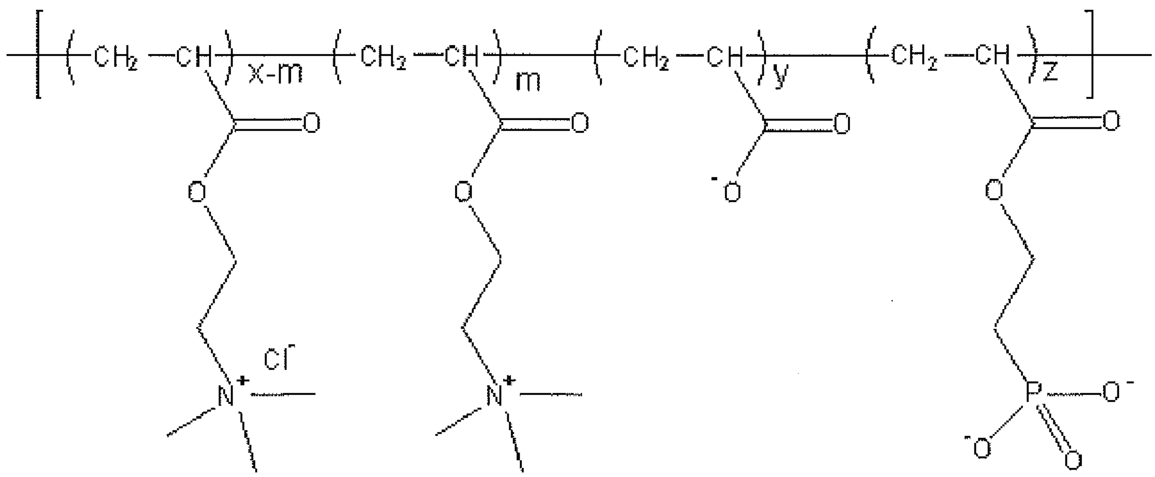

in Formula 22a, m is 0.4, x is 0.7, y is 0.2, and z is 0.1, [Formula 16a]

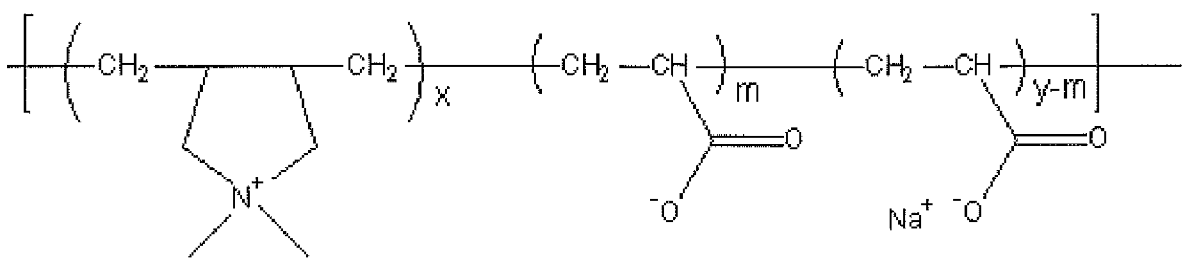

in Formula 16a, x is 0.3, y is 0.7, and m is 0.3,

[Formula 27a]

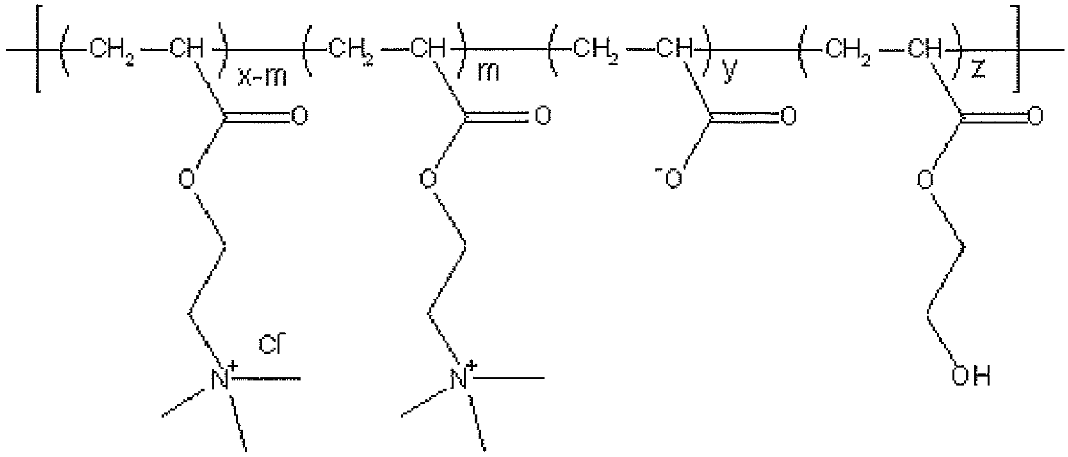

in Formula 27a, m is 0.4, x is 0.5, y is 0.4, and z is 0.1.

[Formula 26a]

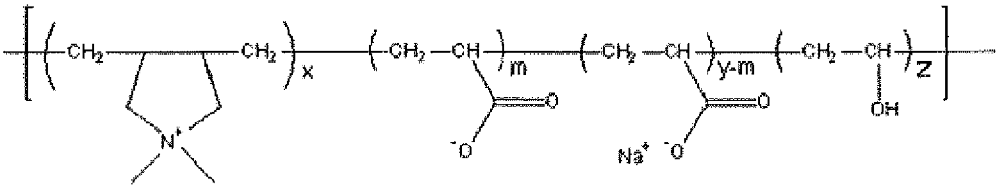

in Formula 26a, m is 0.3, x is 0.3, y is 0.6, and z is 0.1,

[Formula 29a]

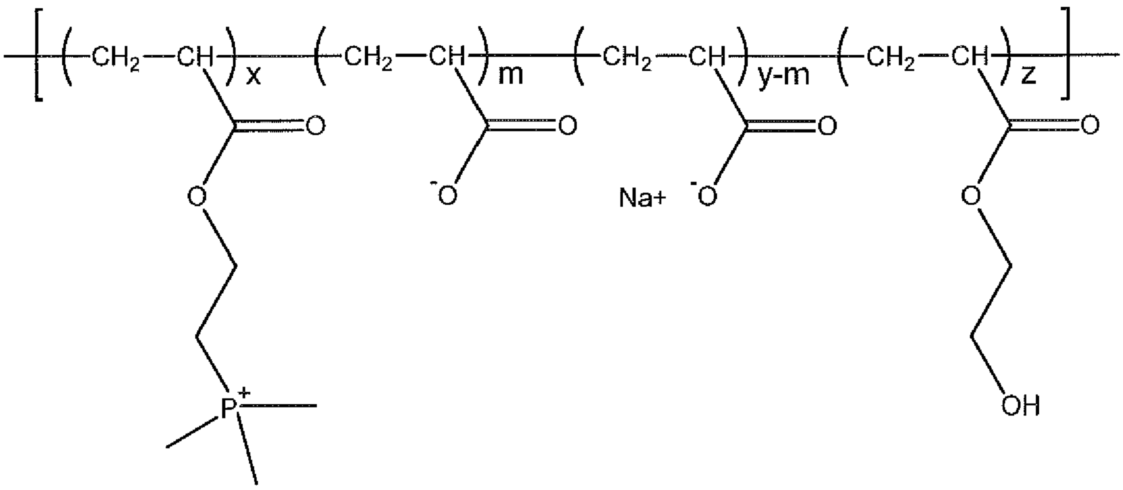

in Formula 29a, m is 0.3, x is 0.3, y is 0.6, and z is 0.1.

In an embodiment of the present invention, the degree of polymerization of the polymers represented by Formula 22a, Formula 16a, Formula 27a, Formula 26a, and Formula 29a may be in a range of about 100 to about 10,000. For each of these polymers the degree of polymerization relates to the number of times the unit encompassed by the "[...]" is repeated.

The polymer according to an embodiment of the present invention may further include a functional group, in addition to the cationic group and the anionic group. Examples of the functional group are a carboxyl group, a hydroxyl group, an amine group, an amid group, an imide group, a nitrile group, a sulfone group, a halogen group, a silane group, and a silicon group (including a siloxane group), e.g. Si(R')(R")(R"'), R', R", and R"' may each be independently C1-C20 alkyl group, C1-C20 alkoxy group or a halogen atom.

The functional group of the polymer may be used in a mole of 0.5 mol or lower based on 1 mole of a total mole of the cationic group and the anionic group. For example, a mole of the functional group may be in a range of 0.01 to 0.5 mol.

For use as the polymer, two or more polymers that have the same cationic and anionic groups at the same mole ratio of the cationic group and the anionic group and that have different molecular weight distributions may be used in combination.

For use as the polymer, two or more polymers that have the same cationic and anionic groups at different mole ratios, or two or more polymers that have the same cationic groups and different anionic groups may be used in combination.

In an embodiment of the present invention, a process for producing the above-described polymers is provided. The process comprises the steps of:

polymerizing a first repeating unit having a cationic group and a second repeating unit having an anionic group;
removing the respective counter ions, $(an)^-$ and $(cat)^+$, from the polymer in the form of (an)(cat) using a solvent to remove (an)(cat) as a salt from the polymer.

In an embodiment of the present invention the solvent may include at least one selected from methanol, ethanol, formamide, glycerin, propylene glycol, and N-methylpyrrolidone (NMP), or may include at least one diluted solvent selected from the above list of solvents prepared by diluting these solvents in another solvent (for example, water, acetone, low alcohol, or the like).

In an embodiment of the present invention an hydrolysis step is carried out after the polymerizing step. The hydrolysis may be carried out by any suitable conventional methods. In a preferred embodiment the hydrolysis is basic hydrolysis, preferably using NaOH.

In an embodiment of the present invention the counter ion removal step is carried out by adding methanol. In Preparation Examples 1-5, the amount of methanol was 10L.

In an embodiment of the present invention, before addition of the reaction mixture (or reaction product) to the methanol so as to form a precipitate, the reaction mixture includes a solid content with 1 to 20 parts by weight, for example 1 to 5 parts by weight, based on 100 parts by weight of the reaction mixture.

In an embodiment of the present invention, the amount of methanol is in a range of about 300 to about 30,000 parts by weight, for example, about 500 to 20,000 parts by weight based on 100 parts by weight of the reaction mixture.

In a preferred embodiment of the present invention the precipitate is filtered, cleaned, and dried. In an embodiment of the present invention the solvent addition step and the subsequent processes are repeated as necessary, optionally up to 2 times.

An example of the removing of the salt (an)(cat)(for example NaCl) by using a solvent is as follows: a reaction product obtained from the polymerization is added to a solvent, such as methanol, to obtain a precipitate, and the precipitate is filtered, cleaned, and dried.

In an embodiment of the present invention the polymerization is carried out using a conventionally known polymer polymerization method, such as radical polymerization, anionic polymerization, cationic polymerization, or condensation polymerization

If the non-ionic repeating unit is present, it is included in the polymerization step.

In an embodiment of the present invention the starting materials are mixed in a molar ratio that yields values of x, y, z and m as recited above, preferably the molar ratios of the starting material are within the relevant parameters that define x, y, z and m.

The polymer may be used as a binder of a lithium secondary battery.

When the polymer is used as a binder of a secondary battery, inner resistance of a battery may decrease, and thus, a lithium secondary battery with increased capacitance retention ratio may be manufactured.

As a binder of a lithium secondary battery, the polymer may be used alone, or together with another binder to improve dispersibility of an active material, a binding force of the active material with respect to a current collector, and elasticity.

Examples of the additionally used binder are sodium-carboxymethylcellulose (Na-CMC), alginic acid derivative, chitosan derivative, polyvinyl alcohol (PVA), polyacrylic acid (PAA), polysodiumacrylate (Na-PAA), polyvinylpyrrolidone (PVP), polyacrylamide (PAAm), aqueous dispersion vinylidenefluoride/hexafluoropropylene copolymer(P(VDF-HFP)), aqueous dispersion polyvinylidenefluoride(PVDF), polyacrylonitrile (PAN), aqueous dispersion styrene-butadiene rubber (SBR), aqueous dispersion butadiene rubber (BR), modified products thereof, for example, a polymer formed by substituting the forgoing materials with fluoride, a polymer formed by substituting back bone of the forgoing materials with sulfonic group (-SO2-), and a random copolymer, a block copolymer, and an alternating copolymer of these materials with other polymers, and the additionally used binder is not limited thereto and may be any one of various materials that are used in the art as a binder.

When the polymer according to an embodiment of the present invention is used as a first binder and additionally, a second binder are mixed, an amount of the first binder may be in a range of about 20 to about 100 parts by weight based on 100 parts by weight of the total weight of the first binder and the second binder.

When the polymer is used as a binder, the polymer may be used in its original powder state. Alternatively, the polymer may be used in the form of a binder composition obtained by dissolving or dispersing the polymer in a solvent. The amount of the polymer is between 0.2 and 100 weight %, optionally 0.2 to 25 weight %, optionally 1 to 20 weight%, based on the total weight of the electrode binder composition and, optionally, the electrode binder composition contains a solvent that optionally comprises water. Preferably, the binder composition may be used in a 1 to 20 wt% polymer aqueous solution prepared by dissolving the polymer in water and a further solvent.

In an embodiment of the present invention, the binder composition may further include an additive to achieve additional characteristics improvement.

The additive may be a dispersant, a thickener, a conductive agent, and a filler.

These additives may be used after being mixed with a binder composition for forming an electrode when the binder composition is prepared. Alternatively, these additives may be separately prepared for independent use. These additives may be dependent upon an active material and a binder, and in some cases, may not be used.

An amount of the additive may vary according to an active material, a binder, and the additive in use, and may be in a range of about 0.1 to about 10 wt% based on the binder composition excluding the solvent.

A dispersant may be selected from substances that improve dispersibility of an electrode active material, a negative active material, and a conductive agent in slurry. The dispersant may be selected from a cationic dispersant, an anionic dispersant, and a non-ionic dispersant, and may include at least one selected from hydrocarbon of which lipophilic parts consist of 5 to 20 carbon atoms, acryl oligomer, ethylene oxide oligomer, propylene oxide oligomer, ethylene oxide oligomer, propylene oxide oligomer, and urethane oligomer.

A thickener may be added to slurry when a viscosity of the binder composition is low to ease coating on a current collector. The thickener may include at least one selected from carboxymethyl cellulose, carboxyethyl cellulose, ethyl cellulose, hydroxy methyl cellulose, hydroxy ethyl cellulose, hydroxy propyl cellulose, and polyvinylalcohol.

A conductive agent is a component for improving a conduction path of an electrode, and is used to provide conductivity to an electrode. The conductive agent may be any one of various electron conducting materials that do not cause any chemical change in a formed battery. Examples thereof are natural graphite, artificial graphite, carbon nanofiber, carbon black, acetylene black, ketjen black, and metal powder of copper, nickel, aluminum, or silver.

A filler is an auxiliary component that enhances strength of a binder to suppress expansion of an electrode, and may include at least one selected from fibrous materials, such as glass fiber, carbon fiber, or metal fiber.

As mentioned above, in an embodiment of the present invention as a solvent of the binder composition, water may be used. However, according to another embodiment, at least one selected from N, N-dimethylformamide, N.N-dimethylacetamide, methylethylketone, cyclohexanone, ethyl acetate, butyl acetate, cellosolveacetate, propylene glycol monomethylether acetate, methylcellosolve, butylcellosolve, methylcarbitol, butylcarbitol, propylene glycol monomethylether, diethyleneglycoldimethylether, toluene, and xylene may be used as the solvent.

An amount of the solvent is not particularly limited as long as the prepared composition has a sufficient viscosity.

The binder composition is prepared by combining the components described above, and then, the binder composition is mixed with an electrode active material to prepare an active material layer composition.

When the electrode active material is a negative active material, a negative active material having a volumetric expansion of 150 to 200% may be used.

The negative active material may be selected from Si, $SiO_x$($0 < x < 2$, for example 0.5 to 1.5), Sn, $SnO_2$, a silicon-containing metal alloy, and a mixture thereof. As a metal for forming silicon-containing metal alloy, at least one of Al, Sn, Ag, Fe, Bi, Mg, Zn, in, Ge, Pb, and Ti may be used.

The negative active material may include a lithium-alloyable metal/metalloid, an alloy thereof, or an oxide thereof. Examples of the lithium-alloyable metal/metalloid are Si, Sn, Al, Ge, Pb, Bi, Sb, an alloy of Si and Y (the Y is an alkali metal, an alkali earth metal, a Group 13 element, a Group 14 element, a transition metal, a rare-earth element, or a combination thereof element and is not Si), and Sn-Y alloy (the Y is an alkali metal, an alkali earth metal, a Group 13 element, a Group 14 element, a transition metal, a rare-earth element, or a combination thereof element and is not Sn). The element Y may be Mg, Ca, Sr, Ba, Ra, Sc, Y, Ti, Zr, Hf, Rf, V, Nb, Ta, Db, Cr, Mo, W, Sg, Tc, Re, Bh, Fe, Pb, Ru, Os, Hs, Rh, Ir, Pd, Pt, Cu, Ag, Au, Zn, Cd, B, Al, Ga, Sn, In, Ti, Ge, P, As, Sb, Bi, S, Se, Te, Po, or a combination thereof. Examples of an oxide of the lithium-alloyable metal/metalloid are a lithium titanium oxide, a vanadium oxide, a lithium vanadium oxide, $SnO_2$, and $SiO_x$($0<x<2$).

For example, the negative active material may include at least one element selected from a Group 13 element,

a Group 14 element, and a Group 15 element.

For example, the negative active material may include at least one element selected from Si, Ge, and Sn.

The negative active material may be a mixture of graphite and at least one selected from silicon, silicon oxide, and silicon-containing metal alloy or a composite of graphite and at least one selected from silicon, silicon oxide, and silicon-containing metal alloy.

For example, the negative active material may have a particle shape or a nano-sized nanostructure. For example, the negative active material may have various shapes, such as a nanoparticle, a nanowire, a nanorod, a nanotube, or a nanobelt.

An example of a method of manufacturing a negative electrode is described below.

For example, a negative active material composition including a negative active material, a conducting agent and a binder may be molded in a certain shape, or the negative active material composition may be coated on a current collect, such as a copper foil.

In detail, a negative active material composition including a negative active material, a conductive agent, a binder, and a solvent which are mixed is prepared. The negative active material composition may be directly coated on a metal current collector to complete the manufacture of a negative electrode. Alternatively, the negative active material composition may be cast on a separate support and then a film separated from the support is laminated on a metal current collector, thereby completing the manufacture of an anode. The negative electrode may also be formed by using other methods.

An amount of the binder may be in a range of about 1 to about 10 parts by weight based on 100 parts by weight of the total weight of the negative active material composition. For example, an amount of the negative active material may be in a range of about 1 to about 3 parts by weight based on 100 parts by weight of the total weight of the negative active material composition.

The coating of the negative active material composition on a current collector may be performed by screen printing, spray coating, coating using doctor blade, Gravure coating, dip coating, silk screening, painting, or coating using slot die, and a coating method may be appropriately selected according to viscosity of the negative active material composition.

The current collector may be formed in a thickness of about 3 to about 20 $\mu$m.

The negative active material composition is coated on a current collector and/or substrate, and then, a heat treatment is performed thereon at the temperature of about 80 to about 120°C, followed by drying to remove the solvent used, and then, the result is roll-pressed and dried, thereby completing the manufacture of an anode.

During the heat treatment, water as the solvent is removed from the electrode. Accordingly, when drying is performed at the temperature described above, bubble formation on the surface of an electrode may be suppressed and a formed electrode may have a homogeneous surface. The drying may be performed in the air atmosphere.

Following the heat treatment, another heat treatment may be performed in vacuum conditions. The latter heat treatment may be performed at the temperature of about 100 to about 200°C at a vacuum degree of 1 $x10^{-4}$ to 1 $x10^{-6}$ torr.

The negative active material composition may additionally include, in addition to the negative active material, other carbonaceous negative active materials.

For example, a carbonaceous negative active material may be a crystalline carbon, amorphous carbon or a mixture thereof. The crystalline carbon may be natural or artificial graphite that is amorphous, tabular, flake, spherical, or fibrous, and the amorphous carbon may be soft carbon (cold calcined carbon) or hard carbon, meso-phase pitch carbide, calcined corks, graphene, carbon black, fullerene soot, carbon nanotube, or carbon fiber. However, the crystalline carbon and the amorphous carbon are not limited thereto and may be any one of various materials that are used in the art.

Examples of the conductive agent are at least one of acetylene black, ketjen black, natural graphite, artificial graphite, carbon black, carbon fiber, and metal powder and metal fiber of copper, nickel, aluminum, or silver, and conductive materials, such as polyphenylene derivatives. However, the conductive agent is not limited thereto, and may be any one of various materials that are used as a conductive agent in the art.

The negative electrode may additionally include a typical binder in addition to the binders described above. Examples of the typical binder are sodium-carboxymethylcellulose (Na-CMC), alginic acid derivative, chitosan derivative, polyvinyl alcohol (PVA), polyacrylic acid (PAA), polysodiumacrylate (Na-PAA), polyvinylpyrrolidone (PVP), polyacrylamide (PAAm), aqueous dispersion vinylidenefluoride/hexafluoropropylene copolymer(P(VDF-HFP)), aqueous dispersion polyvinylidenefluoride(PVDF), polyacrylonitrile (PAN), aqueous dispersion styrene-butadiene rubber (SBR), aqueous dispersion butadiene rubber (BR), modified products thereof, for example, a polymer formed by substituting the forgoing materials with fluoride, a polymer formed by substituting back bone of the forgoing materials with sulfonic group ($-SO_2-$), and a random copolymer, a block copolymer, and an alternating copolymer of these materials with other polymers, and the typical binder is not limited thereto and may be any one of various materials that are used in the art as a binder.

The current collector may not be particularly limited as long as it does not cause any chemical change in a secondary battery and has conductivity, and examples of a material for forming the current collector are copper, stainless steel, aluminum, nickel, titanium, calcined carbon, and copper or stainless steel that is surface treated with carbon,

nickel, titanium, silver, and an aluminum-cadmium alloy.

In addition, a fine uneven structure may be formed on the current collect to increase a binding force with respect to an electrode active material, and the current collector may have various shapes, such as film, sheet, foil, net, porosity, foam, or non-woven shape.

As for a positive electrode, a compound (lithiated intercalation compound) that reversibly performs intercalation and deintercalation of lithium may be used as a positive active material.

The positive active material may include at least one selected from lithium cobalt oxides represented by $LiCoO_2$; lithium nickel oxides represented by $LiNiO_2$; lithium manganese oxides represented by Li1+x$Mn_2$-x$O_4$ (wherein, x is in a range of 0 to 0.33)), $LiMnO_3$, $LiMn_2O_3$, or $LiMnO_2$; lithium copper oxides represented by $Li_2CuO_2$; lithium iron oxides represented by $LiFe_3O_4$; lithium vanadium oxides represented by $LiV_3O_8$; copper vanadium oxides represented by $Cu_2V_2O_7$; vanadium oxides represented by $V_2O_5$; Ni site-type lithium nickel oxides represented by $LiNi_1$-xMx$O_2$ (wherein M is Co, Mn, Al, Cu, Fe, Mg, B, or Ga, and x = 0.01 to 0.3); lithium manganese composite oxides represented by $LiMn_2$-x$M_xO_2$ (wherein M is Co, Ni, Fe, Cr, Zn, or Ta, and x is in a range of 0.01 to 0.1), or $Li_2Mn_3MO_8$ (wherein M is Fe, a Co, Ni, Cu, or Zn); lithium manganese oxides formed by substituting some Li with an alkali earth metal ion, represented by $LiMn_2O_4$; disulfide compounds; and iron molybdenum oxides represented by $Fe_2(MoO_4)_3$.

The positive active material may be, for example, a mixture of lithium cobalt oxide and lithium nickel cobalt manganese oxide.

For use as a binder for the positive electrode, the binder according to an embodiment of the present invention may be used, or any one of various materials that enable positive active material particles to attach to each other and that enable the positive active material to attach to a current collector may be used. The positive electrode binder may include at least one selected from polyvinylalcohol, carboxymethylcellulose, hydroxypropylcellulose, diacetylcellulose, polyvinylchloride, carboxylated polyvinylchloride, polyvinylfluoride, ethylene oxide-containing polymer, polyvinylpyrrolidone, polyurethane, polytetrafluoroethylene, polyvinylidene fluoride, polyethylene, polypropylene, styrene-butadiene rubber, acrylated styrene-butadiene rubber, epoxy resin, and nylon.

As the positive active material, at least one selected from a lithium cobalt oxide, a lithium nickel cobalt, manganese oxide, a lithium nickel cobalt aluminum oxide, a lithium iron phosphate oxide, and lithium manganese oxide may be used. However, the positive active material is not limited thereto. For example, any one of various materials that are used as a positive active material in the art may be used.

For example, the positive active material may be a compound represented by one of $Li_aA_{1-b}B_bD_2$(wherein $0.90 \leq a \leq 1.8$, and $0 \leq b \leq 0.5$), $Li_aE_{1-b}B_bO_{2-c}D_c$(wherein $0.90 \leq a \leq 1.8$, $0 \leq b \leq 0.5$, and $0 \leq c \leq 0.05$), $LiE_{2-b}B_bO_{4-c}D_c$(wherein $0 \leq b \leq 0.5$, and $0 \leq c \leq 0.05$), $Li_aNi_{1-b-c}Co_bB_cO_\alpha$(wherein $0.90 \leq a \leq 1.8$, $0 \leq b \leq 0.5$, $0 \leq c \leq 0.05$, and $0 < \alpha \leq 2$), $Li_aNi_{1-b-c}Co_bB_cO_{2-\alpha}F_\alpha$(wherein $0.90 \leq a \leq 1.8$, $0 \leq b \leq 0.5$, $0 \leq c \leq 0.05$, and $0 < \alpha < 2$), $Li_aNi_{1-b-c}Co_bB_cO_{2-\alpha}F_2$(wherein $0.90 \leq a \leq 1.8$, $0 \leq b \leq 0.5$, $0 \leq c \leq 0.05$, and $0 < \alpha < 2$), $Li_aNi_{1-b-c}Mn_bB_cO_\alpha$(wherein $0.90 \leq a \leq 1.8$, $0 \leq b \leq 0.5$, $0 \leq c \leq 0.05$, and $0 < a \leq 2$), $Li_aNi_{1-b-c}Mn_bB_cO_{2-\alpha}F_\alpha$(wherein $0.90 \leq a \leq 1.8$, $0 \leq b \leq 0.5$, $0 \leq c \leq 0.05$, and $0 < \alpha < 2$), $Li_aNi_{1-b-c}Mn_bB_cO_{2-\alpha}F_2$(wherein $0.90 \leq a \leq 1.8$, $0 \leq b \leq 0.5$, $0 \leq c \leq 0.05$, and $0 < \alpha < 2$), $Li_aNi_bE_cG_dO_2$(wherein $0.90 \leq a \leq 1.8$, $0 \leq b \leq 0.9$, $0 \leq c \leq 0.5$, and $0.001 \leq d \leq 0.1$), $Li_aNi_bCo_cMn_dGeO_2$(wherein $0.90 \leq a \leq 1.8$, $0 \leq b \leq 0.9$, $0 \leq c \leq 0.5$, $0 \leq d \leq 0.5$, and $0.001 \leq e \leq 0.1$), $Li_aNiG_bO_2$(wherein $0.90 \leq a \leq 1.8$, and $0.001 \leq b \leq 0.1$); $Li_aCoG_bO_2$(wherein $0.90 \leq a \leq 1.8$, and $0.001 \leq b \leq 0.1$), $Li_aMnG_bO_2$(wherein $0.90 \leq a \leq 1.8$, and $0.001 \leq b \leq 0.1$), $Li_aMn_2G_bO_4$(wherei $0.90 \leq a \leq 1.8$, and $0.001 \leq b \leq 0.1$), $QO_2$, $QS_2$, $LiQS_2$, $V_2O_5$, $LiV_2O_5$, $LiIO_2$, $LiNiVO_4$, $Li_{(3-f)}J_2(PO_4)_3(0 \leq f \leq 2)$, $Li_{(3-f)}Fe_2(PO_4)_3(0 \leq f \leq 2)$, and $LiFePO_4$.

In the formulae above, A is Ni, Co, Mn, or a combination thereof; B is Al, Ni, Co, Mn, Cr, Fe, Mg, Sr, V, a rare-earth element, or a combination thereof; D is O, F, S, P, or a combination thereof; E is Co, Mn, or a combination thereof; F is F, S, P, or a combination thereof; G is Al, Cr, Mn, Fe, Mg, La, Ce, Sr, V, or a combination thereof; Q is Ti, Mo, Mn, or a combination thereof; I is Cr, V, Fe, Sc, Y, or a combination thereof; and J is V, Cr, Mn, Co, Ni, Cu, or a combination thereof.

These compounds may have a coating layer on their surfaces, or these compounds may be mixed with a compound having a coating layer. The coating layer may include an oxide of a coating element, a hydroxide of a coating element, an oxyhydroxide of a coating element, an oxycarbonate of a coating element, or a hydroxycarbonate of a coating element. These compounds that form the coating layer may be amorphous or crystalline. As a coating element included in the coating layer, Mg, Al, Co, K, Na, Ca, Si, Ti, V, Sn, Ge, Ga, B, As, Zr, or a mixture thereof may be used. The coating layer may be formed by using any one of various coating methods that are performed using the compounds and the elements and do not affect properties of the positive active material (For example, spray coating, immersion, or the like). These coating methods are obvious to one of ordinary skill in the art and thus, is not described in detail herein.

Examples thereof are $LiNiO_2$, $LiCoO_2$, $LiMn_xO_{2x}$(x=1, 2), $LiNi_{1-x}Mn_xO_2$($0<x<1$), $LiNi_{1-x-y}Co_xMn_yO_2$ ($0 \leq x \leq 0.5$, $0 \leq y \leq 0.5$), $LiFeO_2$, $V_2O_5$, TiS, and MoS.

A positive active material composition may include a conductive agent, a binder. and a solvent, which may be the same as those used in the negative active material composition.

A method of manufacturing a positive electrode by using the positive active material may be the same as the

manufacturing method for a negative electrode by using a negative active material, except that the positive active material is used instead of the negative active material.

Amounts of the positive active material, the conductive agent, and the solvent may be at the same levels as those of a typical lithium secondary battery. According to use and structure of a lithium secondary battery, at least one of the conductive agent and the solvent may not be used. In addition, in the procedure of manufacturing of a positive electrode, a dispersant, a thickener, or a filler may be additionally used.

Another aspect of the present invention provides a secondary battery including the electrode negative electrodes. The secondary battery includes the negative electrode, the positive electrode, a separator, and a lithium salt-containing non-aqueous electrolyte.

The separator is interposed between the positive electrode and the negative electrode, and for use as the separator, an insulating thin film having high ion permeability and mechanical strength may be used.

Regarding the separator, a pore size may be in a range of about 0.01 to about 10 $\mu$m, and a thickness may be in a range of about 5 to about 20 $\mu$m. The separator may be formed of, for example, chemical-resistant and hydrophobic olefin-based polymers, such as polypropylene; glass fiber; or a sheet or non-woven fabric formed from polyethylene. When a solid electrolyte, such as a polymer, is used as an electrolyte, the solid electrolyte may also act as a separator.

Examples of an olefin-based polymer that constitutes the separator, are polyethylene, polypropylene, polyvinylidene fluoride, and multi layers of two or more of these. For example, a mixed multilayer, such as a polyethylene/polypropylene two-layer separator, a polyethylene/polypropylene/polyethylene three-layer separator, or a polypropylene/polyethylene/polypropylene three-layer separator, may be used.

The lithium salt-containing non-aqueous electrolyte consists of a non-aqueous electrolyte and a lithium salt.

The non-aqueous electrolyte may be a non-aqueous electrolytic solution, an organic solid electrolyte, or an inorganic solid electrolyte.

An example of the non-aqueous electrolytic solution is an aprotic solvent, and examples of the aprotic solvent as the non-aqueous electrolytic solution are N-methyl-2-pyrrolidinone, propylene carbonate, ethylene carbonate, butylene carbonate, dimethyl carbonate, diethyl carbonate, gamma-butyrolactone, 1,2-dimethoxy ethane, tetrahydroxyfurane, 2-methyl tetrahydrofurane, dimethylsulfoxide, 1,3-dioxolane, formamide, dimethyl formamide, acetonitrile, nitromethane, methyl formate, methyl acetate, triester phosphate, trimethoxy methane, dioxolane derivative, sulfolane, methyl sulforane, 7,3-dimethyl-2-imidazolidinone, propylene carbonate derivative, tetrahydrofurane derivative, ether, methyl propionate, ethyl propionate, and fluoroethylene carbonate (FEC).

Examples of the organic solid electrolyte are a polyethylene derivative, a polyethylene oxide derivative, a polypropylene oxide derivative, a phosphate ester polymer, poly agitation lysine, polyester sulfide, polyvinyl alcohol, poly fluoro vinylidene, an ionic dissociable group containing polymer.

Examples of the inorganic solid electrolyte are nitrates, halides, and sulfates of Li, such as $Li_3N$, LiI, $Li_5NI_2$, $Li_3N$-LiI-LiOH, $Li_2SiS_3$, $Li_4SiO_4$, $Li_4SiO_4$-LiI-LiOH, or $Li_3PO_4$-$Li_2S$-$SiS_2$.

Examples of the lithium salt are, as a material that easily dissolves in the non-aqueous electrolyte, LiCl, LiBr, LiI, LiClO4, LiBF4, LiB10Cl10, LiPF6, LiCF3SO3, LiCF3CO2, LiAsF6, LiSbF6, LiAlCl4, a CH3SO3Li, a CF3SO3Li, (CF3SO2)2NLi, chloroborane lithium, low aliphatic lithium carbonate, and lithium tetrakis(phenyl) borate. In addition, to improve charging and discharging characteristics and fire retardancy, the non-aqueous electrolyte may further include pyridine, triethylphosphite, triethanolamine, cyclic ether, ethylene diamine, n-glyme, hexa triamide phosphate, a nitrobenzene derivative, sulfur, quinine imine dye, N-substituted oxazolidinone, N,N-substituted imidazolidine, ethylene glycol dialkyl ether, ammonium salt, pyrrole, and 2-methoxy ethanol, trichloride aluminum. According to another embodiment, a halogen-containing solvent, such as tetrachloride carbon or trifluoride ethylene, may be further included to provide an incombustible property, and according to another embodiment, carbon dioxide gas may be further included to improve high-temperature preservation characteristics.

Referring to FIG. 1, a lithium secondary battery 1 includes a positive electrode 3, a negative electrode 2, and a separator 4. The positive electrode 3, the negative electrode 2, and the separator 4 may be wound or folded to be placed in a battery case 5. Subsequently, an organic electrolytic solution is injected into the battery case 5, and sealed with a cap assembly 6, thereby completing the manufacture of the lithium secondary battery 1. The battery case may be cylindrical, rectangular, thin film-shaped, or the like. For example, the lithium secondary battery may be a thin film-shaped battery. For example, the lithium secondary battery may be a lithium ion battery.

The lithium secondary battery may have a charging voltage of 4.3 V or more.

The separator may be interposed between the positive electrode and the negative electrode to form a battery assembly. A plurality of battery assemblies may be stacked in a bi-cell structure and then impregnated with an organic electrolytic solution, and the obtained result is housed in a pouch, followed by sealing, thereby completing the manufacture of a lithium ion polymer battery.

Also, a plurality of the battery assemblies may be stacked to form a battery pack, and the battery pack may be used in various devices that require high capacitance and high power output. For example, the battery assemblies may be used in a notebook computer, a smartphone, an electric vehicle, or the like.

In particular, due to its excellent high-rate characteristics and lifespan characteristics, the lithium secondary battery may be suitable for use in an electric vehicle (EV), for example, a hybrid car, such as a plug-in hybrid electric vehicle (PHEV).

Substituents in the formulae above may be defined as follows.

As used herein, the term "alkyl" refers to a fully saturated branched or unbranched (or straight chain or linear) hydrocarbon moiety.

Examples of the alkyl group used herein include, but are not limited to, methyl, ethyl, n-propyl, iso-propyl, n-butyl, sec-butyl, iso-butyl, tert-butyl, n-pentyl, isopentyl, neopentyl, n-hexyl, 3-methylhexyl, 2,2-dimethylpentyl, 2,3-dimethylpentyl, and n-heptyl.

At least one hydrogen atom of the alkyl group may be substituted with a halogen atom, a C1-C30 alkyl group substituted with a halogen atom (for example, $CCF_3$, $CHCF_2$, $CH_2F$ and $CCl_3$), a C1-C30 alkoxy, a C2-C30 alkoxyalkyl, a hydroxy group, a nitro group, a cyano group, an amino group, an amidino group, a hydrazine, a hydrazone, a carboxyl group or a salt thereof, a sulfonyl group, a sulfamoyl, a sulfonic acid group or a salt thereof, a phosphoric acid or a salt thereof, a C1-C30 alkyl group, a C2-C30 alkenyl group, a C2-C30 alkynyl group, a C1-C30 heteroalkyl group, a C6-C30 aryl group, a C7-C30 arylalkyl group, a C6-C30 heteroaryl group, a C7-C30 heteroarylalkyl group, a C6-C30 heteroaryloxy group, a C6-C30 heteroaryloxyalkyl group, or a C6-C30 heteroarylalkyloxy group.

As used herein, the term "halogen atom" refers to fluoride, bromide, chloride, or iodide.

As used herein, the term "a C1-C30 alkyl group substituted with a halogen atom" refers to a C1-C30 alkyl group that is substituted with one or more halo groups, and unlimited examples of a C1-C20 alkyl group that is substituted with one or more halo groups are monohaloalkyl, dihaloalkyl, and polyhaloalkyl including perhaloalkyl.

A monohaloalkyl has one iodo, bromo, chloro or fluoro within the alkyl group, and dihaloalky and polyhaloalkyl groups have two or more of the same halo atoms or a combination of different halo groups within the alkyl.

As used herein, the term "alkoxy" refers to alkyl-O-, wherein alkyl is defined herein above. Examples of alkoxy include, but are not limited to, methoxy, ethoxy, propoxy, 2-propoxy, butoxy, tert-butoxy, pentyloxy, hexyloxy, cyclopropyloxy-, cyclohexyloxy- and the like. At least one hydrogen atom of the alkoxy group may be substituted with the same substituent as described above in connection with the alkyl group.

The term "aryl" refers to an aromatic hydrocarbon group that is used alone or in combination and has one or more rings.

The term "aryl" also refers to a group in which an aromatic ring is fused to one or more cycloalkyl rings.

Examples of aryl are, but are not limited to, phenyl, naphthyl, or tetrahydronaphthyl.

At least one hydrogen atom of aryl may be substituted with the same substituent as described above in connection with the alkyl group.

The term "arylalkyl" is an alkyl substituted with aryl. Examples of arylalkyl are benzyl or phenyl-$CH_2CH_2$-

The term "aryloxy" includes an -O-aryl, wherein aryl is defined herein. Examples of aryloxy are phenoxy and the like. An example of an aryloxy is phenoxy. At least one hydrogen atom of aryloxy may be substituted with the same substituent as described above in connection with the alkyl group.

The term "heteroaryl" refers to a monocyclic or bicyclic organic compound that contains one or more hetero atoms selected from N, O, P, and S, and the remaining ring atoms are carbon atoms. The heteroaryl may include, for example, 1 to 5 hetero atoms, and 5 to 10 ring members.
S or N may be oxidized to have various oxidation states.

Examples of a monocyclic heteroaryl groups are thienyl, furyl, pyrrolyl, imidazolyl, pyrazolyl, thiazolyl, isothiazolyl, 1,2,3-oxadiazolyl, 1,2,4-oxadiazolyl, 1,2,5-oxadiazolyl, 1,3,4-oxadiazolyl, 1,2,3-thiadiazolyl, 1,2,4-thiadiazolyl, 1,2,5-thiadiazolyl, 1,3,4-thiadiazolyl, isothiazol-3-yl, isothiazol-4-yl, isothiazol-5-yl, oxazol-2-yl, oxazol-4-yl, oxazol-5-yl, isooxazol-3-yl, isooxazol-4-yl, isooxazol-5-yl, 1,2,4-triazol-3-yl, 1,2,4-triazol-5-yl, 1,2,3-triazol-4-yl, 1,2,3-triazol-5-yl, tetrazolyl, pyrid-2-yl, pyrid-3-yl, 2-pyrazin-2yl, pyrazin-4-yl, pyrazin-5-yl, 2-pyrimidin-2-yl, 4-pyrimidin-2-yl, and 5-pyrimidin-2-yl.

The term "heteroaryl" also refer to a group in which a heteroaromatic ring is fused to one or more aryl, cycloaliphatic, or heterocyclic rings.

Examples of bicyclic heteroaryl are indolyl, isoindolyl, indazolyl, indolizinyl, purinyl, quinolizinyl, quinolinyl, isoquinolinyl, cinnolinyl, phthalazinyl, naphthyridinyl, quinazolinyl, quinaxalinyl, phenanthridinyl, phenathrolinyl, phenazinyl, phenothiazinyl, phenoxazinyl, benzisoqinolinyl, thieno[2,3-b]furanyl, furo[3,2-b]-pyranyl, 5H-pyrido[2,3-d]-o-oxazinyl, 1 H-pyrazolo[4,3-d]-oxazolyl, 4H-imidazo[4,5-d]thiazolyl, pyrazino[2,3-d]pyridazinyl, imidazo[2,1-b]thiazolyl, imidazo[1,2-b][1,2,4]triazinyl, 7-benzo[b]thienyl, benzoxazolyl, benzimidazolyl, benzothiazolyl, benzoxapinyl, benzoxazinyl, 1H-pyrrolo[1,2-b][2]benzazapinyl, benzofuryl, benzothiophenyl, benzotriazolyl, pyrrolo[2,3-b]pyridinyl, pyrrolo[3,2-c]pyridinyl, pyrrolo[3,2-b]pyridinyl, imidazo[4,5-b]pyridinyl, imidazo[4,5-c]pyridinyl, pyrazolo[4,3-d]pyridinyl, pyrazolo[4,3-c]pyridinyl, pyrazolo[3,4-c]pyridinyl, pyrazofo[3,4-d]pyridinyl, pyrazolo[3,4-blpyridinyl, imidazo[1,2-a]pyridinyl, pyrazolo[1,5-a]pyridinyl, pyrrolo[1,2-b]pyridazinyl, imidazo[1,2-c]pyrimidinyl, pyrido[3,2-d]pyrimidinyl, pyrido[4,3-d]pyrimidinyl, pyrido[3,4-d]pyrimidinyl, pyrido[2,3-d]pyrimidinyl, pyrido[2,3-b]pyrazinyl, pyrido[3,4-b]pyrazinyl, pyrimido[5,4-d]pyrimidinyl, pyrazino[2,3-b]pyrazinyl, and pyrimido[4,5-d]pyrimidinyl.

At least one hydrogen atom in the heteroaryl group may be substituted with the same substituent as described above in connection with the alkyl group.

The term "heteroarylalkyl" is an alkyl substituted with heteroaryl group.

The term "heteroaryloxy" includes an -O-heteroaryl moiety, and at least one hydrogen atom of the heteroaryloxy may be substituted with the same substituent as described above in connection with the alkyl group.

As used herein, the term "cycloalkyl group" refers to non-aromatic monocyclic, bicyclic or tricyclic saturated or partially unsaturated hydrocarbon groups.

Exemplary monocyclic hydrocarbon groups include cyclopentyl, cyclopentenyl, cyclohexyl and cyclohexenyl.

Exemplary bicyclic hydrocarbon groups include bornyl, decahydronaphthyl, bicyclo[2.1.1]hexyl, bicyclo[2.2.1]heptyl, bicyclo[2.2.1]heptenyl, and bicyclo[2.2.2]octyl.

Exemplary tricyclic hydrocarbon groups include adamantyl.

At least one hydrogen atom in cycloalkyl group may be substituted with the same substituent as described above in connection with the alkyl group.

The term "heterocycloalkyl group" refers to a ring containing 5-10 ring atoms including a hetero atom such as N, S, P, or O, and an example of heterocyclic is pyridyl. At least one hydrogen atom in heterocycloalkyl group may be substituted with the same substituent as described above in connection with the alkyl group.

The term "sulfonyl" includes R"-$SO_2$-, wherein R" is hydrogen, alkyl, aryl, heteroaryl, aryl-alkyl, heteroaryl-alkyl, alkoxy, aryloxy, cycloalkyl, or heterocyclic.

The term "sulfamoyl" includes $H_2NS(O_2)$-, alkyl-$NHS(O_2)$-, $(alkyl)_2NS(O_2)$- aryl-$NHS(O_2)$- alkyl-(aryl)-$NS(O_2)$-, $(aryl)_2NS(O)_2$, heteroaryl-$NHS(O_2)$- (aryl-alkyl)-$NHS(O_2)$-, or (heteroaryl-alkyl)-$NHS(O_2)$-.

The term "amino" includes compounds wherein a nitrogen atom is covalently bonded to at least one carbon or heteroatom. The term "amino" includes, for example, -$NH_2$ and substituted moieties.

The term also includes "alkylamino" wherein nitrogen binds to at least one additional alkyl group. The term also includes "arylamino" and "diarylamino" groups wherein the nitrogen is bound to at least one or two independently selected aryl groups, respectively.

Hereinafter, embodiments of the present invention are described in detail with reference Examples. However the present invention is not limited to the Examples.

Preparation Example 1: Polymer represented by Formula 33a

50 mol% of acryloyloxy ethyl trimethylammonium chloride, 40 mol% of sodium acrylate, and 10 mol% of 2-hydroxyethyl acrylate were loaded into a reaction container equipment with an agitator and a condenser. In this regard, a total weight of the monomers was 20 g.

0.023 g of 2,2'- azobis(2-methylpropionamidine) dihydrochloride (AMPAC) as a reaction initiator and 70 g of pure water were added into the vessel containing the monomers.

$N_2$ bubbling was performed for 30 minutes to remove dissolved oxygen in solution, and then, the temperature of the reaction vessel was increased to a temperature of 60°C to perform polymerization.

Following 30 minutes of polymerization, 30 g of the deoxygenated water was added thereto, and the reaction was performed for 4 hours. Then, the temperature of the reaction vessel was lowered to room temperature to stop the polymerization reaction.

A reaction product in the reaction vessel in which the polymerization reaction was completed was slowly added to 10L of MeOH to prepare a precipitate.

To prepare pure polymer, the precipitate was filtered, and then, the precipitate was dissolved in water to prepare a 10 wt% solution thereof, and then, the result precipitated in 10L of MeOH, thereby preparing a polymer (poly(acryloyloxyethyl trimethylammonium chloride-co-acrylate-co-2-hydroxyethyl acrylate) (poly(AETAC-co-A-co-HEA)) represented by Formula 27a.

[Formula 27a]

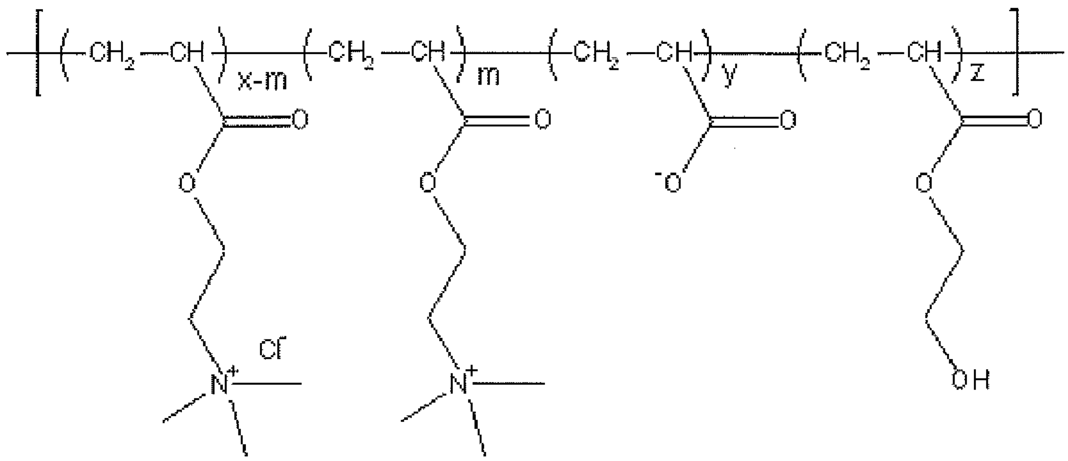

In Formula 27a, m is 0.4, x is 0.5, y is 0.4, and z is 0.1.

Preparation Example 2: Synthesis of polymer represented by Formula 26a

The polymerization reaction was performed in the same manner as in Preparation Example 1, except that as monomers, 30 mol% of diallyldimethylammonium chloride, 60 mol% of acrylic acid, and 10 mol% of vinyl acetate were used instead of 50 mol% of acryloyloxy ethyl trimethylammonium chloride, 40 mol% of sodium acrylate, and 10 mol% of 2-hydroxy ethyl acrylate.

NaOH was added in an equivalent 1.1 times greater than a total equivalent of acrylic acid and vinyl acetate into the reaction vessel in which the polymerization reaction was completed, and then, the temperature was increased to 90°C and hydrolysis was performed thereon for 2 hours.

Thereafter, a reaction product in the reaction vessel in which the polymerization reaction was completed was slowly added to 10L of MeOH to prepare a precipitate.

To prepare pure polymer, the precipitate was filtered, and then, the precipitate was dissolved in water to prepare a 10% solution thereof, and then, the result precipitated in 10L of MeOH, thereby preparing a polymer (poly(diallyldimethyl ammonium-co-sodium acrylate-co-vinyl alcohol)(poly(DADMA-co-SA-VA))) represented by Formula 26a below.

[Formula 26a]

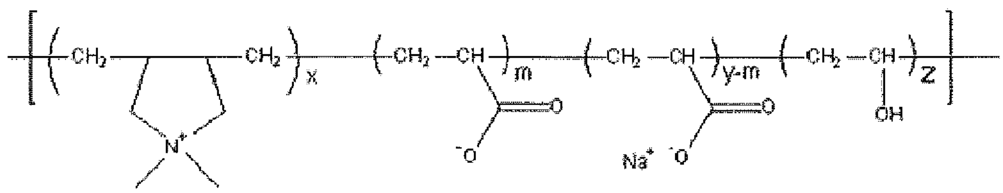

In Formula 26a, m is 0.3, x is 0.3, y is 0.6, and z is 0.1.

Preparation Example 3: Synthesis of polymer represented by Formula 40a

A polymer (poly(acryloyloxyethyl trimethylphosphonium-co-sodium acrylate-co-2-hydroxyethyl acrylate): poly(AETP-co-SA-co-HEA)) represented by Formula 40a was prepared in the same manner as in Preparation Example 1, except that as monomers, 30 mol% of acryloyloxyethyl trimethylphosphonium chloride, 60 mol% of sodium acrylate, and 10 mol% of 2-hydroxy ethyl acrylate were used instead of 50 mol% of acryloyloxy ethyl trimethylammonium chloride, 40 mol% of sodium acrylate, and 10 mol% of 2-hydroxy ethyl acrylate.

[Formula 29a]

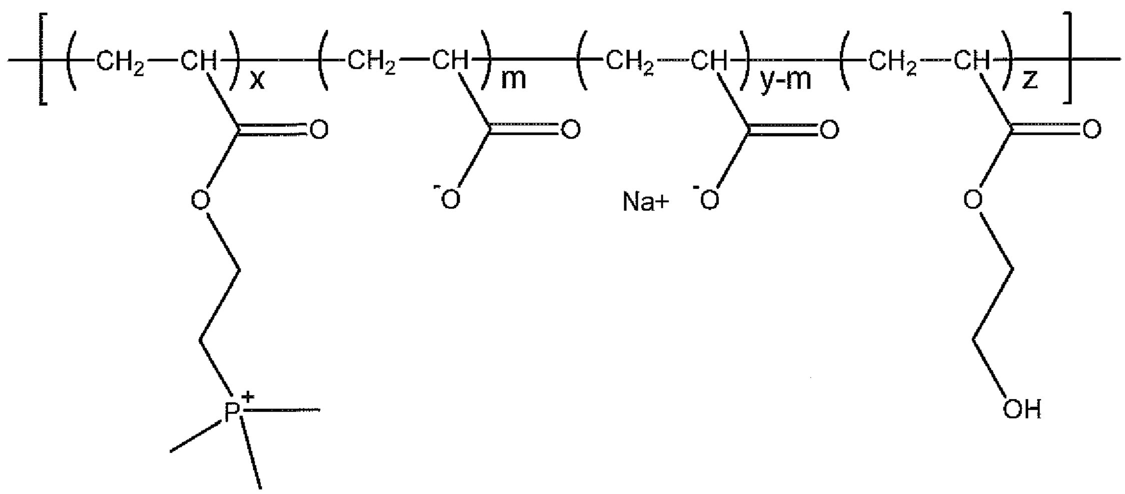

In Formula 29a, m is 0.3, x is 0.3, y is 0.6, and z is 0.1.

Preparation Example 4: Synthesis of polymer represented by Formula 22a

Poly(acryloyloxyethyl trimethylammonium-co-sodium ethyleneglycol acrylate phosphate) (poly(AETA-co-SA-co-SEGAP)) represented by Formula 15a below was prepared in the same manner as Preparation Example 1, except that as monomers, 70 mol% of acryloylethyl trimethylammonium chloride, 20 mol% of sodium acrylate, and 10 mol% of sodium ethyleneglycol acrylate phosphate were used instead of 50 mol% of acryloyloxy ethyl trimethylammonium chloride, 40 mol% of sodium acrylate, and 10 mol% of 2-hydroxy ethyl acrylate.

[Formula 22a]

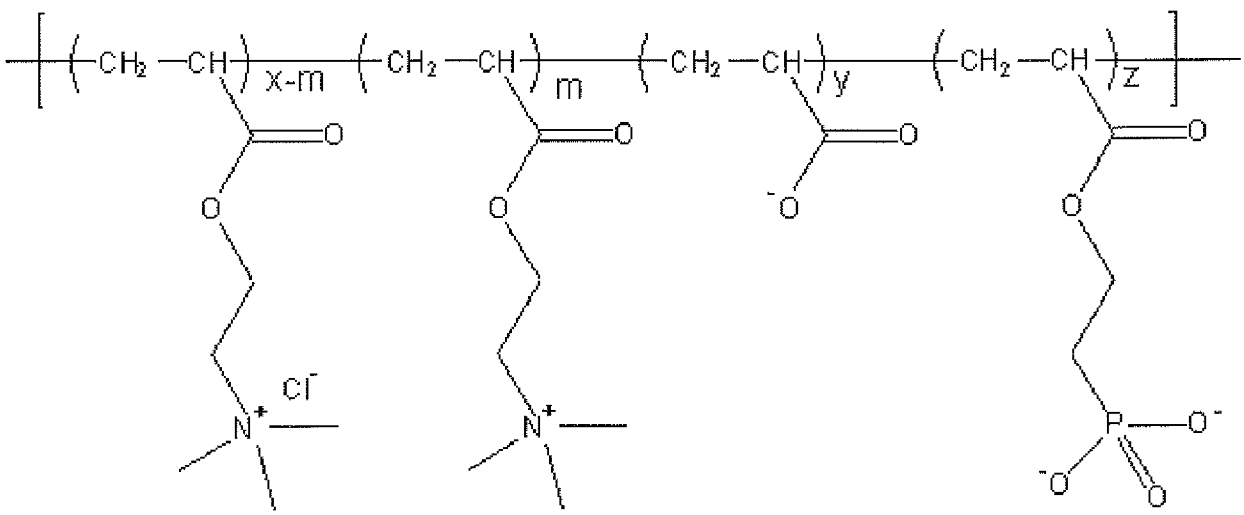

In Formula 22a, m is 0.4, x is 0.7, y is 0.2, and z is 0.1.

Preparation Example 5: Synthesis of polymer represented by Formula 16a

The polymerization reaction was performed in the same manner as in Preparation Example 1, except that as monomers, 30 mol% of diallyldimethylammonium chloride and 70 mol% of acrylamide were used instead of 50 mol% of acryloyloxy ethyl trimethylammonium chloride, 40 mol% of sodium acrylate, and 10 mol% of 2-hydroxy ethyl acrylate.

NaOH was added in an equivalent 1.1 times greater than an equivalent of acrylamide and vinyl acetate into the reaction vessel in which the polymerization reaction was completed, and then, the temperature was increased to 90°C and hydrolysis was performed thereon for 2 hours.

Thereafter, a reaction product in the reaction vessel in which the polymerization reaction was completed was

slowly added to 10L of MeOH to prepare a precipitate.

To prepare pure polymer, the precipitate was filtered, and then, the precipitate was dissolved in water to prepare a 10 wt% solution thereof, and then, the result precipitated in 10L of MeOH,
thereby preparing a polymer (poly(diallyldimethyl ammonium-co-sodium acrylate)(poly(DADMA-co-SA))} represented by Formula 19a below.

A viscosity of the polymer was 20,000 cP based on 5 wt% aqueous solution.

The polymer prepared according to Preparation Example 5 was subjected to nuclear magnetic resonance, and the obtained spectrum is shown in FIG. 2.

Referring to the nuclear magnetic resonance spectrum, a proton peak of a cationic moiety, that is, $N^+(CH_2)_2$ and $N^+(CH_3)_2$ is in a range of 3 to 3.5 ppm, and a proton peak of an anionic moiety, that is, (CH)COO- is in a range of 2 to 2.5 ppm.

[Formula 16a]

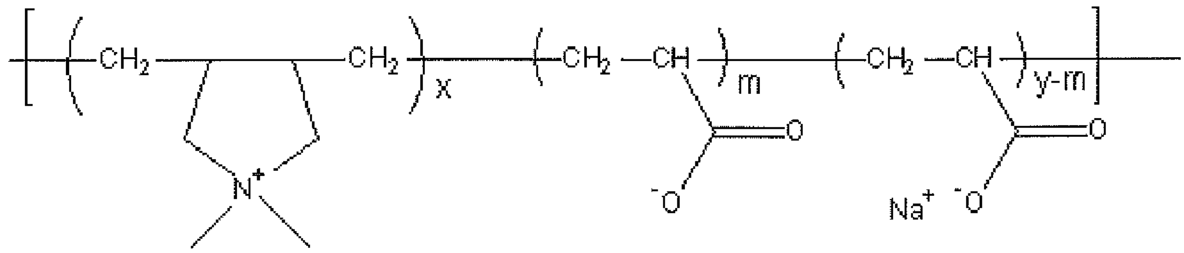

In Formula 16a, x is 0.3, y is 0.7, and m is 0.3.

Comparative Preparation Example 1: Synthesis of poly(diallyldimethylammonium chloride-co-acrylamide)

The polymerization reaction was performed in the same manner as in Preparation Example 1, except that as monomers, 30 mol% of diallyldimethylammonium chloride and 70 mol% of acrylamide were used instead of 50 mol% of acryloyloxy ethyl trimethylammonium chloride, 40 mol% of sodium acrylate, and 10 mol% of 2-hydroxy ethyl acrylate, so as to prepare poly(diallyldimethyl ammonium chloride-co-acrylamide)(poly(DADMAC-co-AAmd)) having a repeating unit including a cation.

Example 1: Preparation of binder composition A and negative active material layer composition 1

A binder composition having 2 w% solid content was obtained by dissolving the polymer of Preparation Example 1 in 98 g of water in a reaction vessel equipped with an agitator.

A negative active material layer composition 1 including 50 g of a 2 wt% solution of the binder composition, 3 g of SiOx (product of Shinetsu Company, and 10 um of average particle diameter), and 46 g of graphite was prepared in a slurry preparation vessel. During the preparing of the composition, a small amount of water was added thereto to adjust the viscosity thereof.

Examples 2-5: Preparation of binder compositions B-E and negative active material layer compositions 2-5

Binder compositions B to E and negative active material layer compositions 2 to 5 were prepared in the same manner as in Example 1, except that the polymers prepared according to Preparation Examples 2-5 were used instead of the polymer prepared according to Preparation Example 1.

Comparative Example 1: Preparation of negative active material layer composition

A negative active material layer composition was prepared in the same manner as in Example 1, except that sodium carboxylmethylcellulose and styrene butyrene rubber (Na-CMC/SBR) were used at a weight ratio of 1:1 instead of the polymer prepared according to Preparation Example 1.

Comparative Example 2: Preparation of negative active material layer composition

A negative active material layer composition was prepared in the same manner as in Example 1, except that

sodium carboxylmethylcellulose and styrene butyrene rubber (Na-CMC/SBR) were used at a weight ratio of 1:1 instead of poly(diallyldimethylammonium chloride-co-acrylamide) prepared according to Comparative Preparation Example 1.

Comparative Example 3: Preparation of negative active material layer composition

A negative active material layer composition was prepared in the same manner as in Example 1, except that poly(sodium acrylate) (average Mw=220,000g/mol) was used instead of the polymer prepared according to Preparation Example 1.

Comparative Example 4: Preparation of negative active material layer composition

A negative active material layer composition was prepared in the same manner as in Example 1, except that poly(diallyldimethylammonium chloride-co-acrylamide) prepared according to Comparative Preparation Example 1 and poly(sodium acrylate) (average Mw=220,000 g/mol) were mixed at a molar ratio of 1:1 and the mixture was used instead of the polymer prepared according to Preparation Example 1.

Manufacturing Example 1: Manufacturing electrode and battery

The negative active material layer composition prepared according to Example 1 was coated on a copper foil current collector having a thickness of 10 $\mu$m to form a coating layer having a thickness of 90 $\mu$m, and then, dried at the temperature of 110°C for 30 minutes to manufacture a negative electrode plate. Subsequently, the negative electrode plate was punched, roll-pressed, and welded, and then, dried in a vacuum oven at the temperature of 300°C for 2 hours, thereby completing the manufacturing of a negative electrode.

20 g of a mixed active material including $LiCoO_2$(LCO) and $LiNi_{1/3}Co_{1/3}Mn_{1/3}O_2$(NCM) at a mixed weight ratio of 1:1 and 1.1 g of a carbon conductive agent (Super-P; Timcal Ltd.) were homogeneously mixed, and then, a polyvinylidene fluoride (PVDF) binder solution was added thereto to prepare a positive active material slurry including the active material, the carbon conductive agent, and the binder at a weight ratio of 90:5:5. The positive active material slurry was coated on an aluminum foil having a thickness of 15 $\mu$m and dried to complete the manufacturing of a positive electrode plate. Subsequently, the negative electrode plate was punched, roll-pressed, and welded, and then, dried in a vacuum oven at the temperature of 130°C for 12 hours to manufacture a positive electrode.

A 2016R-type coin cell was manufactured by using the negative electrode and the positive electrode.

During the manufacturing of the cell, a polypropylene separator was used as a separator, and 1.0M LiPF6 dissolved in a mixed solvent including ethylenecarbonate (EC) and diethylcarbonate (DEC) at a volumetric ratio of 1:1 was used as an electrolyte.

Manufacturing Example 2: Manufacturing electrode and battery

A negative electrode, a positive electrode, and a lithium secondary battery were manufactured in the same manner as in Manufacturing Example 1, except that the binder composition B and the negative active material layer composition 2 prepared according to Example 2 were used.

Manufacturing Example 3: Manufacturing electrode and battery

A negative electrode, a positive electrode, and a lithium secondary battery were manufactured in the same manner as in Manufacturing Example 1, except that the binder composition C and the negative active material layer composition 3 prepared according to Example 3 were used.

Manufacturing Example 4: Manufacturing electrode and battery

A negative electrode, a positive electrode, and a lithium secondary battery were manufactured in the same manner as in Manufacturing Example 1, except that the binder composition D and the negative active material layer composition 4 prepared according to Example 4 were used.

Manufacturing Example 5: Manufacturing electrode and battery

A negative electrode, a positive electrode, and a lithium secondary battery were manufactured in the same manner as in Manufacturing Example 1, except that the binder composition E and the negative active material layer composition 5 prepared according to Example 5 were used.

Comparative Manufacturing Example 1: Manufacturing electrode and battery

A negative electrode, a positive electrode, and a lithium secondary battery were manufactured in the same manner as in Manufacturing Example 1, except that the negative active material layer composition of Comparative Example 1 was used instead of the negative active material layer composition of Example 1.

Comparative Manufacturing Examples 2-4: Manufacturing electrodes and batteries

The inventors of the present application tried to manufacture a negative electrode, a positive electrode, and a lithium secondary battery in the same manner as in Manufacturing Example 1, except that the negative active material layer compositions of Comparative Examples 2-4 were used instead of the negative active material layer composition of Example 1.

Regarding Comparative Manufacturing Examples 2-4, the negative active material layer compositions manufactured according to Comparative Examples 2-4 had poor storage stability, and thus, when time elapsed, the active materials sinked, or due to a decrease in dispersibility in manufacturing the negative active material layer composition, the active materials aggregated, and thus, the negative active material layer compositions were not able to coated on a current collector. Accordingly, electrodes were not able to be manufactured.

Comparative Manufacturing Example 5: Manufacturing electrode and battery

A negative electrode, a positive electrode, and a lithium secondary battery were manufactured in the same manner as in Manufacturing Example 1, except that the negative active material layer composition of Comparative Example 5 was used instead of the negative active material layer composition of Example 1.

Evaluation Example 1: Analysis of viscosity of polymer

The viscosity of the polymer prepared according to Preparation Examples 1-5 was measured, and results thereof are shown in Table 1 below.

[Table 1]

| | Viscosity (cP) |
|---|---|
| Preparation Example 1: | 26,000 |
| Preparation Example 2: | 52,000 |
| Preparation Example 3: | 32,000 |
| Preparation Example 4: | 48,000 |
| Preparation Example 5: | 40,000 |

Evaluation Example 2: Charging and discharging evaluation

The coin cells manufactured according to Manufacturing Examples 1-5 and Comparative Manufacturing Example 1 were charged with 0.05C rate of a constant current at the temperature of 25 °C until a voltage reacted 4.35 V (vs. Li). Subsequently, discharging was performed with 0.05C rate of a constant current until a voltage reached 2.75 V(vs. Li) (formation process).

The lithium secondary batteries that had underwent the formation process were charged with a 0.5C rate of constant current at the temperature of 25°C until a voltage reached 4.35V (vs. Li). Subsequently, discharging was performed with a 1.0 C rate of constant current until the voltage reached 2.75V (vs. Li). This charging and discharging cycle was repeatedly performed 50 times.

The charging and discharging test results are partially shown in Table 2 below. A charging and discharging efficiency is represented by Equation 1, an initial formation efficiency is represented by Equation 2, and a capacity retention ratio is represented by Equation 3.

<Equation 1>

Charging and discharging efficiency [%]=[discharge capacitance/charging capacitance]×100

<Equation 2>

Initial formation efficiency [%] = [%]=[discharging capacity in 1st cycle/ charging capacity in 1st cycle] ×100

<Equation 3>

Capacity retention ratio [%] = [%]=[discharging capacity in 50th cycle/ charging capacity in 1st cycle] ×100

[Table 2]

| Manufacturing Example 1: | Discharging capacity in 1st cycle (mAh/cc) | Initial formation efficiency (%) | Capacity retention ratio (%) @ 50 cycles |
|---|---|---|---|
| Manufacturing Example 1: | 1720 | 89 | 95 |
| Manufacturing Example 2: | 1722 | 88 | 96 |
| Manufacturing Example 3: | 1721 | 89 | 95 |
| Manufacturing Example 4: | 1719 | 88 | 95 |
| Manufacturing Example 5: | 1723 | 90 | 94 |
| Comparative Manufacturing Example 1 | 1714 | 88 | 88 |

Referring to Table 2, the lithium secondary batteries of Manufacturing Examples 1-5 have similar initial discharging capacity and initial formation efficiency to those of the lithium secondary battery of Comparative Manufacturing Example 1. However, in terms of a discharging capacitance retention ratio, the lithium secondary batteries of Manufacturing Examples 1-5 showed improved results of the lithium secondary battery of Comparative Manufacturing Example 1.

The weight average molecular weights of the polymers produced is displayed in Table 3, below:

[Table 3]

| | weight average molecular weight (g/mol) |
|---|---|
| Preparation Example 1 | 420,000 |
| Preparation Example 2 | 180,000 |
| Preparation Example 3 | 680,000 |
| Preparation Example 4 | 320,000 |
| Preparation Example 5 | 200,000 |

< Explanation of Reference numerals designating the Major Elements of the Drawings >

| | | | |
|---|---|---|---|
| 1: | Lithium secondary battery | 2: | Negative electrode |
| 3: | Positive electrode | 4: | Separator |
| 5: | Battery case | 6: | Cap assembly |

## Claims

1. A polymer comprising a first repeating unit having a cationic group and a second repeating unit having an anionic group, wherein the cationic group and the anionic group of the polymer form an intermolecular ionic bond with an anionic group and a cationic group of another polymer, respectively.

2. The Polymer of Claim 1, wherein the first repeating unit is represented by Formula 1 or Formula 3:

[Formula 1]

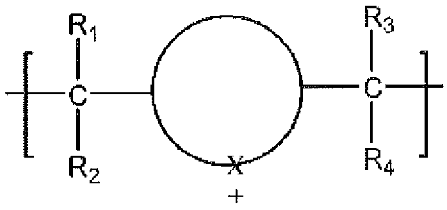

or

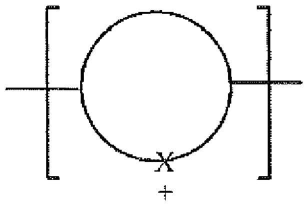

or.
In Formula 1,

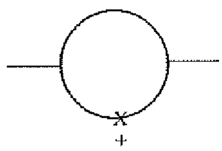

represents a C2-C30 3-membered to 31-membered ring including one or more hetero atom,
X is -N(R')(R''), -S(R'), or -P (R')(R''),
$R_1$ to $R_4$ are each independently hydrogen, a unsubstituted or substituted C1-C30 alkyl group, a unsubstituted or substituted C1-C30 alkoxy group, a unsubstituted or substituted C6-C30 aryl group, unsubstituted or substituted C7-C30 arylalkyl, a unsubstituted or substituted C6-C30 aryloxy group, a unsubstituted or substituted C3-C30 heteroaryl group, a unsubstituted or substituted C3-C30 heteroaryloxy group, a unsubstituted or substituted C4-C30 cycloalkyl group, or a unsubstituted or substituted C3-C30 heterocycloalkyl group,

[Formula 3]

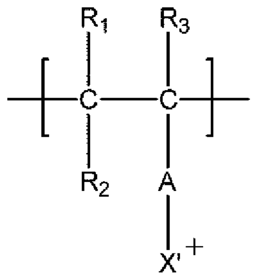

In Formula 3, X' is -N(R')(R'')(R'''), -S(R')(R''), -OP(R')(R'')(R'''), or -P(R')(R'') (R'''),
$R_1$ to $R_3$ are each independently hydrogen, a unsubstituted or substituted C1-C30 alkyl group, a unsubstituted or substituted C1-C30 alkoxy group, a unsubstituted or substituted C6-C30 aryl group, unsubstituted or substituted C7-C30 arylalkyl ,a unsubstituted or substituted C6-C30 aryloxy group, a unsubstituted or substituted C3-C30 heteroaryl group, a unsubstituted or substituted C3-C30 heteroaryloxy group, a unsubstituted or substituted C4-C30 cycloalkyl group, or a unsubstituted or substituted C3-C30 heterocycloalkyl group, and
A represents a simple chemical bond, or any one selected from C1-C30 alkyl, a C6-C30 aryl, a C7-C30 arylalkyl, a C1-C30 heteroaryl, a C4-C30 cycloalkyl group, and C1-C30 heterocycloalkyl group, and these groups may include

at least one group selected from carbonyl group (-CO-), oxy group (-O-), a carbonyloxy group (-COO- or -OCO-), iminocarbonyl group (-NH-CO- or -CO-NH-), iminosulfonyl group (-NH-$SO_2$- or -$SO_2$-NH-), sulfanyl group (-S-), sulfinyl group (-S(O)-), sulfonyl group (-$SO_2$-), sulfonyloxy group (-$SO_2$-O- or -O-$SO_2$-), imino group (-NH-), methylene group repeating unit (-(CH2)n-, n=1 to 20), methyleneoxide repeating unit (-$(CH_2O)_n$-, n=1 to 20), ethyleneoxide repeating unit (-$(CH_2CH_2O)_n$-, n=1 to 20), and propyleneoxide repeating unit (-$(CH(CH_3)CH_2O)_n$-, n=1 to 20), and R', R" and R"' are each independently a C1-C30 alkyl group, a C1-C30 alkoxy group, a C6-C30 aryl group, a C6-C30 aryloxy group, a C3-C30 heteroaryl group, a C3-C30 heteroaryloxy group, a C4-C30 cycloalkyl group, or a C3-C30 hetero cycloalkyl group.

3. The polymer of Claim 1 or Claim 2, wherein the second repeating unit is represented by Formula 4:

[Formula 4]

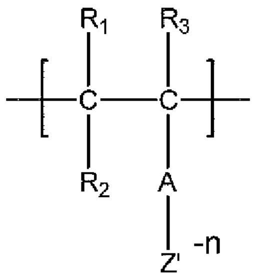

In Formula 4, $R_1$ to $R_3$ and A are the same as defined in Formula 3 above, Z' is a carboxylate group (-C(=O)O), a sulfate group (-OS(=O)$_2$O), a sulfite group (-OS(=O)O), a sulfinate group (-S(=O)O), a phosphate group (-OP(=O)$(O)_2$), or phosphonate group (-P(=O)$(O)_2$), and n is 1 or 2.

4. The polymer of any of Claim 1 to Claim 3, further comprising a third repeating unit represented by Formula 23

[Formula 23]

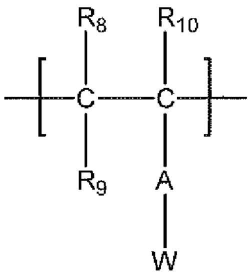

Iin Formula 23, W is a carboxyl group, a hydroxyl group, an amine group, an amide group, an imide group, a nitrile group, a sulfone group, a halogen group, a silane group, or Si(R')(R")(R"'), R', R", and R"' may each be independently C1-C20 alkyl group, C1-C20 alkoxy group or a halogen atom,
A is the same as defined in Formula 3 above, and
$R_8$ to $R_{10}$ are each independently hydrogen, a unsubstituted or substituted C1-C30 alkyl group, a unsubstituted or substituted C1-C30 alkoxy group, a unsubstituted or substituted C6-C30 aryl group, unsubstituted or substituted C7-C30 arylalkyl, a unsubstituted or substituted C6-C30 aryloxy group, a unsubstituted or substituted C3-C30 heteroaryl group, a unsubstituted or substituted C3-C30 heteroaryloxy group, a unsubstituted or substituted C4-C30 cycloalkyl group, or a unsubstituted or substituted C3-C30 heterocycloalkyl group.

5. The polymer of any of claims to 1 to 4, wherein the polymer has a molar fraction of the cationic group greater than a molar fraction of the anionic group; the polymer has a molar fraction of the anionic group greater than a molar fraction of the cationic group; or the polymer has equal molar fractions of the anionic and cationic groups.

6. The polymer of claim 5, wherein the anionic group has the larger molar fraction, and the cationic group molar faction is x, the anionic group molar faction is y and the anionic fraction with a counter ion is y-m, and
when n of $Z'^{-n}$ is 1, molar fractions thereof have the following ranges: $x < y$, $m = x$, $0.05 \leq x < 0.5$, $0.5 < y \leq 0.95$,

and $x + y = 1$, and when n of $Z'^{-n}$ is 2, molar fractions thereof have the following ranges: $x < 2y$, $m = 0.5x$, $0.05 < x \leq 0.5$, $0.25 < y \leq 0.475$, and $0.525 \leq x + y < 0.75$; or
the anionic group has the larger molar fraction, and the cationic group molar faction is x, the anionic group molar faction is y, the anionic fraction with a counter ion is y-m and the neutral fraction z, and
when n of $Z'^{-n}$ is 1, molar fractions thereof have the following ranges: $x < y$, $m = x$, $0.05 \leq x < 0.50$, $0.25 < y \leq 0.94$, $0.01 \leq z \leq 0.5$, and $x + y + z = 1$, and
when n of $Z'^{-n}$ is 2 molar fractions thereof have the following ranges: $x < 2y$, $m = 0.5x$, $0.05 \leq x < 0.50$, $0.125 < y \leq 0.47$, and $0.01 \leq z \leq 0.5$.

**7.** The polymer of claim 5, wherein the cationic group has the larger molar fraction, and the cationic group molar faction is x, the anionic group molar faction is y and the cationic fraction with a counter ion is x-m, and
when n of $Z'^{-n}$ is 1, molar fractions thereof have the following ranges: $x > y$, $m = y$, $0.5 < x \leq 0.95$, $0.05 \leq y < 0.5$, and $x + y = 1$, and
when n of $Z'^{-n}$ is 2, $x > y$, molar fractions thereof have the following ranges: $x > y$, $m = 2y$, $0.5 < x \leq 0.95$, $0.025 \leq y < 0.25$, and $0.75 < x + y \leq 0.975$;
the cationic group has the larger molar fraction, and the cationic group molar faction is x, the cationic fraction with a counter ion is x-m, the anionic group molar faction is y, and the neutral fraction is z, and
when n of $Z'^{-n}$ is 1, molar fractions thereof have the following ranges: $x > y$, $m = y$, $0.25 < x \leq 0.94$, $0.05 \leq y < 0.50$, $0.01 \leq z \leq 0.5$, and $x + y + z = 1$, and
when n of $Z'^{-n}$ is 2, $x > y$, $m = 2y$, $0.25 < x \leq 0.94$, $0.025 \leq y < 0.25$, and $0.01 \leq z \leq 0.5$; or
the cationic group has the larger molar fraction, and the cationic group molar faction is x, the anionic group molar faction is y and z and the cationic fraction with a counter ion is x-m, and $0.5 < x \leq 0.95$,
when n of $Z'^{-n}$ (y) is 1, n of $Z'^{-n}$ (z) is 1 the molar fractions thereof have the following ranges: $m = y + z$, and $0.05 \leq y + z \leq 0.5$,
when n of $Z'^{-n}$ (y) is 1, n of $Z'^{-n}$ (z) is 2 the molar fractions thereof have the following ranges: $m = y + 2z$, and $0.05 \leq y + 2z \leq 0.5$,
when n of $Z'^{-n}$ (y) is 2, n of $Z'^{-n}$ (z) is 1 the molar fractions thereof have the following ranges: $m = 2y + z$, and $0.05 \leq 2y + z \leq 0.5$, and
when n of $Z'^{-n}$ (y) is 2, n of $Z'^{-n}$ (z) is 2 the molar fractions thereof have the following ranges: $m = 2y + 2z$, and $0.05 \leq 2y + 2z \leq 0.5$.

**8.** The polymer of claim 5, wherein polymer has equal molar fractions of the anionic and cationic groups, and the cationic group molar faction is x, the anionic group molar faction is y, and when n of $Z'^{-n}$ is 1, $x = 0.5$ and $y = 0.5$, and when n of $Z'^{-n}$ is 2, $x = 0.5$ and $y = 0.25$; or
the polymer has equal molar fractions of the anionic and cationic groups, and the cationic group molar faction is x, the anionic group molar faction is y and the neutral fraction z, and
when n of $Z'^{-n}$ is 1, molar fractions thereof have the following ranges: $x = y$, $0.25 < x \leq 0.495$, $0.25 \leq y < 0.495$, $0.01 \leq z \leq 0.5$, and $x + y + z = 1$, and
when n of $Z'^{-n}$ is 2, $0.25 < x \leq 0.495$, $0.125 \leq y < 0.2475$ and $0.01 \leq z \leq 0.5$.

**9.** The polymer of any of claims 2 to 8, wherein in Formula 3 A and X together form a group selected from a C1-C30 alkyl including a carbonyloxy group (-COO-) group with a terminal -N(R')(R")(R"') and/or -P(R')(R") (R"') group.

**10.** The polymer of any of claims 2 to 8, wherein in Formula 1 A is a C2-C10 heterocyclic ring and X is -N(R')(R"), optionally a C3-C6 heterocyclic ring.

**11.** The polymer of any of claims 4 to 10, wherein in Formula 23 A and W together form a group selected from a hydroxyl group a C1-C30 alkyl including a carbonyloxy group (-COO-) group with a terminal hydroxyl group.

**12.** The polymer of any of Claims 1 to 11, wherein the polymer is a polymer represented by Formula 22, a polymer represented by Formula 16, a polymer represented by Formula 27, or a polymer represented by Formula 26, a polymer represented by Formula 29,

[Formula 22]

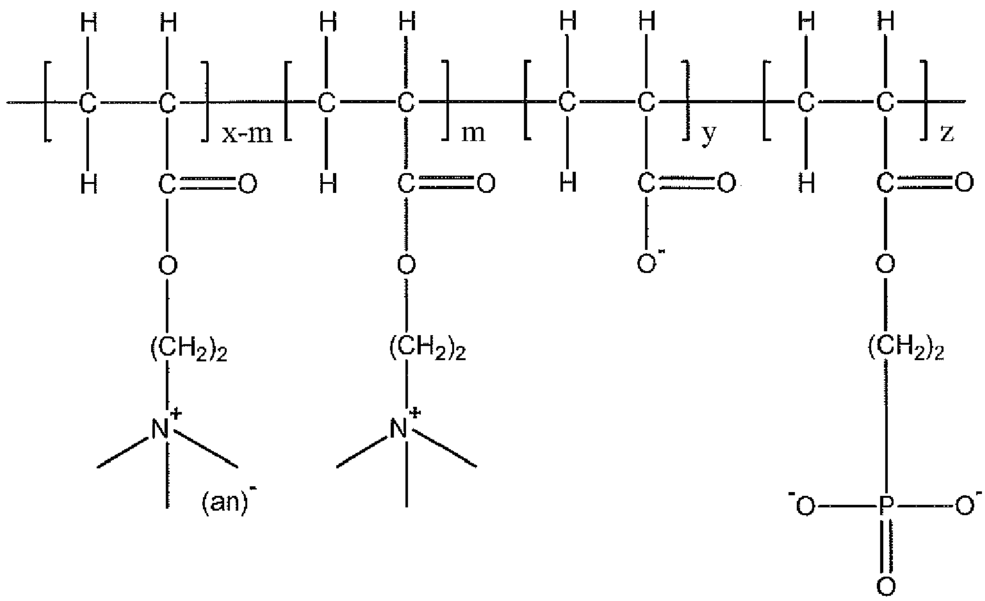

in Formula 22, $x < y$ , $m = y + 2z$, $0.5 < x \leq 0.95$, $0.05 \leq y + 2z < 0.5$, and $x + y + 2z = 1$

[Formula 16]

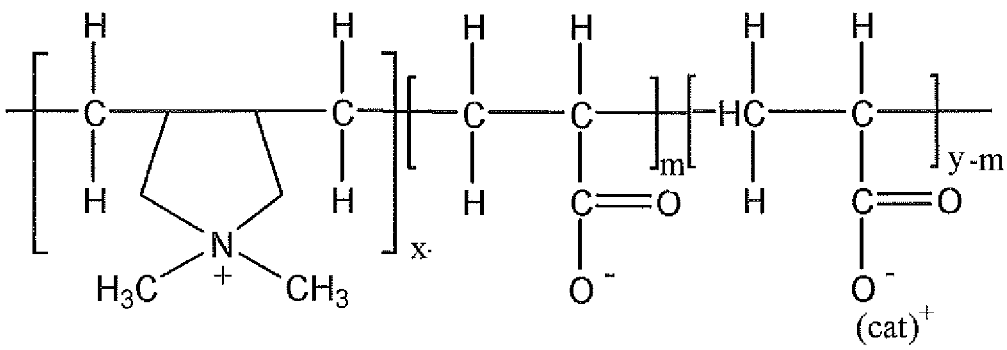

in Formula 16, $x < y$, $m = x$, $0.05 < x \leq 0.5$, $0.5 \leq y < 0.95$, and $x + y = 1$,

[Formula 27]

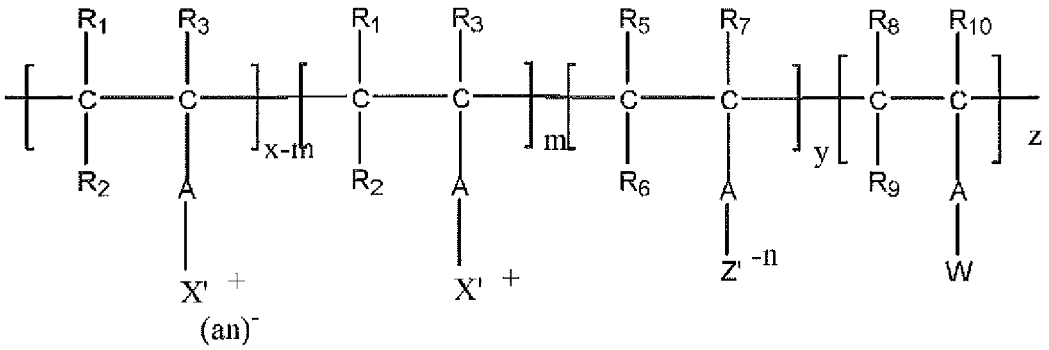

in Formula 27, n of $Z'^{-n}$ is 1, $x > y$, $m = y$, $0.25 < x \leq 0.94$, $0.05 \leq y < 0.5$, $0.01 \leq z \leq 0.5$, and $x + y + z = 1$,

[Formula 26]

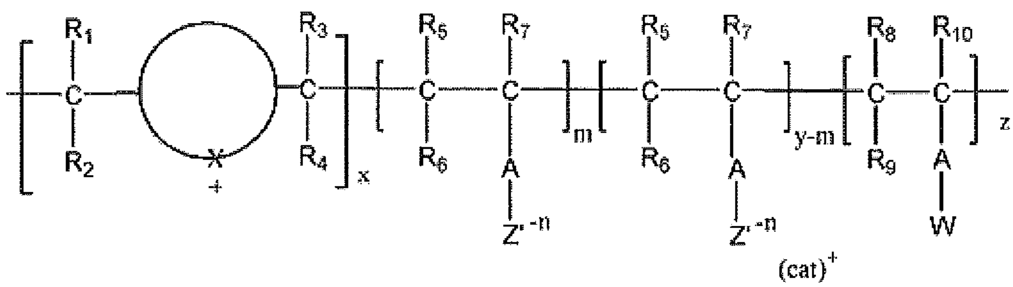

or

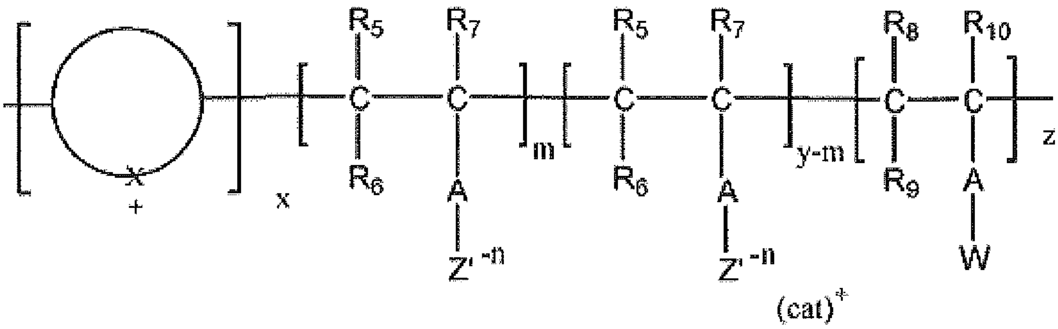

in Formula 26, n of $Z'^{-n}$ is 1, $x < y$ , $m = x$, $0.05 \leq x < 0.5$, $0.25 < y \leq 0.94$, $0.01 \leq z \leq 0.5$, and $x + y + z = 1$,

[Formula 29]

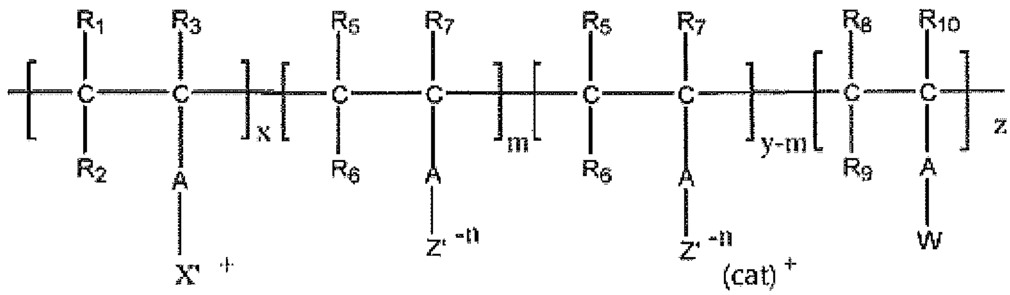

in Formula 29, n of $Z'^{-n}$ is 1, x < y, m = x, 0.05 ≤ x < 0.5, 0.25 < y ≤ 0.94, 0.01 ≤ z ≤ 0.5, and x + y+ z= 1.

**13.** An electrode binder composition for lithium secondary battery comprising the polymer according to any one of Claims 1 to 12 and an aqueous solvent.

**14.** The Electrode binder composition of Claim 13, wherein the amount of the polymer is between 0.2 and 100 weight %, optionally 0.2 to 25 weight %, optionally 1 to 20 weight%, based on the total weight of the electrode binder composition and, optionally, the electrode binder composition contains a solvent that is optionally water.

**15.** A lithium secondary battery comprising the electrode binder composition of Claim 13 or Claim 14.

FIG. 1

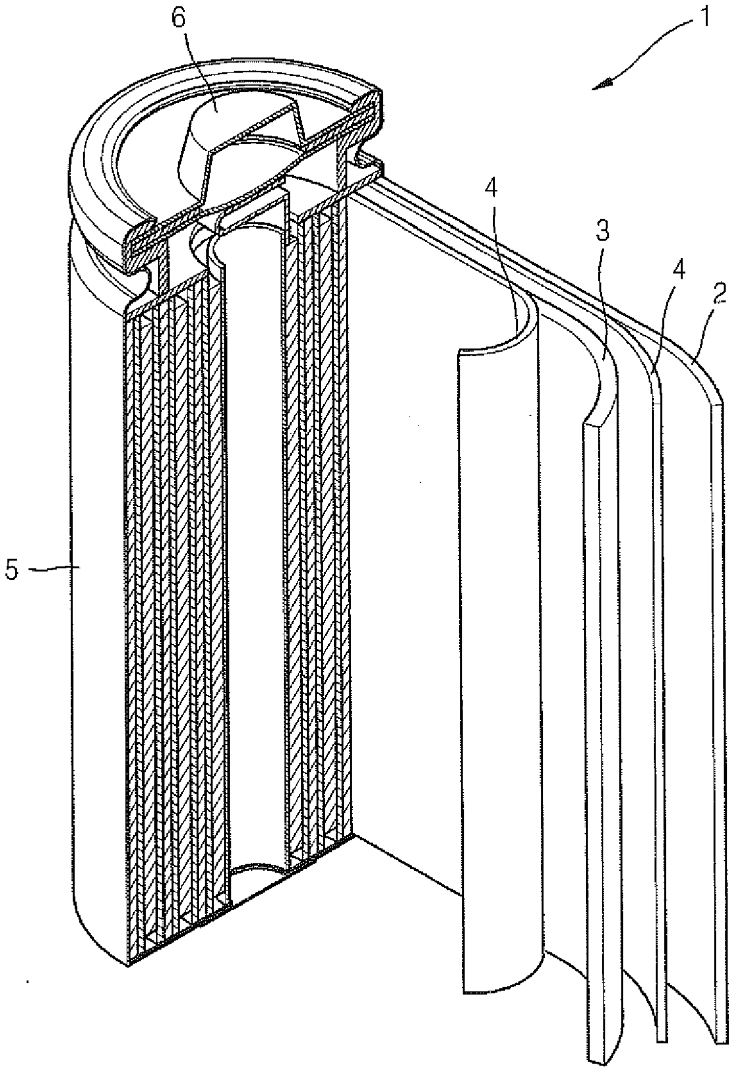

FIG. 2

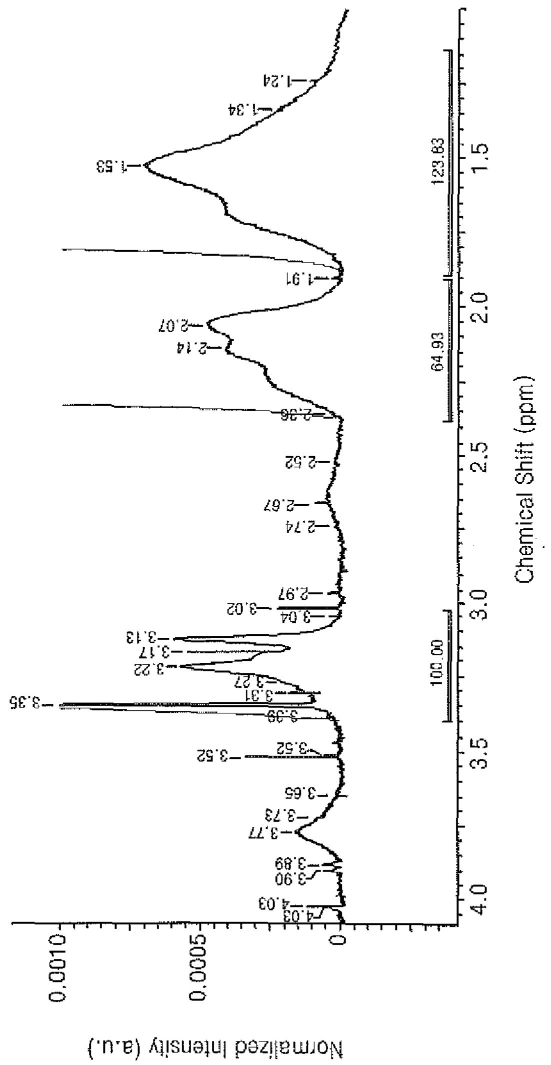
Normalized Intensity (a.u.)
0.0010
0.0005
0
Chemical Shift (ppm)
4.0
3.5
3.0
2.5
2.0
1.5
100.00
64.93
123.83
3.35
3.22
3.17
3.13
3.02
1.91
2.07
2.14
1.53
1.34
1.24

Europäisches Patentamt
European Patent Office
Office européen des brevets

# EUROPEAN SEARCH REPORT

Application Number
EP 13 18 8351

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 98/47937 A1 (IPPOLITI JOSEPH THOMAS [US]) 29 October 1998 (1998-10-29)<br>* claims 1,5; figure 5 *<br>* page 12, line 22 - line 25 *<br>----- | 1-15 | INV.<br>C08F220/06<br>C08F220/34<br>C08F226/04 |
| X | US 2007/110699 A1 (SHERRY ALAN E [US]) 17 May 2007 (2007-05-17)<br>* paragraph [0114] *<br>----- | 1-12 | |

TECHNICAL FIELDS SEARCHED (IPC)

C08F

The present search report has been drawn up for all claims

1

| Place of search | Date of completion of the search | Examiner |
|---|---|---|
| The Hague | 17 January 2014 | Friederich, Pierre |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT ON EUROPEAN PATENT APPLICATION NO. EP 13 18 8351

This annex lists the patent family members relating to the patent documents cited in the above-mentioned European search report.
The members are as contained in the European Patent Office EDP file on
The European Patent Office is in no way liable for these particulars which are merely given for the purpose of information.

17-01-2014

| Patent document cited in search report | Publication date | Patent family member(s) | Publication date |
|---|---|---|---|
| WO 9847937 A1 | 29-10-1998 | AU 7147598 A | 13-11-1998 |
| | | WO 9847937 A1 | 29-10-1998 |
| US 2007110699 A1 | 17-05-2007 | CA 2629687 A1 | 24-05-2007 |
| | | CN 101321788 A | 10-12-2008 |
| | | CN 102604752 A | 25-07-2012 |
| | | EP 1948702 A2 | 30-07-2008 |
| | | EP 2287214 A1 | 23-02-2011 |
| | | JP 4903216 B2 | 28-03-2012 |
| | | JP 2009515636 A | 16-04-2009 |
| | | JP 2010235958 A | 21-10-2010 |
| | | US 2007110699 A1 | 17-05-2007 |
| | | US 2011197382 A1 | 18-08-2011 |
| | | WO 2007057865 A2 | 24-05-2007 |

EPO FORM P0459

For more details about this annex : see Official Journal of the European Patent Office, No. 12/82